# EUROPEAN PATENT SPECIFICATION

(11) **EP 3 429 217 B1**
(45) Date of publication and mention of the grant of the patent: **01.09.2021**
(21) Application number: 17762947.4
(22) Date of filing: 24.02.2017
(51) Int. Cl.: H04N 21/488, H04N 21/236, H04N 21/4402, H04N 5/92

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN, UND PROGRAMM
DISPOSITIF DE TRAITEMENT D'INFORMATIONS, PROCÉDÉ DE TRAITEMENT D'INFORMATIONS, ET PROGRAMME

(30) Priority: 10.03.2016 JP 2016046635; 29.07.2016 JP 2016149335
(43) Date of publication of application: 16.01.2019
(73) Proprietor: Sony Group Corporation, Tokyo 108-0075 (JP)
(72) Inventor: UCHIMURA, Kouichi, Tokyo 108-0075 (JP)
(74) Representative: Witte, Weller & Partner Patentanwälte mbB
(86) International application number: PCT/JP2017/006989
(87) International publication number: WO 2017/154607

(56) References cited:
- WO-A1-2015/126117
- WO-A1-2015/174207
- WO-A1-2016/006970
- JP-A- 2004 254 281
- US-A1- 2006 245 727
- US-A1- 2011 181 773
- ARIB STD-B62 Version 1.2-E1 (Fascicle 1) (ENGLISH TRANSLATION, vol. 60, no. 71 3 July 2015 (2015-07-03), pages 5-8, XP009508690, Retrieved from the Internet: URL:http://www.arib.or.jp/english/html/ove rview/doc /6-STD-B62v1_2-1p2-E1.pdf [retrieved on 2017-03-30]

## Description

### TECHNICAL FIELD

The present technology relates to an information processing apparatus, an information processing method, and a program, and particularly to an information processing apparatus for enabling subtitle data described in XML to be multiplexed on contents in other format reproducible even after format conversion, an information processing method, and a program.

### BACKGROUND ART

In recent years, subtitles using timed text mark-up language (TTML) have been employed in many content distributions. Subtitles using TTML are employed also for the 4K/8K broadcasting standard in Japan.

TTML is a mark-up language based on extensible markup language (XML) defined by World Wide Web Consortium (W3C). Display timing, display position, display timing, and the like of a subtitle can be designated by TTML.

Timed Text is displayed in synchronization with other media such as video, and is mainly used to present Caption and Subtitle. Caption is auxiliary information for hearing-impaired viewers, and Subtitle is auxiliary information for viewers who cannot understand the language.

Patent Document 2, according to its abstract, relates to an apparatus and a method for transceiving a broadcast signal including a subtitling service. In particular, a method is provided for transmitting a broadcast signal, comprising the steps of: encoding video data to generate a video stream; generating a broadcast signal including the generated video stream and a subtitle stream; and transmitting the generated broadcast signal.

Patent Document 3, according to its abstract, relates to a subtitle generating apparatus destined for use in a digital movie screening system, the subtitle generating apparatus, which includes a storage unit having a movie subtitle file stored therein, a controller to generate an internal file on the basis of the subtitle file, and a subtitle processor to decode the internal file for generating a subtitle and combine the subtitle and a movie picture with each other,; the subtitle file consisting of a main file in which there are described information identifying a file of text data representing characters to be displayed as a subtitle of a movie and a file of image data representing the content of an image displayed as the movie subtitle along with control data for displaying the subtitle, one or more font files including font data on the text data, and one or more image files including the image data, the internal file being an integration of the main, font and image files, made by combining the described content of the main file with the substantive data of the font and image files, and the controller generating the internal file from the subtitle file prior to displaying the movie.

### CITATION LIST

### PATENT DOCUMENT

Patent Document 1: Japanese Patent Application Laid-Open No. 2015-216524
Patent Document 2: WO 2015/126117 A1
Patent Document 3: US 2006/0245727 A1

### SUMMARY OF THE INVENTION

### PROBLEMS TO BE SOLVED BY THE INVENTION

MPEG media transport (MMT) is employed as a content transmission system. MMT enables contents to be transmitted not only via broadcasting but also via various transmission paths such as Internet.

Incidentally, in a case where contents in MMT are received and recorded, it is desired that the contents are recorded in the MPEG-2 TS format because of easy edition and the like. In MMT, for example, video data is divided into units called MMT fragment unit (MFU) in units of GOP, and a MMTP packet including the MFUs in the payload is configured. The addresses of the data stored in the payload are expressed in bytes in the header of the MMTP packet, and if part of the scene is edited to be deleted, all the addresses need to be rewritten.

Contents in MMT are configured such that subtitle data in TTML is multiplexed together with other data such as video, but a standard for multiplexing subtitle data in TTML in the MPEG-2 TS format is not present.

The present technology has been made in terms of such a situation, and is directed to enabling subtitle data described in XML to be multiplexed on contents in other format reproducible even after format conversion.

### SOLUTIONS TO PROBLEMS

Therefore, there are provided information processing apparatuses, methods and programs according to the appended claims.

### EFFECTS OF THE INVENTION

According to the present technology, it is possible to enable subtitle data described in XML to be multiplexed on contents in other format reproducible even after format conversion.

Note that the effects described here are not necessarily restrictive and any effect described in the present disclosure may be obtained.

### BRIEF DESCRIPTION OF DRAWINGS

Fig. 1 is a diagram illustrating an exemplary configuration of an information processing system according to one embodiment of the present technology.
Fig. 2 is a diagram illustrating exemplary conversion of contents.
Fig. 3 is a diagram illustrating a configuration of XML subtitle data.
Fig. 4 is a diagram illustrating an exemplary description of an XML document of image subtitle.
Fig. 5 is a diagram illustrating an exemplary description of an XML document of text subtitle.
Fig. 6 is a diagram illustrating a specific example of an XML document.
Fig. 7 is a diagram illustrating an exemplary subtitle displayed according to the XML document of Fig. 6.
Fig. 8 is a diagram for explaining a flow of decoding XML subtitle data.
Fig. 9 is a diagram for explaining the flow of decoding the XML subtitle data.
Fig. 10 is a diagram for explaining the flow of decoding the XML subtitle data.
Fig. 11 is a diagram for explaining the flow of decoding the XML subtitle data.
Fig. 12 is a diagram illustrating an exemplary configuration of a PES packet.
Fig. 13 is a diagram illustrating an exemplary syntax of the TTML header of Fig. 12.
Fig. 14 is a diagram illustrating the meanings of root_container_size.
Fig. 15 is a diagram illustrating an effect.
Fig. 16 is a diagram illustrating exemplary configurations of PES packets.
Fig. 17 is a diagram illustrating an exemplary syntax of the TTML header of Fig. 16.
Fig. 18 is a diagram illustrating an effect.
Fig. 19 is a diagram illustrating exemplary TS packetization.
Fig. 20 is a diagram illustrating exemplary processings of TS packets in a reproducing apparatus.
Fig. 21 is a block diagram illustrating an exemplary configuration of a recording apparatus.
Fig. 22 is a block diagram illustrating an exemplary functional configuration of the recording apparatus.
Fig. 23 is a block diagram illustrating an exemplary configuration of the reproducing apparatus.
Fig. 24 is a block diagram illustrating an exemplary configuration of a subtitle generation unit.
Fig. 25 is a block diagram illustrating an exemplary functional configuration of the reproducing apparatus.
Fig. 26 is a flowchart for explaining the processings of the recording apparatus.
Fig. 27 is a flowchart for explaining the processings of the reproducing apparatus.
Fig. 28 is a flowchart for explaining a subtitle screen generation processing performed in step S16 of Fig. 27.
Fig. 29 is a flowchart subsequent to Fig. 28 for explaining the subtitle screen generation processing performed in step S16 of Fig. 27.
Fig. 30 is a diagram illustrating an exemplary configuration of a PES packet including text subtitle.
Fig. 31 is a diagram illustrating an exemplary TS packet including a TTML header.
Fig. 32 is a diagram illustrating exemplary packetization of XML subtitle data.
Fig. 33 is a diagram illustrating an exemplary arrangement of TS packets.
Fig. 34 is a diagram illustrating other exemplary packetization of XML subtitle data.
Fig. 35 is a diagram illustrating a first example of association between a TTML header and a language.
Fig. 36 is a diagram illustrating a second example of association between a TTML header and a language.
Fig. 37 is a flowchart for explaining the recording processings of the recording apparatus.
Fig. 38 is a block diagram illustrating an exemplary configuration of the subtitle generation unit.
Fig. 39 is a flowchart for explaining the subtitle screen generation processing.
Fig. 40 is a diagram illustrating exemplary Data Base information.
Fig. 41 is a block diagram illustrating an exemplary functional configuration of the recording apparatus.
Fig. 42 is a flowchart for explaining the recording processings of the recording apparatus.
Fig. 43 is a block diagram illustrating an exemplary functional configuration of the reproducing apparatus.
Fig. 44 is a flowchart for explaining the reproducing processings of the reproducing apparatus.
Fig. 45 is a diagram illustrating exemplary packetization of a TTML header.
Fig. 46 is a diagram illustrating an exemplary management structure of AV streams.
Fig. 47 is a diagram illustrating the structures of a Main Path and Sub Paths.
Fig. 48 is a diagram illustrating an exemplary management structure of files.
Fig. 49 is a diagram illustrating a syntax of a Clip Information file.
Fig. 50 is a diagram illustrating a syntax of ProgramInfo() of Fig. 49.
Fig. 51 is a diagram illustrating a syntax of StreamCodingInfo of Fig. 50.
Fig. 52 is a flowchart for explaining the recording processings of the recording apparatus.
Fig. 53 is a block diagram illustrating an exemplary configuration of the subtitle generation unit.
Fig. 54 is a flowchart for explaining the reproducing processings of the reproducing apparatus.
Fig. 55 is a flowchart for explaining the subtitle screen generation processing performed in step S229 of Fig. 54.
Fig. 56 is a block diagram illustrating an exemplary configuration of a computer.

### MODE FOR CARRYING OUT THE INVENTION

The modes for embodying the present technology will be described below. The description will be made in the following order.
1. Information processing system
2. Subtitle description system
3. Subtitle decoding
4. First example of PES packetization
5. Second example of PES packetization
6. Processings after PES packetization
7. Exemplary configurations of recording apparatus and reproducing apparatus
8. Exemplary operations of recording apparatus and reproducing apparatus
9. Exemplary generation of TTML header
10. First variant
11. Example of storing TTML header in TS packet
12. Example of describing TTML header in Data Base information
13. Second variant

### «1. Information processing system»

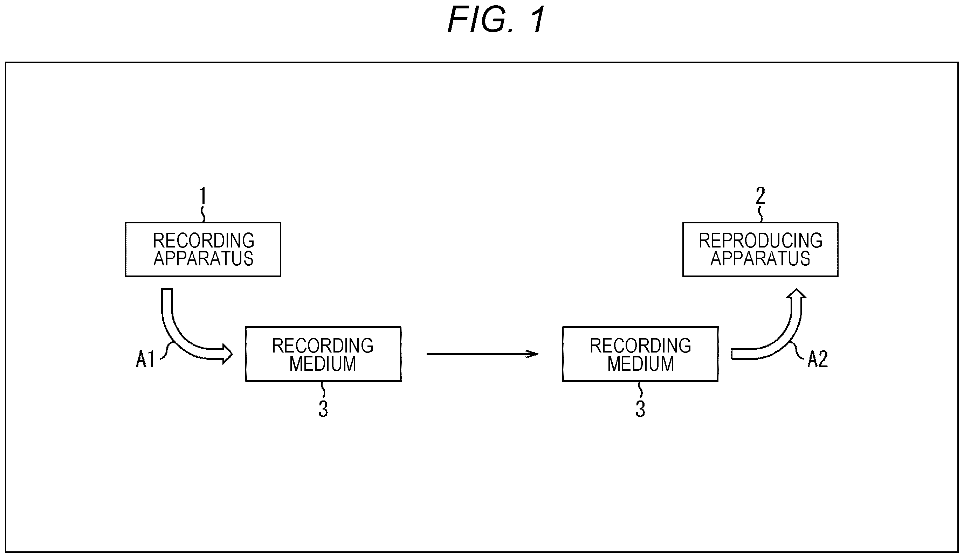

Fig. 1 is a diagram illustrating an exemplary configuration of an information processing system according to one embodiment of the present technology.

The information processing system of Fig. 1 includes a recording apparatus 1 and a reproducing apparatus 2.

The recording apparatus 1 is an information processing apparatus such as hard disc recorder, TV receiver, or personal computer. The recording apparatus 1 has a function of acquiring and recording contents such as contents to be broadcasted or contents distributed via a network such as Internet.

The contents acquired by the recording apparatus 1 are TV programs including video and audio, for example. Any contents including at least video may be acquired by the recording apparatus 1.

The reproducing apparatus 2 is a stationary information processing apparatus such as hard disc recorder, media player, or TV receiver. The reproducing apparatus 2 may be a portable information processing apparatus such as Smartphone or tablet terminal. The reproducing apparatus 2 reproduces contents and outputs the video and audio of the contents.

The video of the contents reproduced by the reproducing apparatus 2 is displayed on an external display connected to the reproducing apparatus 2 in a case where the reproducing apparatus 2 such as hard disc recorder or media player does not have a display. Furthermore, the video of the contents reproduced by the reproducing apparatus 2 is displayed on the display of the reproducing apparatus 2 in a case where the reproducing apparatus 2 such as TV receiver or portable information processing apparatus has a display.

A recording medium 3 is a general-purpose recording medium such as memory card conforming to a predetermined standard such as SD standard, universal serial bus (USB) memory, USB-connected external hard disk drive (HDD), or solid state drive (SSD). The recording medium 3 is detachable from the recording apparatus 1 and the reproducing apparatus 2. The recording medium 3 may employ an optical disc such as Blu-ray (registered trademark) disc.

The recording medium 3 is reattached to the reproducing apparatus 2 so that the contents recorded in the recording medium 3 by the recording apparatus 1 as indicated in the white arrow A1 can be reproduced in the reproducing apparatus 2 as indicated in the white arrow A2. The contents may be provided from the recording apparatus 1 to the reproducing apparatus 2 not via the recording medium 3 but via a network.

Recording contents by the recording apparatus 1 will be described here.

The contents acquired by the recording apparatus 1 include subtitle data described in timed text mark-up language (TTML) or subtitle data in SMPTE timed text (SMPTE-TT) standard.

SMPTE-TT is a standard in which a function of displaying a subtitle by PNG image is added to TTML. IP-distributed contents are required to be added with captions in CFR47 Part79 defined by U.S. Federal Communications Commission, and SMPTE-TT is recommended by U.S. Federal Communications Commission.

Both of a subtitle in TTML and a subtitle in SMPTE-TT are described in XML. In a case where a subtitle in TTML and a subtitle in SMPTE-TT do not need to be discriminated from each other, both the subtitles will be collectively denoted as XML subtitle below as needed.

The recording apparatus 1 acquires contents transmitted in MMT and records them in the recording medium 3. The contents transmitted in MMT are contents in which video data, audio data, and XML subtitle data are multiplexed in a file format defined by MMT.

Furthermore, the recording apparatus 1 acquires contents in the MP4 file format in which video data, audio data, and XML subtitle data are multiplexed, and records them in the recording medium 3.

The recording apparatus 1 conforms to the MMT transmission system and is capable of processing data in the MP4 file format.

The recording apparatus 1 converts contents in the MMT format or contents in the MP4 format acquired as contents to be recorded into contents in the MPEG-2 TS format before recording the contents in the recording medium 3. The recording apparatus 1 records the acquired contents in the MPEG-2 TS format in the recording medium 3. In the following, contents in the MMT file format will be denoted as MMT contents and contents in the MP4 file format will be denoted as MP4 contents as needed.

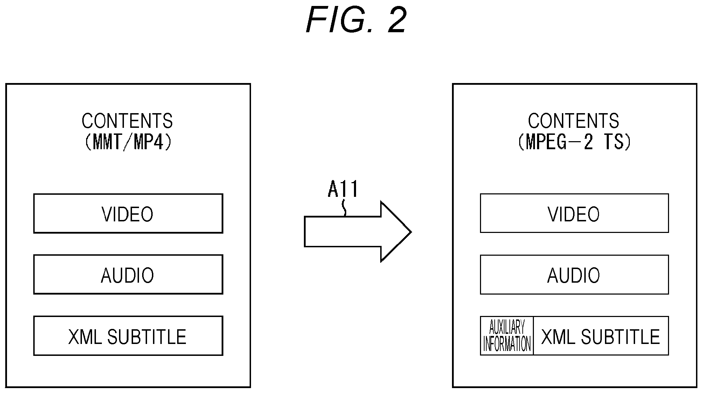

Fig. 2 is a diagram illustrating exemplary conversion of contents.

The contents illustrated on the left of Fig. 2 are MMT contents or MP4 contents to be recorded. The contents to be recorded include video data, audio data, and XML subtitle data. Furthermore, the information used to reproduce the XML subtitle data in synchronization with the video data is included.

In a case where the contents to be recorded are MMT contents, the information used to reproduce the XML subtitle is included in the MMT fragment unit (MFU) header as a header of MFU for storing the video data or the media processing unit (MPU) header as a header of MPU, for example.

Furthermore, in a case where the contents to be recorded are MP4 contents, the information used to reproduce the XML subtitle is included in the MP4 header (moov box) as management information of box (mdat box) for storing the video data, for example.

The video data is acquired by encoding in a predetermined encoding system such as high efficiency video coding (HEVC) or H.264/MPEG-4 advanced video coding (AVC). The audio data is acquired by encoding in a predetermined encoding system such as advanced audio coding (AAC) or mp3.

The recording apparatus 1 extracts the video data, the audio data, and the XML subtitle data from the MMT contents or MP4 contents.

Furthermore, the recording apparatus 1 generates auxiliary information used to reproduce the XML subtitle data in synchronization with the video data when reproducing the contents in the MPEG-2 TS format.

Information, which cannot be referred to when data in the MMT format or MP4 format is converted into data in the MPEG-2 TS format, is present in the information included in contents which are not converted.

The auxiliary information is directed for reproducing the XML subtitle data included in the contents in the MPEG-2 TS format in synchronization with the video data even if the information cannot be referred to due to such format conversion. A TTML header included in a PES packet storing the XML subtitle data described below corresponds to the auxiliary information.

The recording apparatus 1 adds the auxiliary information to the XML subtitle data extracted from the contents to be recorded, and generates the XML subtitle data including the auxiliary information. Furthermore, the recording apparatus 1 multiplexes the XML subtitle data including the auxiliary information in the MPEG-2 TS format together with the video data and the audio data extracted from the contents to be recorded, and generates contents of a transport stream (TS) indicated ahead of the arrow A11. The recording apparatus 1 records the generated TS in the recording medium 3.

In other words, the format of the contents including the XML subtitle data is converted from the MMT format or the MP4 format to the MPEG-2 TS format in the recording apparatus 1. Furthermore, the auxiliary information collectively including the information which cannot be referred to due to format conversion, for example is generated, and is included in the contents in the MPEG-2 TS format.

The reproducing apparatus 2 reads the contents in the MPEG-2 TS format from the recording medium 3 when reproducing the contents recorded in the recording medium 3, and separates the TS into the respective TS packets of the video data, the audio data, and the XML subtitle data.

The reproducing apparatus 2 decodes the TS packets of the video data and the TS packets of the audio data, which are separated, and outputs the video and the audio. Furthermore, the reproducing apparatus 2 acquires the XML subtitle data on the basis of the separated TS packets, decodes it with reference to the auxiliary information as needed, and displays the subtitle together with the video of the contents.

In this way, the recording apparatus 1 can multiplex the TTML subtitle data or the SMPTE-TT subtitle data included in the MMT contents or the MP4 contents in the MPEG-2 TS format.

Furthermore, the reproducing apparatus 2 can reproduce the TTML subtitle data or the SMPTE-TT subtitle data multiplexed in the MPEG-2 TS format.

### «2. Subtitle description system»

The XML subtitle includes image subtitle for displaying the subtitle in image by use of PNG, and text subtitle for displaying the subtitle in text. image subtitle is in the SMPTE-TT standard. On the other hand, text subtitle may be in TTML and in the SMPTE-TT standard.

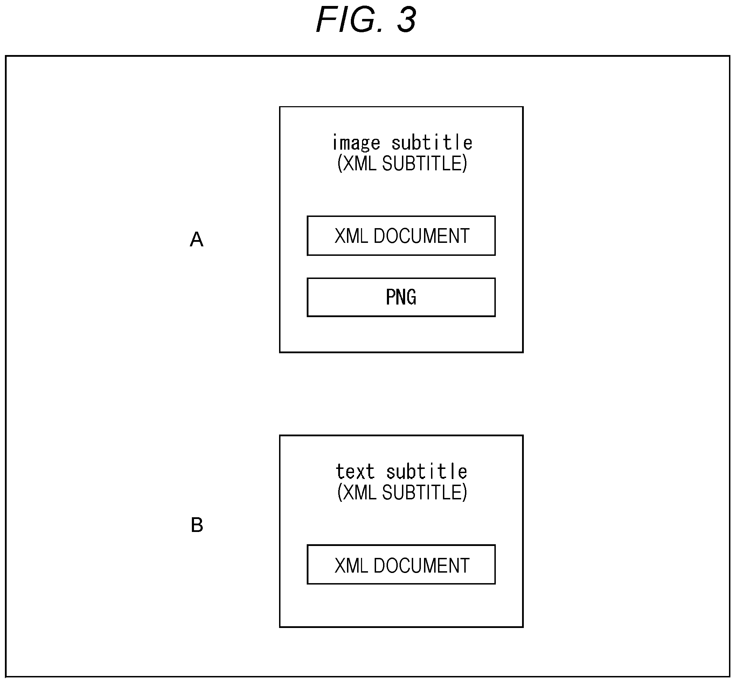

Fig. 3 is a diagram illustrating a configuration of the XML subtitle data.

As illustrated in A of Fig. 3, the XML subtitle data of image subtitle is configured of an XML document and PNG files.

The XML document is data in which a display timing, a display position, a display size, and the like are described in XML. The XML document includes a description for designating a PNG file to be referred to at each display timing.

A PNG file is an image file of the subtitle. The XML subtitle data of image subtitle includes a plurality of PNG files.

As illustrated in B of Fig. 3, the XML subtitle data of text subtitle is configured of an XML document.

The XML document is data in which a display timing, a display position, a display size, and the like are described in XML similarly to the XML document included in the XML subtitle data of image subtitle. The XML document of text subtitle includes a description of text data displayed at each display timing.

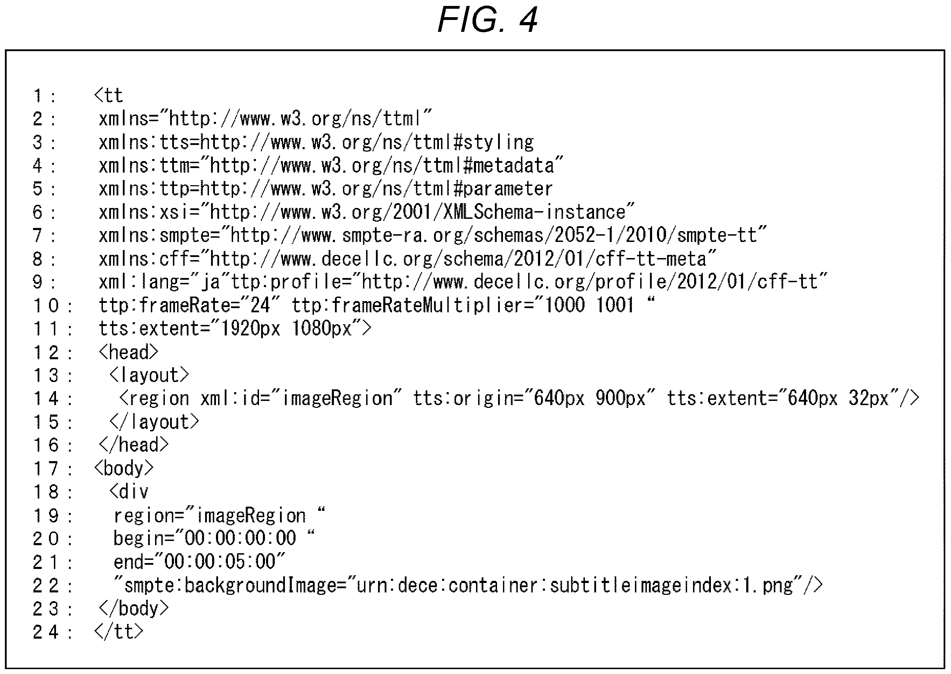

Fig. 4 is a diagram illustrating an exemplary description of the XML document of image subtitle.

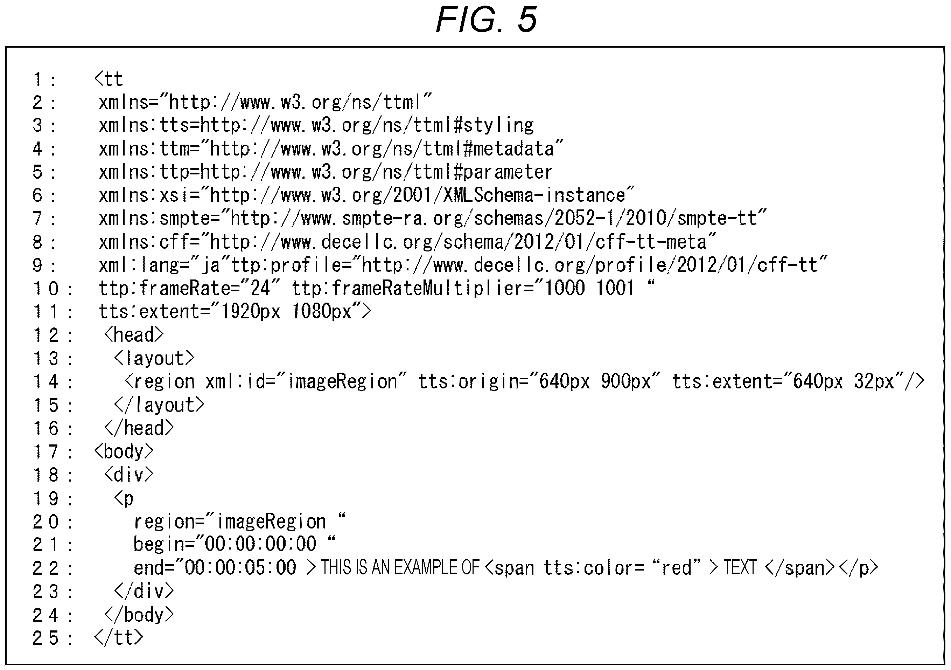

The numbers indicated on the left of Fig. 4, and ":" are denoted for convenient description. This is similarly applicable in and subsequent to Fig. 5. The main elements will be described.

"ttp:frameRate="24"" in the 10th line, and "ttp:frameRateMultiplier="1000 1001"" subsequent thereto indicate a frame rate of 23.976 Hz.

"tts:extent="1920px 1080px"" in the 11th line indicates a frame size of 1920 × 1080 pixels.

The element <head> in the 12th line corresponds to the header of the XML document.

The element <layout> in the 13th line designates a layout of the subtitle in the header.

The element <region> in the 14th line designates a display region of the subtitle. The element <region> includes the respective attributes id, origin, and extent. id, origin, and extent indicate the ID, the start point, and the range of the display region, respectively.

The element <body> in the 17th line corresponds to the body text of the XML document.

The element <div> in the 18th line corresponds to the block of the subtitle (document). The element <div> includes the respective attributes region, begin, end, and smpte:backgroundImage. region indicates a display region of the body text. begin indicates a display start time of the body text. end indicates a display end time of the body text. smpte:backgroundImage indicates a PNG file to be referred to.

Fig. 5 is a diagram illustrating an exemplary description of the XML document of text subtitle. The same description as the description of Fig. 4 will be omitted as needed.

The element <p> in the 19th line indicates a line of the subtitle. The element <p> includes the respective attributes region, begin, and end.

The element <span> in the 22nd line indicates a partial period of the subtitle. The attribute tts:color included in the element <span> indicates the color of characters.

The element <p> in Fig. 5 indicates that one line of "This is an example of text" between "00:00:00:00" and "00:00:05:00" (between 0 second and 5 seconds) in the display region indicated by "imageRegion". The characters of "text" are in red.

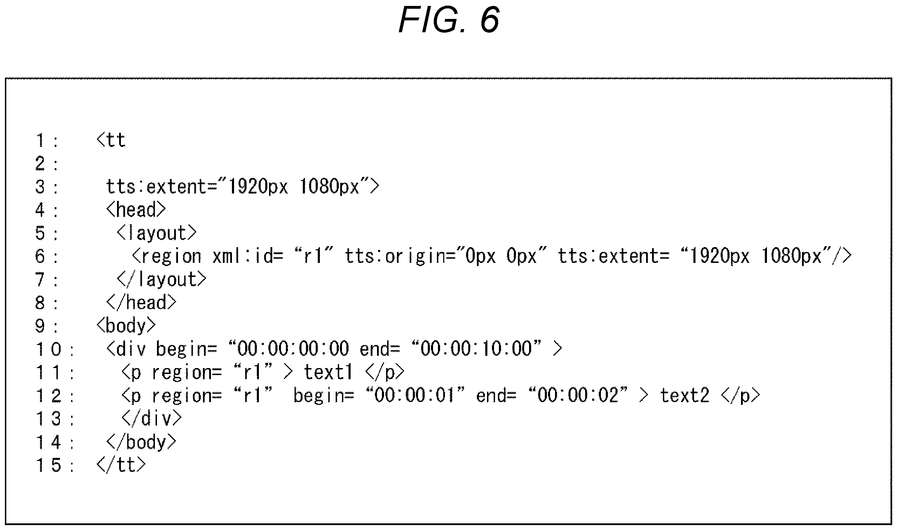

Fig. 6 is a diagram illustrating a specific example of the XML document. The XML document of Fig. 6 is an XML document of text subtitle.

One line of "text1" described in the element <p> in the 11th line is a subtitle displayed in the region indicated by "r1". The attributes begin and end are not included, but the values of the higher elements are subsequently used in this case.

In the example of Fig. 6, "begin= "00:00:00:00"" and "end= "00:00:10:00"" are described in the element <div> in the 10th line. The display start time is "00:00:00:00" and the display end time is "00:00:10:00" for the line of "text1".

The time attributes begin, end, and dur may not be present in the elements. In this case, a display timing is specified according to the times in the higher elements.

One line of "text2" described in the element <p> in the 12th line is a subtitle displayed in the region indicated by "r1" between the time designated as "begin= "00:00:01" and the time designated as "end= 00:00:02".

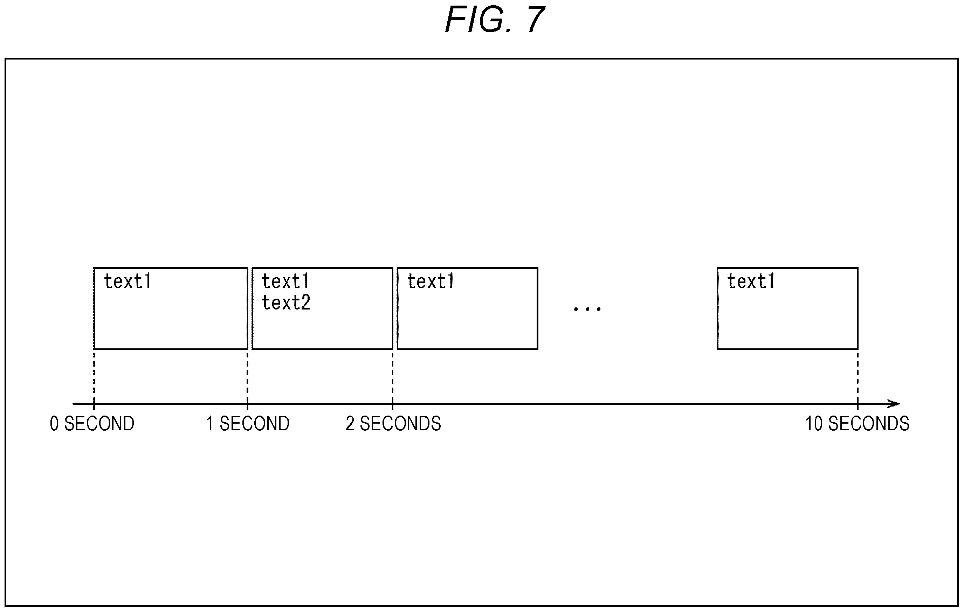

Fig. 7 is a diagram illustrating an exemplary subtitle displayed according to the XML document of Fig. 6.

The horizontal axis indicates time. As illustrated in Fig. 7, the line of "text1" keeps being displayed in the region indicated by "r1" in the duration between 0 second and 10 seconds. Furthermore, the line of "text2" is also displayed in the region indicated by "r1" in the duration between 1 second and 2 seconds.

The XML subtitle data including the above description is included in the contents acquired by the recording apparatus 1. Furthermore, the XML subtitle data including the above description is included also in the contents recorded in the recording medium 3 and provided to the reproducing apparatus 2.

The processings for the XML subtitle data of image subtitle will be mainly described below. The processings for the XML subtitle data of text subtitle are also performed similarly to the processings for the XML subtitle data of image subtitle.

### <<3. Subtitle decoding>>

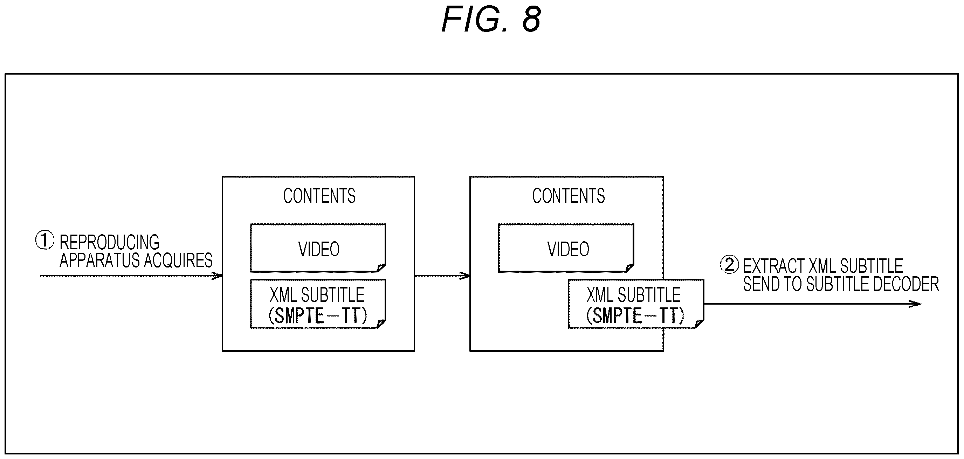

A flow of decoding XML subtitle data in the reproducing apparatus 2 will be described with reference to Fig. 8 to Fig. 11.

The reproducing apparatus 2 acquires the contents provided from the recording apparatus 1 as indicated on the left of Fig. 8. The contents acquired by the reproducing apparatus 2 are contents in the MPEG-2 TS format including video data, audio data, and XML subtitle data.

The reproducing apparatus 2 extracts the XML subtitle data from the TS and outputs it to a subtitle decoder as indicated on the right of Fig. 8. The reproducing apparatus 2 is provided with a separating unit (demultiplexer) for separating the respective items of data, and a subtitle decoder for analyzing an XML document and reproducing a subtitle according to the description of the XML document. The reproducing apparatus 2 is provided with a video decoder for decoding video data, and an audio decoder for decoding audio data.

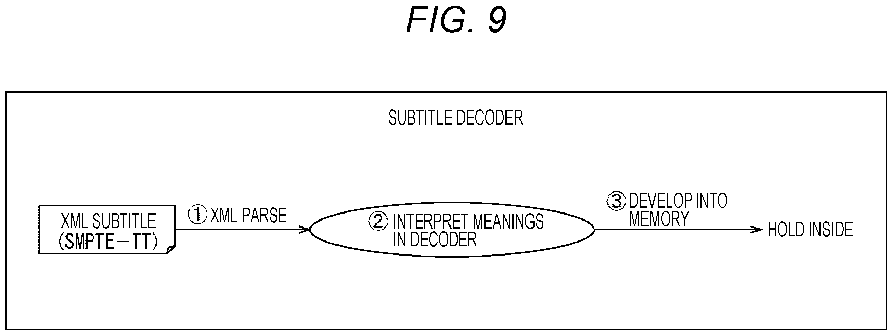

As illustrated in Fig. 9, the subtitle decoder in the reproducing apparatus 2 analyzes the XML subtitle data supplied from the separating unit thereby to interpret the meaning of the XML document, and holds the optimized XML subtitle data in an internal memory. Optimizing the XML subtitle data includes deleting information not required to display the subtitle.

Furthermore, optimizing the XML subtitle data includes replacing the times included in the XML document with the times in unified expression. The XML subtitle data is optimized on the basis of the auxiliary information as needed.

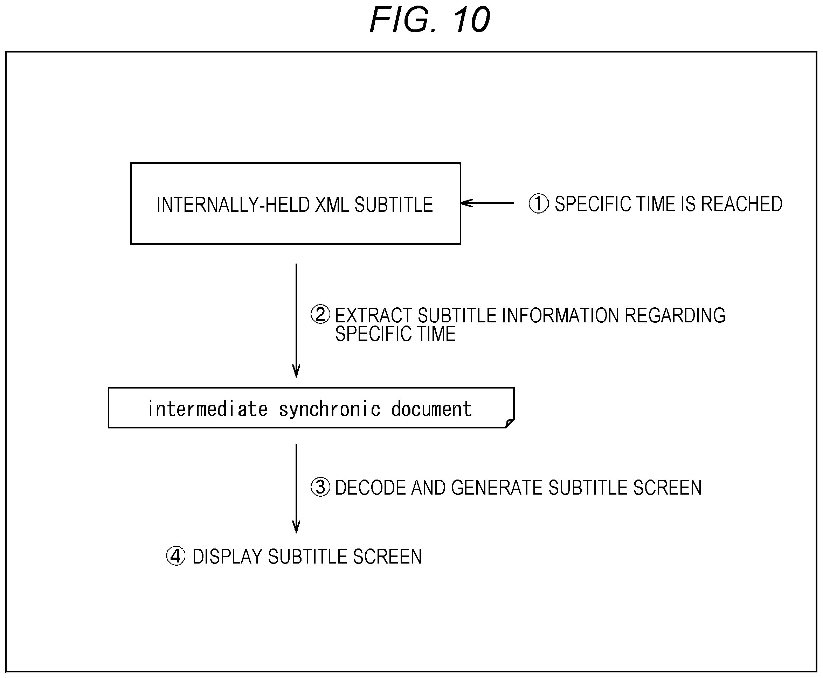

As illustrated in Fig. 10, the subtitle decoder extracts the subtitle information regarding the time from the XML subtitle data and generates an intermediate synchronic document at the display timing of the subtitle.

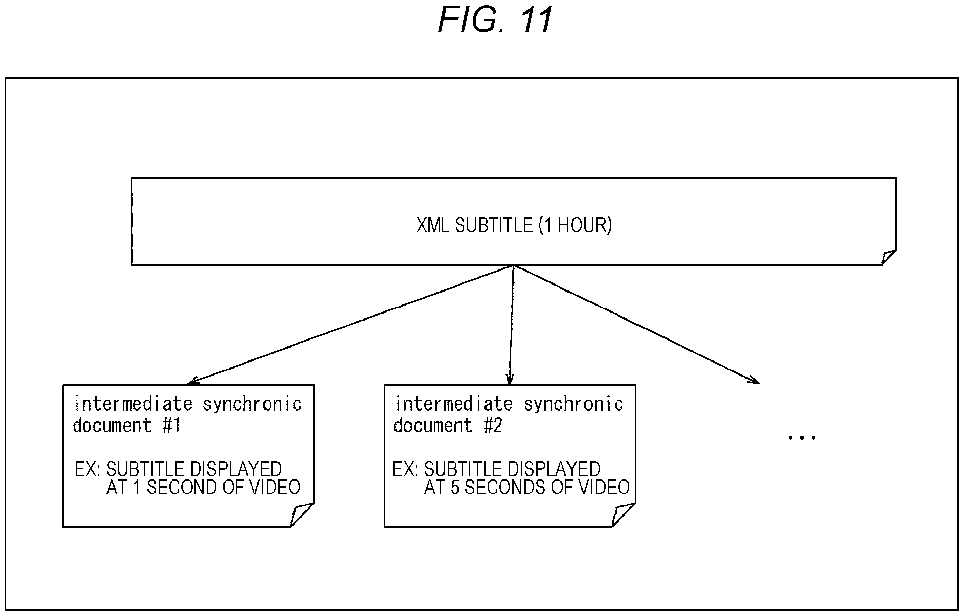

As illustrated in Fig. 11, an intermediate synchronic document is intermediate subtitle information describing the information regarding the subtitle at each display timing. In the example of Fig. 11, the original SMPTE-TT subtitle data includes the description for displaying the subtitle for one hour. For example, the information corresponding to the subtitle at each display timing such as intermediate synchronic document #1 for the subtitle displayed at a display timing of 1 second and intermediate synchronic document #2 for the subtitle displayed at a display timing of 5 seconds is generated on the basis of the SMPTE-TT subtitle data.

The subtitle decoder decodes the generated intermediate synchronic documents, and generates a subtitle plane by use of the bitmap data of the PNG files. The subtitle plane is subtitle screen data. The subtitle plane generated by the subtitle decoder is combined with a video plane generated by the video decoder so that the video (screen) of the contents is displayed on the basis of the combined display data.

A series of processings of the reproducing apparatus 2, which decodes the XML subtitle data as described above, will be described below with reference to the flowcharts.

### <<4. First example of PES packetization>>

A video elementary stream and an audio elementary stream are PES-packetized and divided into TS packets in units of 188 bytes, respectively, in the recording apparatus 1. The XML subtitle data is also PES-packetized and divided into TS packets in units of 188 bytes. The TS packets storing the video data, the TS packets storing the audio data, and the TS packets storing the XML subtitle data are multiplexed thereby to generate a TS.

A first system for PES-packetizing image subtitle will be described here.

The first system for PES packetization is for collectively storing all the subtitle data in one valid period into one PES packet. One valid period is a period in which a subtitle is reproduced by use of one XML document.

As described in Fig. 3, the subtitle data of image subtitle is configured of an XML document and PNG files. The assets to be multiplexed are one XML document file and all the PNG files referred to by the XML document.

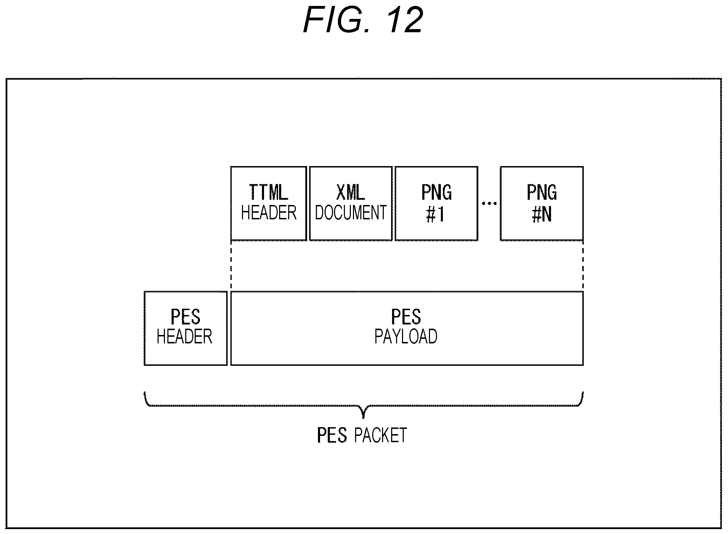

Fig. 12 is a diagram illustrating an exemplary configuration of a PES packet.

As illustrated in Fig. 12, a TTML header is arranged at the head of a PES payload. The TTML header is auxiliary information complementing the information lacking in the description of the XML document.

A data block of the XML document is arranged next to the TTML header, and the data blocks #1 to #N of all the PNG files referred to in the XML document are arranged subsequent to the data block of the XML document.

The PES payload including the TTML header, the XML document, and all the PNG files is added with a PES header thereby to configure one PES packet.

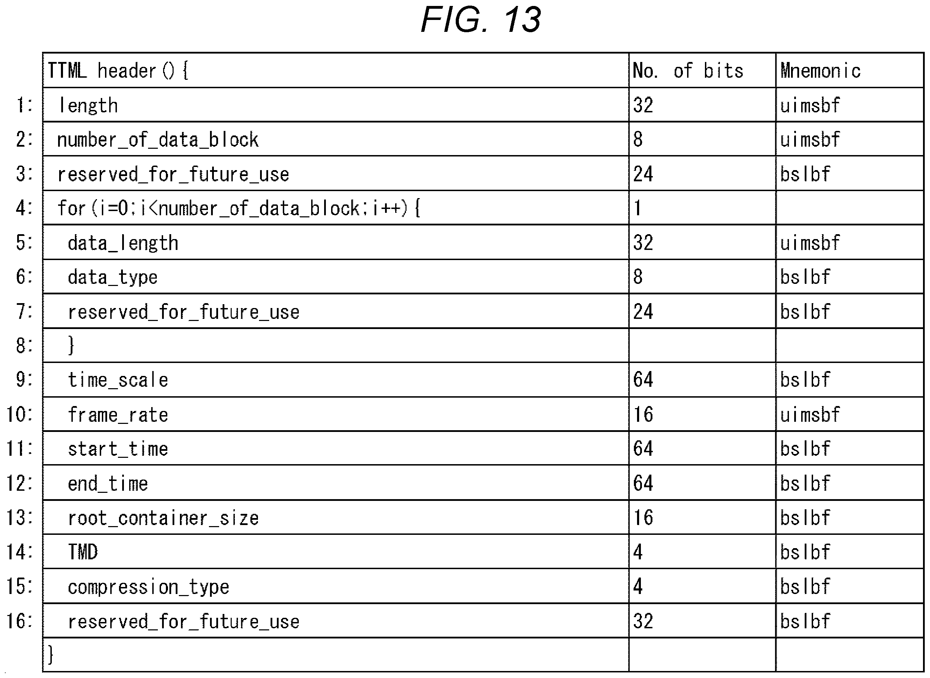

Fig. 13 is a diagram illustrating an exemplary syntax of the TTML header of Fig. 12.

length in the first line indicates the length of the TTML header.

number_of_data_block in the second line indicates the number of all the data blocks (the data block of the XML document and the data blocks of the PNG files).

Information from the fifth to seventh lines indicates each data block, and as many items of information as indicated by number_of_data_block are repeated. For example, the information with i=0 is information regarding the first data block or the data block of the XML document. Furthermore, the information with i=1 is information regarding the second data block or the data block of the first PNG file.

Note that the data block of the XML document and the data blocks of the PNG files are arranged in arbitrary order. For example, the data blocks of the PNG files may be arranged subsequent to the TTML header.

data_length in the fifth line indicates the length of the data block.

data_type in the sixth line indicates whether the data block is of the XML document or a PNG file.

length in the first line, number_of_data_block in the second line, and data_length and data_type as information regarding each data block are separation information used to separate the XML document and the PNG files.

time_scale in the ninth line indicates that 1tick is 1/time_scale seconds. tick is one time expression. For example, 90000tick indicates that 90000tick corresponds to 1 second. In this case, 1tick indicates 1/90000 seconds. time_scale is information indicating the form of expressing the times in the XML document.

frame _rate in the 10th line indicates the frame rate assumed for the subtitle.

start_time in the 11th line indicates the start time of the valid period.

end_time in the 12th line indicates the end time of the valid period.

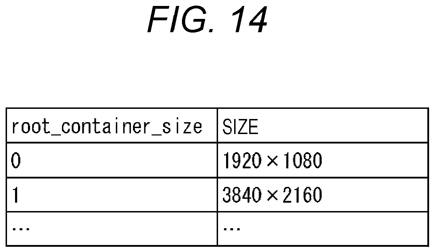

root _container _size in the 13th line indicates the frame size assumed for the subtitle. As illustrated in Fig. 14, for example, root_container_size with a value of 0 indicates a frame size of 1920 × 1080 pixels. Furthermore, root_container_size with a value of 1 indicates a frame size of 3840 × 2160 pixels.

TMD in the 14th line indicates whether or not to ignore the time information regarding begin and end in the XML document. 0010b as a value of TMD is an invalid value. 1111b as a value of TMD indicates to ignore the time information regarding begin and end in the XML document.

compression_type in the 15th line indicates whether or not the data bytes of the XML document are compressed, and if compressed, the type of the compression. 0000b as a value of compression_type indicates that the data bytes of the XML document are not compressed. A value of compression_type other than 0000b indicates that the data bytes of the XML document are compressed according to the value of compression_type.

The information described in the TTML header is required to reproduce the XML subtitle data of the contents in the MPEG-2 TS format. The recording apparatus 1 generates the TTML header including the description and arranges it at the head of the PES payload thereby to PES-packetize the XML subtitle data.

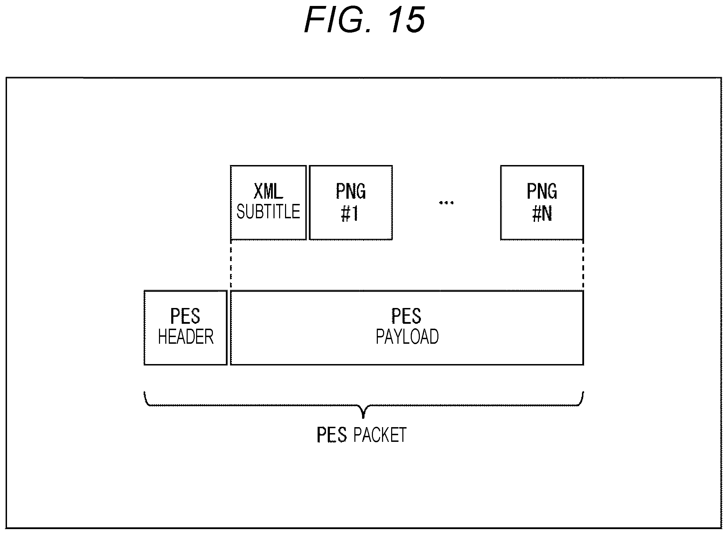

As described above, in a case where the contents to be recorded are MMT contents, for example, the information, which cannot be referred to due to conversion of the MMT contents into the contents in the MPEG-2 TS format, is present in the MFU header or the MPU header. Accordingly, in a case where the TTML header is not included and only the XML document data and the PNG files to be referred to are stored in the PES payload as illustrated in Fig. 15, the information is lacking and the reproducing apparatus 2 cannot display the subtitle according to the XML document.

The XML subtitle data is PES-packetized with the TTML header included and is multiplexed on the contents in the MPEG-2 TS format in this way so that the reproducing apparatus 2 can reproduce the XML subtitle data included in the contents in the MPEG-2 TS format.

### <<5. Second example of PES packetization>>

A second system for PES-packetizing image subtitle will be described next.

The second system for PES packetization is for storing each component in one valid period into an individual PES packet, respectively.

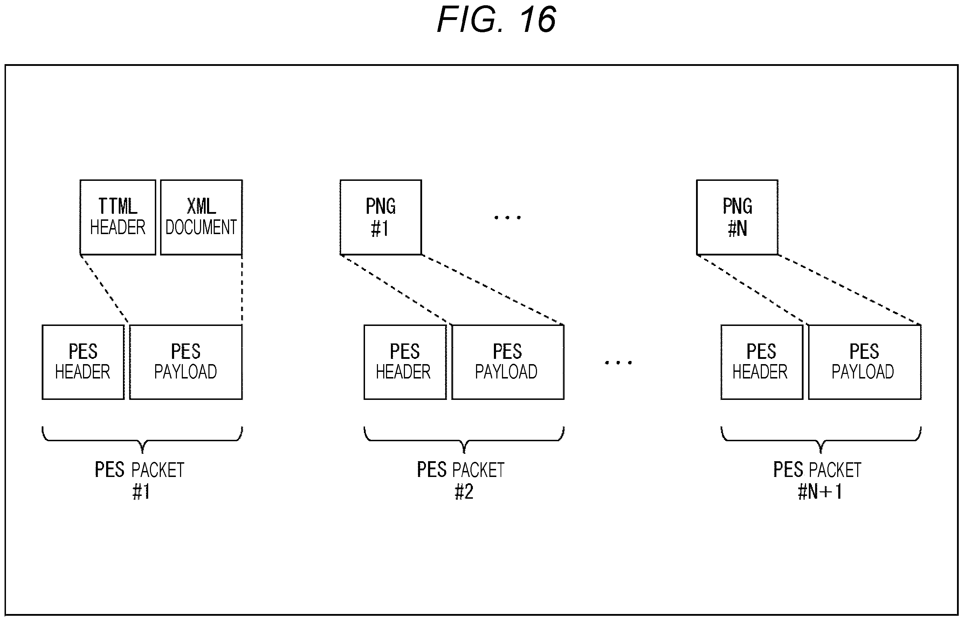

Fig. 16 is a diagram illustrating exemplary configurations of PES packets.

As illustrated in Fig. 16, the TTML header is arranged at the head of the PES payload in the PES packet #1 as the first PES packet. Furthermore, the data block of the XML document is arranged next to the TTML header in the PES payload in the PES packet #1.

A PES header is added to the PES payload including the TTML header and the XML document thereby to configure the PES packet #1. The TTML header is included only in the PES packet storing the XML document.

The data blocks of the PNG files #1 to #N are arranged in the PES payloads in the PES packet #1 and subsequent PES packets, respectively.

A PES header is added to a PES payload including the data block of one PNG file thereby to configure the PES packets #2 to #N+1.

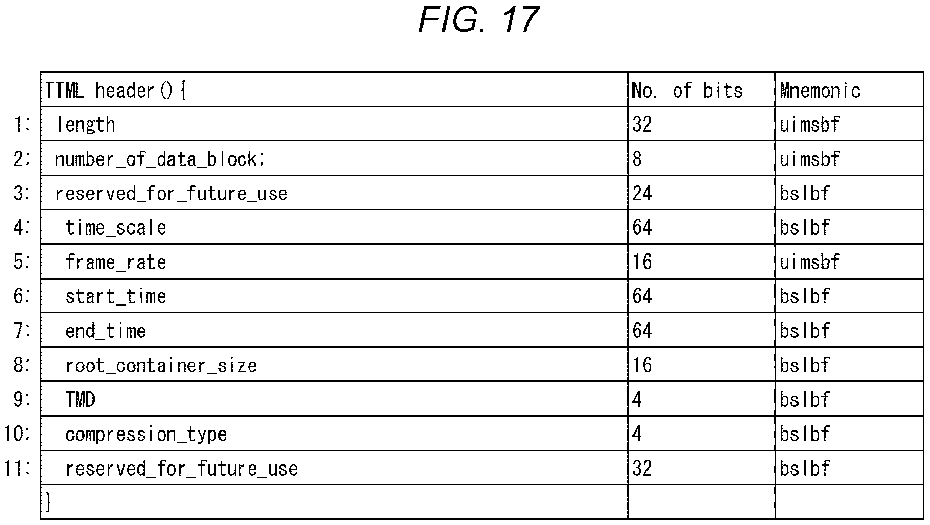

Fig. 17 is a diagram illustrating an exemplary syntax of the TTML header of Fig. 16. The same description as the description of Fig. 13 will be omitted as needed.

length in the first line indicates the length of the TTML header.

number_of_data_block in the second line indicates the number of all the data blocks (the data block of the XML document and the data blocks of the PNG files). The number obtained by subtracting 1 from the number indicated by number_of_data_block is the number of PNG files to be referred to by the XML document, or the number of PES packets subsequent to the PES packet including the TTML header.

length in the first line and number_of_data_block in the second line are separation information used to separate the XML document and the PNG files.

time _scale in the fourth line indicates that 1tick is 1/time_scale seconds.

frame _rate in the fifth line indicates the frame rate assumed for the subtitle.

start_time in the sixth line indicates the start time of the valid period.

end_time in the seventh line indicates the end time of the valid period.

root _container _size in the eighth line indicates the frame size assumed for the subtitle.

TMD in the ninth line indicates whether or not to ignore the time information regarding begin and end in the XML document.

compression_type in the 10th line indicates whether or not the data bytes of the XML document are compressed, and if compressed, the type of the compression.

The TTML header illustrated in Fig. 17 does not have the information regarding each data block including data_length and data_type unlike the TTML header illustrated in Fig. 13. This is because the length of each PES packet can be specified on the basis of the description of the PES header of each PES packet. Furthermore, this is because the type of a data block arranged in a PES payload can be specified on the basis of the order of the PES packets.

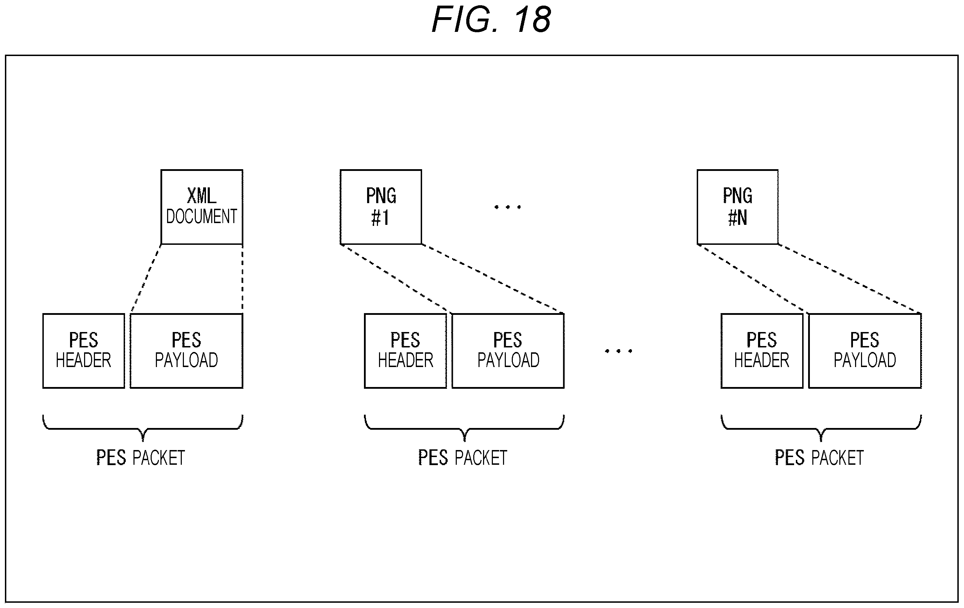

If the TTML header is not included in the first PES packet and only the XML document data and the PNG files to be referred to are stored in the PES packets, respectively, as illustrated in Fig. 18, the information is lacking, and the reproducing apparatus 2 cannot display the subtitle according to the XML document.

The XML subtitle data is PES-packetized with the TTML header included and is multiplexed on the contents in the MPEG-2 TS format in this way so that the reproducing apparatus 2 can reproduce the XML subtitle data included in the contents in the MPEG-2 TS format.

For example, the system for PES-packetizing the XML subtitle data (the first system or the second system) is previously determined between the recording apparatus 1 and the reproducing apparatus 2.

### <<6. Processings after PES packetization>>

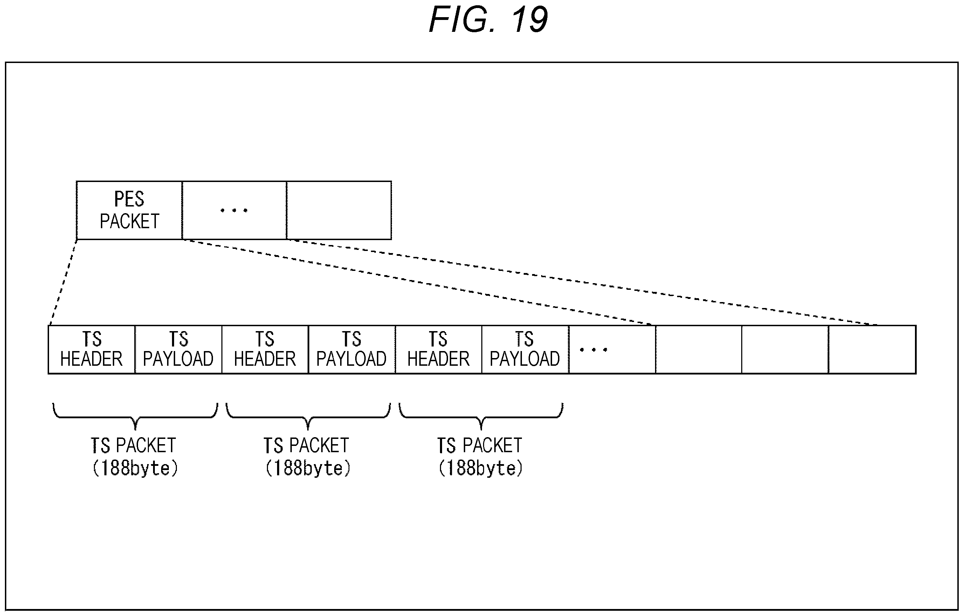

Fig. 19 is a diagram illustrating exemplary TS packetization.

The PES packets obtained in the first system or second system for PES packetization are divided into TS packets in units of 188 bytes, respectively. Each of the TS packets is configured of a TS header and a TS payload. PID of the TS header of each TS packet is set with the value assigned to the XML subtitle data.

In the recording apparatus 1, the thus-generated TS packets are multiplexed together with the TS packets including the data of the video elementary stream and the TS packets including the data of the audio elementary stream thereby to generate a TS.

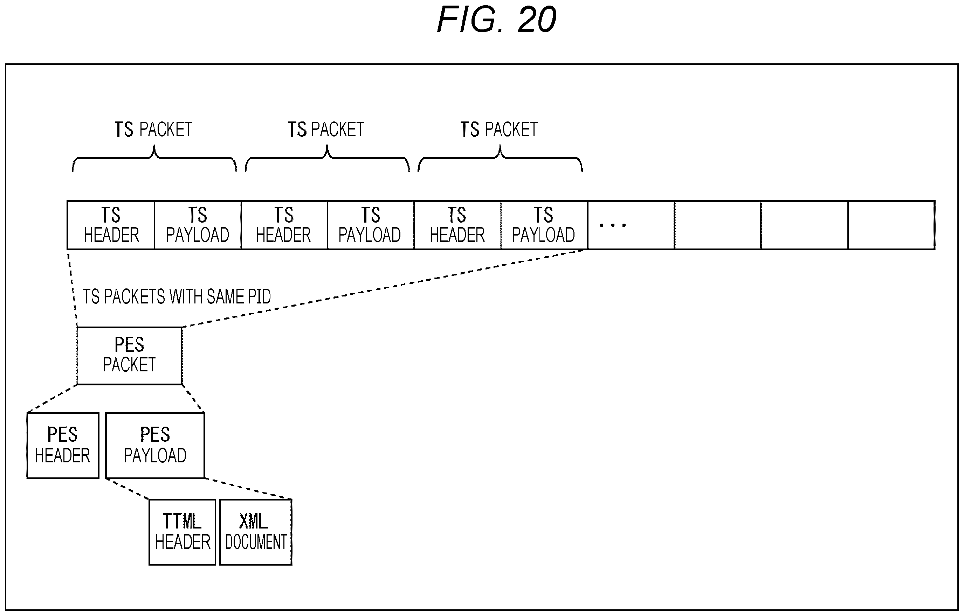

Fig. 20 is a diagram illustrating exemplary processings of TS packets in the reproducing apparatus 2.

The TS packets illustrated in Fig. 20 store the XML subtitle data generated as described in Fig. 19.

The reproducing apparatus 2 collects the TS packets with the same PID thereby to generate a PES packet on the basis of the PIDs included in the TS headers of the respective TS packets. The PES payload of the first PES packet includes the TTML header and the data block of the XML document.

Similarly, the TS packets with the same PID are collected thereby to generate the second and subsequent PES packets. The PES payload of each of the second and subsequent PES packets includes the data bock of each PNG file referred to by the XML document.

In other words, the PES packet illustrated in Fig. 20 is obtained in the second system for PES packetization.

### «7. Exemplary configurations of recording apparatus and reproducing apparatus»

### <7-1. Exemplary configuration of recording apparatus>

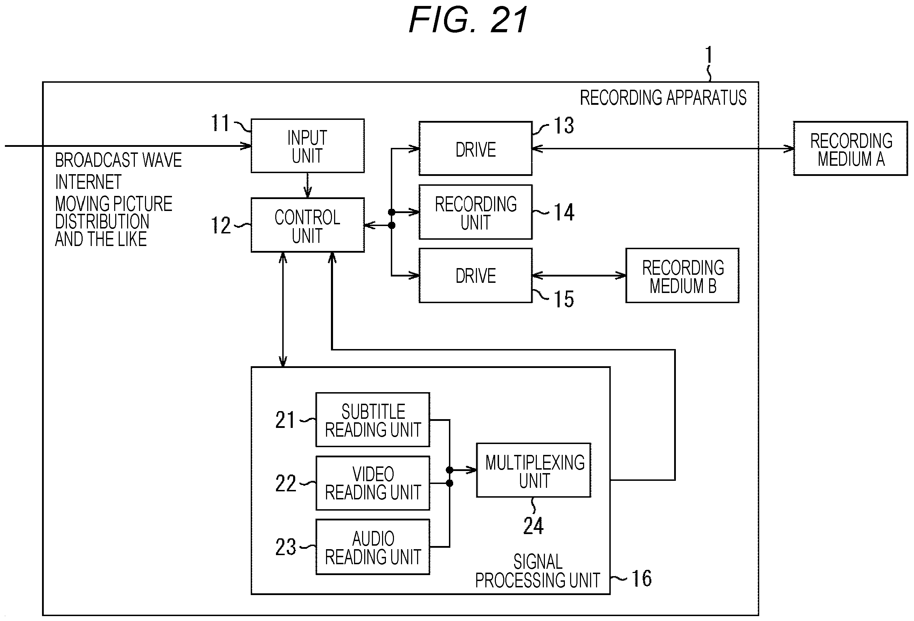

Fig. 21 is a block diagram illustrating an exemplary configuration of the recording apparatus 1.

The recording apparatus 1 is configured of an input unit 11, a control unit 12, a drive 13, a recording unit 14, a drive 15, a signal processing unit 16, and a recording medium B. The signal processing unit 16 is configured of a subtitle reading unit 21, a video reading unit 22, an audio reading unit 23, and a multiplexing unit 24.

The recording apparatus 1 is connected with a recording medium A as an external recording medium. The recording medium A corresponds to the recording medium 3. The recording medium B is an incorporated recording medium such as HDD or SSD.

The input unit 11 acquires contents to be recorded including the XML subtitle data. The contents acquired by the input unit 11 are MMT contents or MP4 contents broadcasted or distributed via the Internet.

The recording apparatus 1 is provided with a broadcast signal reception unit, a communication unit for making communication with an external apparatus via the Internet, and the like. The input unit 11 outputs the acquired contents to the control unit 12. Furthermore, the input unit 11 receives the operations by the user of the recording apparatus 1, and outputs the information indicating the contents of the operations to the control unit 12.

The control unit 12 is configured of a central processing unit (CPU), a read only memory (ROM), a random access memory (RAM), and the like, and executes predetermined programs thereby to control the operations of the entire recording apparatus 1.

For example, the control unit 12 generates a TTML header. Furthermore, the control unit 12 controls the signal processing unit 16, and causes it to convert the contents to be recorded into contents in the MPEG-2 TS format. The control unit 12 outputs the contents in the MPEG-2 TS format acquired by conversion to the drive 13, and causes the drive 13 to record the contents in the recording medium A.

In a case where the contents are provided to the reproducing apparatus 2 via a network, the control unit 12 controls the communication unit (not illustrated), and transmits the contents in the MPEG-2 TS format acquired by conversion to the reproducing apparatus 2.

The drive 13 causes the contents supplied from the control unit 12 to be recorded in the recording medium A. Furthermore, the drive 13 reads the data from the recording medium A and outputs it to the control unit 12 as needed.

The recording unit 14 is an incorporated recording medium such as HDD or SSD. The recording unit 14 records the data supplied from the control unit 12.

The drive 15 causes the data supplied from the control unit 12 to be recorded in the recording medium B. Furthermore, the drive 15 reads the data from the recording medium B and outputs it to the control unit 12 as needed.

The subtitle reading unit 21 in the signal processing unit 16 reads the XML subtitle data from the contents supplied from the control unit 12. The subtitle reading unit 21 outputs the read XML subtitle data to the multiplexing unit 24.

The video reading unit 22 reads the video data from the contents supplied from the control unit 12. The video reading unit 22 outputs the read video data (video stream) to the multiplexing unit 24.

The audio reading unit 23 reads the audio data from the contents supplied from the control unit 12. The audio reading unit 23 outputs the read audio data (audio stream) to the multiplexing unit 24.

The multiplexing unit 24 PES-packetizes the TTML header generated by the control unit 12 and the XML subtitle data supplied from the subtitle reading unit 21 in the first system or the second system. Furthermore, the multiplexing unit 24 PES-packetizes the video stream supplied from the video reading unit 22 and the audio stream supplied from the audio reading unit 23.

The multiplexing unit 24 multiplexes the respective TS packets of the XML subtitle, the video, and the audio thereby to generate a TS. The multiplexing unit 24 outputs the generated TS to the control unit 12.

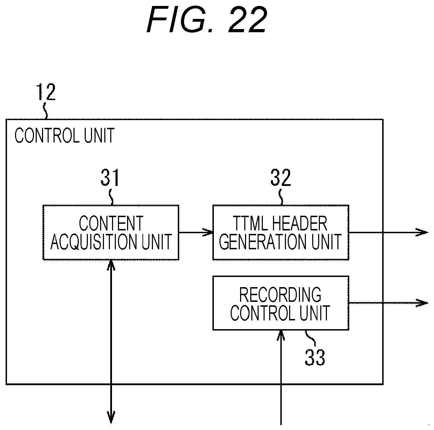

Fig. 22 is a block diagram illustrating an exemplary functional configuration of the recording apparatus 1. Predetermined programs are executed by the control unit 12 so that at least some of the components illustrated in Fig. 22 are realized.

A content acquisition unit 31, a TTML header generation unit 32, and a recording control unit 33 are realized in the control unit 12.

The content acquisition unit 31 acquires the contents to be recorded supplied from the input unit 11, and outputs them to the signal processing unit 16. Furthermore, the content acquisition unit 31 acquires the information used to generate a TTML header in the data read from the contents in the signal processing unit 16. The content acquisition unit 31 outputs the acquired information to the TTML header generation unit 32.

The TTML header generation unit 32 generates a TTML header on the basis of the information supplied from the content acquisition unit 31, and outputs it to the signal processing unit 16. The TTML header is generated by the TTML header generation unit 32 by use of the information or the like input by the user of the recording apparatus 1 as needed. Generation of a TTML header will be described below.

The recording control unit 33 acquires the contents in the MPEG-2 TS format generated by the signal processing unit 16, and controls and causes the drive 13 to record the contents in the recording medium A.

### <7-2. Exemplary configuration of reproducing apparatus>

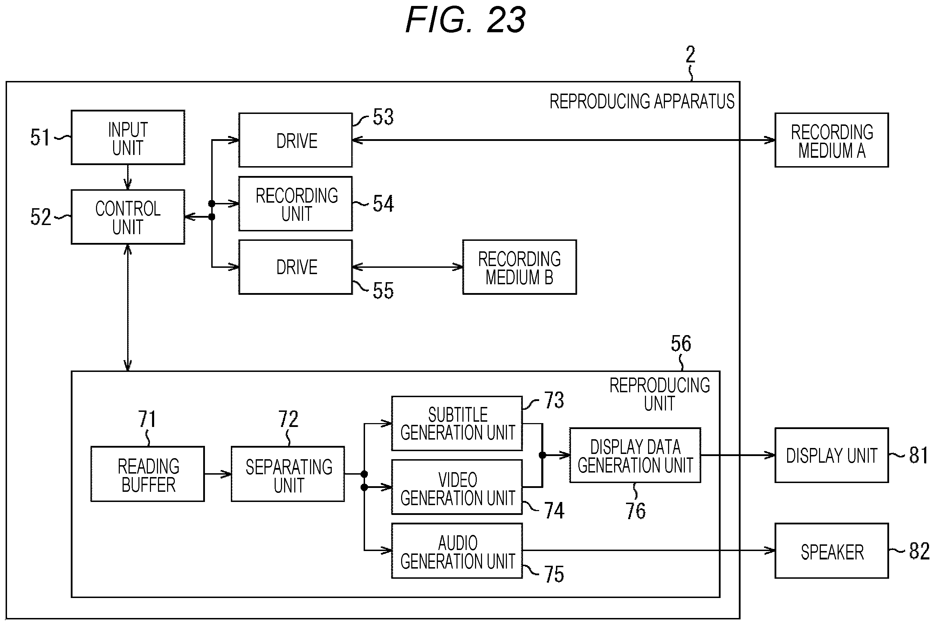

Fig. 23 is a block diagram illustrating an exemplary configuration of the reproducing apparatus 2.

The reproducing apparatus 2 is configured of an input unit 51, a control unit 52, a drive 53, a recording unit 54, a drive 55, a reproducing unit 56, and a recording medium B. The reproducing unit 56 is configured of a reading buffer 71, a separating unit 72, a subtitle generation unit 73, a video generation unit 74, an audio generation unit 75, and a display data generation unit 76.

The reproducing apparatus 2 is connected with a recording medium A corresponding to the recording medium 3. The recording medium A records the contents in the MPEG-2 TS format therein. Reproduction of contents recorded in the recording medium A will be described. The recording medium B is an incorporated recording medium such as HDD or SSD.

Furthermore, the reproducing apparatus 2 is connected with a display unit 81 and a speaker 82. In a case where the reproducing apparatus 2 such as media player does not have a display, the display unit 81 and the speaker 82 are the components of a TV receiver connected to the reproducing apparatus 2. The reproducing apparatus 2 is connected to the TV receiver via a predetermined interface such as HDMI (registered trademark). On the other hand, in a case where the reproducing apparatus 2 such as portable terminal has a display, the display unit 81 and the speaker 82 are provided inside the reproducing apparatus 2.

The input unit 51 receives the operations by the user of the reproducing apparatus 2, and outputs the information indicating the contents of the operations to the control unit 52.

The control unit 52 is configured of a CPU, a ROM, a RAM, and the like, and executes predetermined programs thereby to control the operations of the entire reproducing apparatus 2.

For example, the control unit 52 controls the drive 53, reads the TS recorded in the recording medium A, and outputs it to the reproducing unit 56. Furthermore, the control unit 52 controls and causes the reproducing unit 56 to reproduce the contents.

The drive 53 controls the recording medium A, and reads the data recorded in the recording medium A. The read data is supplied to the control unit 52.

The recording unit 54 is an incorporated recording medium such as HDD or SSD. The recording unit 54 records the data supplied from the control unit 52 therein.

The drive 55 controls the recording medium B, and reads the data recorded in the recording medium B. The read data is supplied to the control unit 52.

The reading buffer 71 in the reproducing unit 56 temporarily stores the TS supplied from the control unit 52.

The separating unit 72 separates the data stored in the reading buffer 71 into the respective TS packets of the XML subtitle data, the video data, and the audio data on the basis of PID of each TS packet configuring the TS.

The separating unit 72 outputs the separated TS packets of the XML subtitle data to the subtitle generation unit 73. Furthermore, the separating unit 72 outputs the TS packets of the video data and the TS packets of the audio data to the video generation unit 74 and the audio generation unit 75, respectively.

The subtitle generation unit 73 collects the TS packets supplied from the separating unit 72 thereby to generate a PES packet. The subtitle generation unit 73 decodes the XML subtitle data included in the PES packet, and outputs a subtitle plane to the display data generation unit 76.

The video generation unit 74 decodes the video data supplied from the separating unit 72, and outputs a video plane to the display data generation unit 76.

The audio generation unit 75 decodes the audio data supplied from the separating unit 72. The audio generation unit 75 outputs the decoded data to the speaker 82, and causes the speaker 82 to output the audio of the contents.

The display data generation unit 76 combines the subtitle plane supplied from the subtitle generation unit 73 and the video plane supplied from the video generation unit 74, and outputs the combined planes as display data to the display unit 81.

The display unit 81 is a display such as LCD or organic EL display. The display unit 81 displays the video of the contents on the basis of the display data supplied from the display data generation unit 76. The subtitle is superimposed on the video of the contents as needed.

The speaker 82 outputs the audio of the contents on the basis of the audio data supplied from the audio generation unit 75.

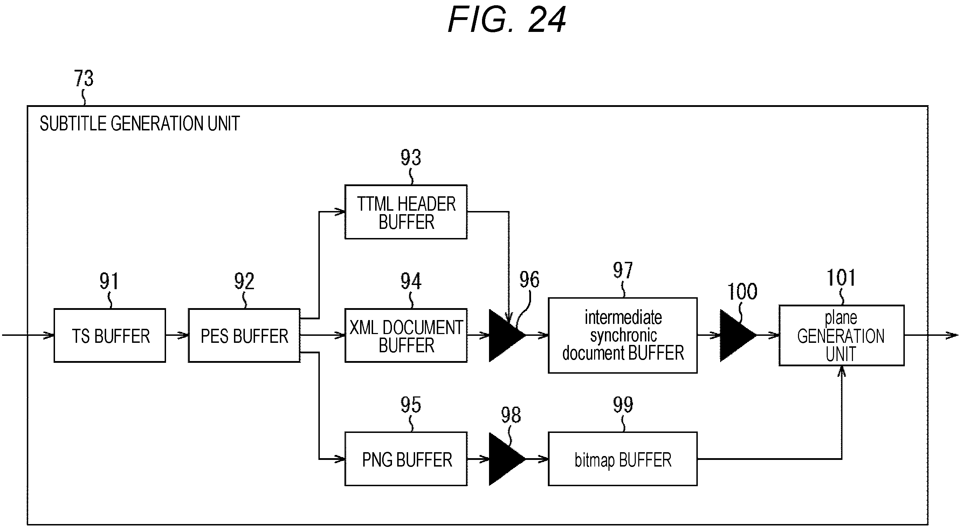

Fig. 24 is a block diagram illustrating an exemplary configuration of the subtitle generation unit 73.

A TS buffer 91 saves the TS packets of the XML subtitle data supplied from the separating unit 72. The control unit 52 collects a plurality of TS packets saved in the TS buffer 91 thereby to generate a PES packet, and outputs the PES packet to a PES buffer 92.

The PES buffer 92 saves the PES packets supplied from the TS buffer 91. The control unit 52 specifies the types of the data stored in the respective PES packets saved in the PES buffer 92 by use of the information such as the PES header and the TTML header. The control unit 52 causes the TTML header to be output to a TTML header buffer 93, and causes the XML document to be output to an XML document buffer 94. Furthermore, the control unit 12 causes the PNG files referred to by the XML document to be output to a PNG buffer 95.

The TTML header buffer 93 saves the TTML header supplied from the PES buffer 92.

The XML document buffer 94 saves the XML document supplied from the PES buffer 92.

The PNG buffer 95 saves the PNG files supplied from the PES buffer 92.

A subtitle decoder 96 analyzes the XML document saved in the XML document buffer 94 and generates an intermediate synchronic document at a display timing of the subtitle. The subtitle decoder 96 outputs the generated intermediate synchronic document to an intermediate synchronic document buffer 97.

The intermediate synchronic document buffer 97 saves the intermediate synchronic documents generated by the subtitle decoder 96. The intermediate synchronic documents saved in the intermediate synchronic document buffer 97 are updated each time an intermediate synchronic document is supplied from the subtitle decoder 96.

A PNG decoder 98 decodes the PNG files saved in the PNG buffer 95, and outputs bitmap data to a bitmap buffer 99.

The bitmap buffer 99 saves the bitmap data supplied from the PNG decoder 98.

An intermediate synchronic document decoder 100 reads and decodes an intermediate synchronic document saved in the intermediate synchronic document buffer 97, and outputs the information indicating the description contents to a plane generation unit 101.

The plane generation unit 101 generates and outputs a subtitle plane on the basis of the information supplied from the intermediate synchronic document decoder 100 and the bitmap data saved in the bitmap buffer 99. The subtitle plane output from the plane generation unit 101 is supplied to the display data generation unit 76 and combined with a video plane.

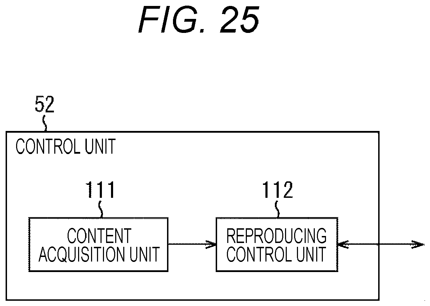

Fig. 25 is a block diagram illustrating an exemplary functional configuration of the reproducing apparatus 2. Predetermined programs are executed by the control unit 52 so that at least some of the components illustrated in Fig. 25 are realized.

A content acquisition unit 111 and a reproducing control unit 112 are realized in the control unit 52.

The content acquisition unit 111, for example, controls the drive 53 thereby to acquire contents in the MPEG-2 TS format to be reproduced. The content acquisition unit 111 outputs the acquired contents to the reproducing control unit 112.

The reproducing control unit 112 outputs the contents acquired by the content acquisition unit 111 to the reproducing unit 56, and causes the reproducing unit 56 to reproduce the contents. The reproducing control unit 112 refers to the information in the TTML header included in the XML subtitle data as needed thereby to control the processings of the subtitle generation unit 73.

### «8. Exemplary operations of recording apparatus and reproducing apparatus»

### <8-1. Operations of recording apparatus>

The operations of the recording apparatus 1 having the above configuration will be described here.

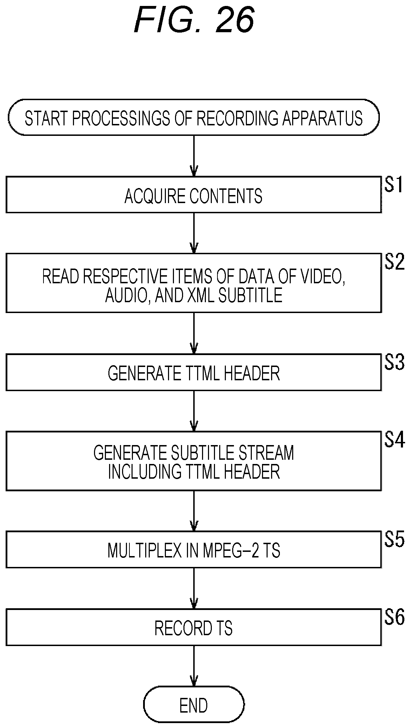

The processings of the recording apparatus 1 for recording contents in the recording medium A (recording medium 3) will be first described with reference to the flowchart of Fig. 26.

In step S1, the content acquisition unit 31 in the control unit 12 acquires contents to be recorded received in the input unit 11.

In step S2, the subtitle reading unit 21, the video reading unit 22, and the audio reading unit 23 in the signal processing unit 16 read the XML subtitle data, the video data, and the audio data from the contents to be recorded, respectively.

In a case where the contents to be recorded are MMT contents, the signal processing unit 16 reads the information used to generate a TTML header out of the information included in the MFU header of MFU or the MPU header of MPU when reading each item of data.

Furthermore, in a case where the contents to be recorded are MP4 contents, the signal processing unit 16 reads the information used to generate a TTML header out of the information included in the MP4 header. The information read by the signal processing unit 16 is acquired by the content acquisition unit 31 and supplied to the TTML header generation unit 32.

In step S3, the TTML header generation unit 32 generates a TTML header by use of the information read in the signal processing unit 16 as needed.

For example, in a case where PES packetization is performed in the first system, the TTML header generation unit 32 generates a TTML header having the syntax of Fig. 13. Furthermore, in a case where the PES packetization is performed in the second system, the TTML header generation unit 32 generates a TTML header having the syntax of Fig. 17.

In step S4, the multiplexing unit 24 generates a subtitle stream on the basis of the XML subtitle data supplied from the subtitle reading unit 21 and the TTML header generated by the TTML header generation unit 32.

In step S5, the multiplexing unit 24 PES-packetizes the subtitle stream in the first system or the second system. Furthermore, the multiplexing unit 24 PES-packetizes the video stream supplied from the video reading unit 22 and the audio stream supplied from the audio reading unit 23, respectively. The multiplexing unit 24 multiplexes the respective TS packets of the XML subtitle data, the video data, and the audio data in the MPEG-2 TS format thereby to generate a TS.

In step S6, the recording control unit 33 causes the TS generated by the multiplexing unit 24 to be recorded in the recording medium A, and terminates the processing.

### <8-2. Operations of reproducing apparatus>

The operations of the reproducing apparatus 2 will be described next.

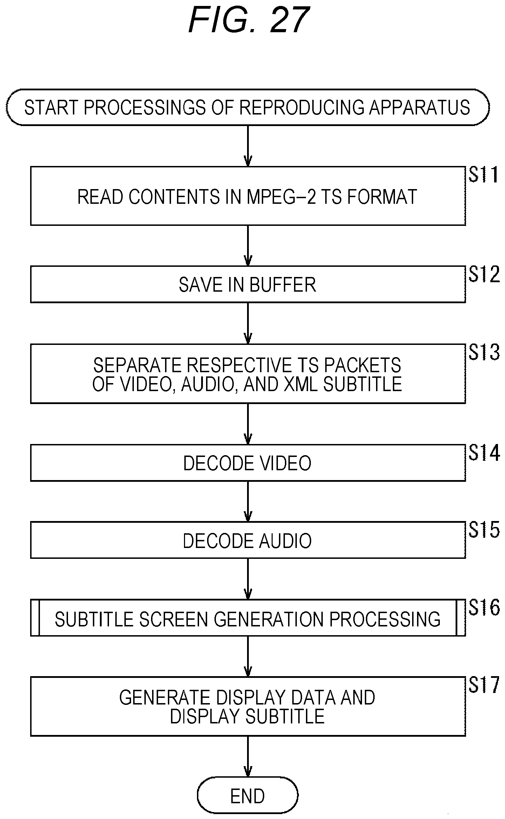

The processings of the reproducing apparatus 2 for reproducing contents will be described with reference to the flowchart of Fig. 27.

The processings of Fig. 27 start when the recording medium A in which contents are recorded by the recording apparatus 1 is mounted on the reproducing apparatus 2 and contents to be reproduced are designated by the user by use of the title list displayed on the display unit 81, for example.

In step S11, the content acquisition unit 111 (Fig. 25) in the control unit 52 controls the drive 53 and reads the contents to be reproduced from the recording medium A. The TS read from the recording medium A is supplied to the reproducing unit 56.

In step S12, the reading buffer 71 in the reproducing unit 56 saves the TS.

In step S13, the separating unit 72 separates the respective TS packets of the XML subtitle data, the video data, and the audio data on the basis of PID of each TS packet configuring the TS.

In step S14, the video generation unit 74 decodes the video data configured of the TS packets supplied from the separating unit 72, and outputs a video plane to the display data generation unit 76.

In step S15, the audio generation unit 75 decodes the audio data configured of the TS packets supplied from the separating unit 72. The audio generation unit 75 outputs the decoded data to the speaker 82, and causes the speaker 82 to output the audio of the contents.

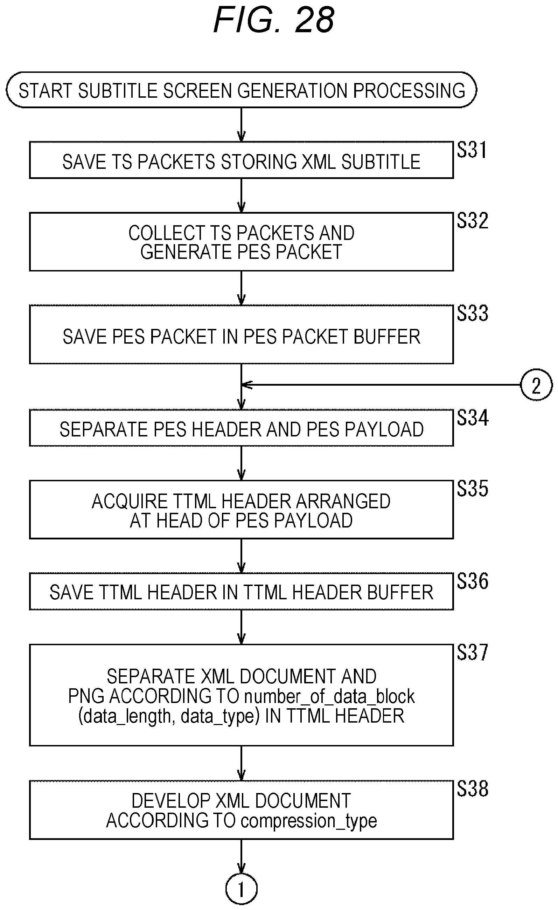

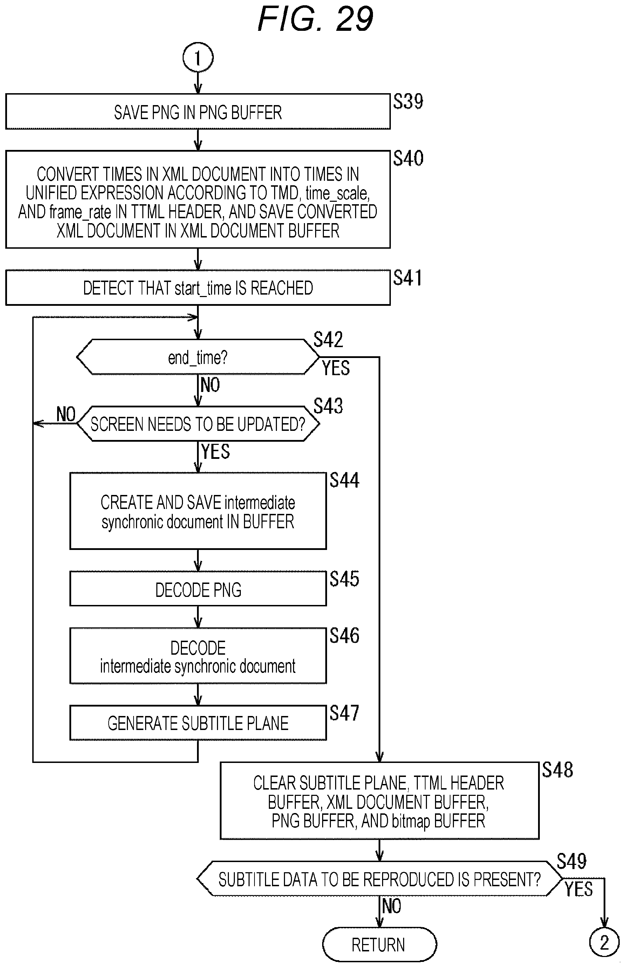

In step S16, the subtitle generation unit 73 performs a subtitle screen generation processing. The subtitle screen generation processing is to reproduce the XML subtitle data. The subtitle screen generation processing will be described below with reference to the flowcharts of Fig. 28 and Fig. 29.

In step S17, the display data generation unit 76 combines the subtitle plane supplied from the subtitle generation unit 73 and the video plane supplied from the video generation unit 74 thereby to generate display data. The display data generation unit 76 causes the video and the subtitle of the contents to be displayed on the display unit 81 on the basis of the display data.

The above processings are repeatedly performed until the contents finish being reproduced. The processings in the respective steps in Fig. 27 including steps S14, S15, and S16 are performed in parallel as needed, or are sequentially performed.

The subtitle screen generation processing performed in step S16 of Fig. 27 will be described next with reference to the flowcharts of Fig. 28 and Fig. 29.

In step S31, the reproducing control unit 112 saves the TS packets of the XML subtitle data separated by the separating unit 72 in the TS buffer 91.

In step S32, the reproducing control unit 112 collects a plurality of TS packets saved in the TS buffer 91 thereby to generate a PES packet.

In step S33, the reproducing control unit 112 outputs the PES packet to the PES buffer 92, and causes the PES buffer 92 to save the PES packet.

In step S34, the reproducing control unit 112 separates the PES header and the PES payload configuring the PES packet. The PES header includes the information indicating the length of the PES header.

In step S35, the reproducing control unit 112 acquires the TTML header arranged at the head of the PES payload.

In a case where PES packetization is performed in the first system, the information arranged at the head of the PES payload is the TTML header. The reproducing control unit 112 specifies and acquires the data with the length indicated by length in the TTML header as the TTML header from the head of the PES payload.

On the other hand, in a case where PES packetization is performed in the second system, the information arranged at the head of the PES payload in the first PES packet is the TTML header. The reproducing control unit 112 specifies and acquires the data with the length indicated by length in the TTML header as the TTML header from the head of the PES payload of the first PES packet.

Note that in a case where PES packetization is performed in the second system, the data with a fixed length may be specified as the TTML header without the use of length in the TTML header.

In step S36, the reproducing control unit 112 outputs the TTML header to the TTML header buffer 93, and causes it to be saved in the TTML header buffer 93.

In step S37, the reproducing control unit 112 separates the XML document and the PNG files according to number_of_data_block in the TTML header.

In a case where PES packetization is performed in the first system, the reproducing control unit 112 separates the XML document and the PNG files with reference to data_length and data_type in the TTML header. In other words, the reproducing control unit 112 specifies that as many data blocks as designated by number_of_data_block are included in the PES payload. Furthermore, the reproducing control unit 112 specifies the length and the type of each data block on the basis of data_length and data_type, and separates the XML document and the PNG files.

On the other hand, in a case where PES packetization is performed in the second system, the reproducing control unit 112 specifies the number obtained by subtracting 1 from the number indicated by number_of_data_block as the number of PNG files referred to by the XML document, or the number of PES packets subsequent to the PES packet including the TTML header. The reproducing control unit 112 specifies and separates the data arranged subsequent to the TTML header in the PES payload of the first PES packet as the XML document. Furthermore, the reproducing control unit 112 specifies and separates the data arranged in the PES payloads of the second and subsequent PES packets as PNG files.

In step S38, the reproducing control unit 112 determines whether or not the separated XML document is compressed according to compression_type in the TTML header. In a case where the separated XML document is compressed, the reproducing control unit 112 develops the XML document according to the type indicated by compression_type.

In step S39, the reproducing control unit 112 outputs the acquired PNG files to the PNG buffer 95, and causes the PNG buffer 95 to save the PNG files. The amount of data of the PNG files can be specified on the basis of the information described in the TTML header or the PES header, and thus the reproducing control unit 112 can previously know the amount of data assigned to the PNG buffer 95.

In step S40, the reproducing control unit 112 converts the times in the XML document into the times in unified expression according to TMD, time_scale, and frame_rate in the TTML header, and causes the XML document with the time expression converted to be saved in the XML document buffer 94.

In a case where the value of TMD is 1111b, the reproducing control unit 112 sets predetermined invalid values for begin and end, for example, and sets the time information of begin and end in the XML document to be ignored.

Furthermore, the reproducing control unit 112 converts the times in the XML document into the times in unified expression according to time_scale and frame_rate.

A plurality of time expressions are permitted in TTML, such as expression using time such as "50ms", expression using tick such as "90000", and expression using timecode such as "00:00:01:12". "hh", "mm", "ss", and "ff" in "hh:mm:ss:ff" as an expression using timecode indicate hour, minute, second, and number of frames, respectively.

In a case where time is expressed by use of tick such as "90000", how many seconds 1tick has needs to be indicated as a prerequisite for the subtitle decoder 96 to understand the times in the XML document.

How many seconds 1tick has may be indicated in the XML document or may not be indicated. For example, if how many seconds 1tick has is not indicated in the XML document in a case where MMT contents are reproduced, it is indicated by the information outside the XML document such as the MFU header or the MPU header, but the information is lost when converting into contents in the MPEG-2 TS format. This is also applicable to MP4 contents.

A prerequisite of how many seconds 1tick has is indicated by time_scale in the TTML header. Thereby, also in a case where how many seconds 1tick has is not indicated in the XML document, the reproducing control unit 112 can understand the times in the XML document.

Furthermore, in a case where time is expressed as "00:00:01:12" by use of timecode, the frame rate needs to be indicated as a prerequisite for the subtitle decoder 96 to understand the times in the XML document.

The frame rate may be indicated in the XML document or may not be indicated. For example, if the frame rate is not indicated in the XML document in a case where MMT contents are reproduced, it is indicated by external information, but the information is lost when converting into contents in the MPEG-2 TS format. This is also applicable to MP4 contents.

The frame rate as a prerequisite is indicated by frame_rate in the TTML header. Thereby, also in a case where the frame rate is not indicated in the XML document, the reproducing control unit 112 can understand the times in the XML document.

For example, the reproducing control unit 112 converts the times in the XML document into the times in unified expression using time such as "50ms".

Furthermore, in a case where the times in the XML document are expressed by use of tick, if how many seconds 1tick has is not indicated but the frame rate is indicated in the XML document, the reproducing control unit 112 converts the times in the XML document into the times in unified expression using timecode.

In a case where the times in the XML document are expressed by use of tick, if how many seconds 1tick has is not indicated in the XML document, the reproducing control unit 112 may add the information indicating how many seconds 1tick has to the XML document on the basis of time_scale.

In a case where the times in the XML document are expressed by use of timecode, if the frame rate is not indicated but how many seconds 1tick has is indicated in the XML document, the reproducing control unit 112 converts the times in the XML document into the times in unified expression using tick.

In a case where the times in the XML document are expressed by use of timecode, if the frame rate is not indicated in the XML document, the reproducing control unit 112 may add the information indicating the frame rate to the XML document on the basis of frame_rate.

The reproducing control unit 112 causes the XML document including the times in expression understandable by the subtitle decoder 96 to be saved in the XML document buffer 94 in this way.

Furthermore, in a case where the frame size assumed for the subtitle is not indicated in the XML document, the reproducing control unit 112 specifies the frame size on the basis of root_container_size in the TTML header, and adds the information indicating the frame size to the XML document.

Here, the frame size assumed for the subtitle may be indicated by the element tts:extent as described in Fig. 4 and the like or may not be indicated in the XML document. For example, in a case where MMT contents are reproduced, if the frame size assumed for the subtitle is not indicated in the XML document, it is indicated by external information, but the information is lost when converting into contents in the MPEG-2 TS format.

In a case where the frame size assumed for the subtitle is not indicated in the XML document, the reproducing control unit 112 can specify the frame size on the basis of root_container_size in the TTML header.

In step S41, the subtitle decoder 96 detects that the time indicated by start_time in the TTML header saved in the TTML header buffer 93, or the start time of the valid period is reached.

The valid period may be indicated by the attributes begin and end as described in Fig. 4 and the like, or may not be indicated in the XML document. For example, in a case where MMT contents are reproduced, if the start time and the end time of the valid period are not indicated in the XML document, they are indicated by external information, but the information is lost when converting into contents in the MPEG-2 TS format.

Also in a case where the start time and the end time of the valid period are not indicated in the XML document, the subtitle decoder 96 can specify the times on the basis of start_time and end_time.

In step S42, the subtitle decoder 96 determines whether or not the time indicated by end_time in the TTML header saved in the TTML header buffer 93 or the end time of the valid period is reached.

In a case where it is determined in step S42 that the end time of the valid period is not reached, the processing proceeds to step S43.

In step S43, the subtitle decoder 96 determines whether or not the timing when the screen needs to be updated is reached on the basis of the description of the XML document.

The XML document includes the times indicating the display timing of each subtitle. When a current time reaches the time indicated in the XML document as a display timing of a subtitle, it is determined that the timing when the screen needs to be updated is reached, and the processing proceeds to step S44. The time expression is converted in step S40, and thus the subtitle decoder 96 can specify the time in the XML document.

In step S44, the subtitle decoder 96 collects the elements for a subtitle at its display timing among the elements in the XML document, and generates an intermediate synchronic document on the basis of the collected elements. The subtitle decoder 96 outputs the generated intermediate synchronic document to the intermediate synchronic document buffer 97, and causes it to be saved in the intermediate synchronic document buffer 97.

In step S45, the PNG decoder 98 decodes the PNG files saved in the PNG buffer 95, and saves the bitmap data in the bitmap buffer 99.

In step S46, the intermediate synchronic document decoder 100 reads and decodes an intermediate synchronic document from the intermediate synchronic document buffer 97, and outputs the information indicating the description contents to the plane generation unit 101.

In step S47, the plane generation unit 101 generates a subtitle plane on the basis of the information supplied from the intermediate synchronic document decoder 100 and the bitmap data saved in the bitmap buffer 99. The subtitle plane generated by the plane generation unit 101 is supplied to the display data generation unit 76 and is used for displaying the contents on the screen (in step S17 of Fig. 27).

After the subtitle plane is generated in step S47, alternatively in a case where it is determined in step S43 that the timing when the screen needs to be updated is not reached, the processing returns to step S42, and its subsequent processings are repeatedly performed.

On the other hand, in a case where it is determined in step S42 that the end time of the valid period is reached, the processing proceeds to step S48.

In step S48, the reproducing control unit 112 clears the subtitle plane generated by the plane generation unit 101, and clears the information stored in the TTML header buffer 93, the XML document buffer 94, the PNG buffer 95, the intermediate synchronic document buffer 97, and the bitmap buffer 99.

In step S49, the reproducing control unit 112 determines whether or not the PES packet of the XML subtitle to be reproduced is in the PES buffer 92, and in a case where it determines that the PES packet is present, the processing returns to step S34, and processings in step S34 and subsequent steps are repeatedly performed.

On the other hand, in a case where it is determined that the PES packet of the XML subtitle to be reproduced is not in the PES buffer 92, the processing returns to step S16 of Fig. 27, and processings in step S16 and subsequent steps are performed.

The reproducing apparatus 2 can reproduce the XML subtitle data included in the contents in the MPEG-2 TS format through the above processings.

It is assumed above that when the XML document is saved in the XML document buffer 94, the processing of converting time expression and the processing of adding the information indicating the frame size assumed for the subtitle are performed on the XML document, but the processings for the information other than the time information may be performed when an intermediate synchronic document is generated.

For example, in a case where the frame size assumed for the subtitle is not indicated in the XML document, the subtitle decoder 96 generates an intermediate synchronic document including the information indicating the frame size on the basis of root_container_size in the TTML header, and causes it to be saved.

### <<9. Exemplary generation of TTML header>>

Generation of a TTML header by the TTML header generation unit 32 will be described.

The respective elementary streams of video, audio, and XML subtitle used for generating contents in the MPEG-2 TS format are input into the recording apparatus 1 via a broadcast wave or network. The elementary streams used for generating contents in the MPEG-2 TS format may be input from the recording medium A mounted on the recording apparatus 1.

Furthermore, the elementary streams used for generating contents in the MPEG-2 TS format may be multiplexed in the MMT format or MP4 format as described above, or may be multiplexed in the MPEG-2 TS format.
The elementary streams may be input into the recording apparatus 1 without being multiplexed.

In a case where the elementary streams multiplexed in the MP4 format are input, the TTML header generation unit 32 collects the necessary information from the MP4 header thereby to generate a TTML header. The MP4 header is a moov box as management information of mdat box, for example. The MP4 file is configured of mdat box storing data, and moov box as management information.

Furthermore, in a case where the elementary streams multiplexed in the MMT format are input, the TTML header generation unit 32 collects the necessary information from the MMT header thereby to generate a TTML header. The MMT header is a MFU header or MPU header, for example.

In a case where the elementary streams multiplexed in the MPEG-2 TS format are input, the TTML header generation unit 32 collects the necessary information from the XML document and the information other than the XML document included in the TS thereby to generate a TTML header.

In a case where the elementary streams are input, the TTML header generation unit 32 collects the necessary information from the XML document and the information included in the elementary streams other than the XML document thereby to generate a TTML header.

Generation of the TTML header of Fig. 13 will be described below per input format. In a case where the TTML header of Fig. 17 is generated, the values of the respective items of information in the TTML header of Fig. 17 are set similarly to the respective corresponding items of information in the TTML header of Fig. 13.

### <9-1. Input in MP4 format>

In this case, the TTML header generation unit 32 sets the respective values of number_of_data_block, data_length, and data_type on the basis of the information acquired from 'subs' box in the MP4 header.

Furthermore, the TTML header generation unit 32 sets the value of time_scale on the basis of the information acquired from mdhd box in the MP4 header. The TTML header generation unit 32 sets the value of frame_rate on the basis of configuration record in mp4 header sample entry. The TTML header generation unit 32 sets the value of start_time on the basis of duration of tfra box and trun box in the MP4 header. The TTML header generation unit 32 sets the value of end_time on the basis of the information acquired from trun box in the MP4 header. The TTML header generation unit 32 sets the value of root_container_size on the basis of width and height of tkhd box.

The TTML header generation unit 32 sets the value of TMD depending on the information input by the user of the recording apparatus 1, and in the absence of user input, sets 0010b (invalid value). An operation by the user of the recording apparatus 1 is detected by the input unit 11, and the information indicating its contents is supplied to the TTML header generation unit 32.

The TTML header generation unit 32 sets the value of compression_type depending on the information input by the user of the recording apparatus 1, and in the absence of user input, sets 0000b (non-compressed).

### <9-2. Input in MMT format>

In this case, the TTML header generation unit 32 sets the respective values of number_of_data_block, data_length, and data_type on the basis of the information acquired from MFU_data_byte().

Furthermore, the TTML header generation unit 32 sets the value of time_scale on the basis of the information acquired from MPU_Extended_Timestamp_Descriptor(). The TTML header generation unit 32 sets the value of frame_rate on the basis of the information acquired from Video_Component_Descriptor(). The TTML header generation unit 32 sets the value of start_time on the basis of mpu_presentation_time, pts_offset, and Timescale. The TTML header generation unit 32 sets the value of end_time on the basis of next start_time. The TTML header generation unit 32 sets the value of root_container_size on the basis of Additional_Arib_Subtitle_Info().

The TTML header generation unit 32 sets the value of TMD by use of the value of TMD of Additional_Arib_Subtitle_Info(). The TTML header generation unit 32 sets the value of compression_type by use of the value of compression_type of Additional_Arib_Subtitle_Info().

### <9-3. Other case>

In this case, the TTML header generation unit 32 sets the respective values of number_of_data_block, data_length, and data_type depending on the information input by the user of the recording apparatus 1. Furthermore, the TTML header generation unit 32 detects the numbers and sizes of the XML documents and PNG files, and sets the values.

Furthermore, the TTML header generation unit 32 sets the respective values of time_scale, frame_rate, start_time, end_time, and root_container_size on the basis of the description in the XML document in a case where the respective values are described in the XML document, and sets the respective values depending on the information input by the user of the recording apparatus 1 in a case where the respective values are not described in the XML document.

The TTML header generation unit 32 sets the value of TMD depending on the information input by the user of the recording apparatus 1, and in the absence of user input, sets 0010b (invalid value).

The TTML header generation unit 32 sets the value of compression_type depending on the information input by the user of the recording apparatus 1, and in the absence of user input, sets 0000b (non-compressed).

### <<10. First variant>>

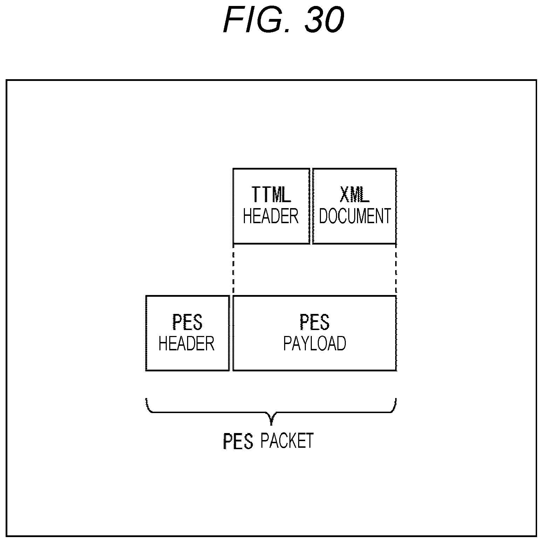

Fig. 30 is a diagram illustrating an exemplary configuration of a PES packet including text subtitle.

As illustrated in Fig. 30, the XML subtitle data of text subtitle is PES-packetized into one PES packet. In the example of Fig. 30, a TTML header is arranged at the head of a PES payload, and a data block of the XML document is arranged next to the TTML header.

In this way, also in a case where the XML subtitle data is text subtitle, it can be PES-packetized similarly to image subtitle, and can be included in contents in the MPEG-2 TS format. In a case where the XML subtitle data is text subtitle, the value of number_of_data_block in the TTML header is always 1.

It is assumed above that contents to be recorded, which are processed by the recording apparatus 1, are in the MMT format or in the MP4 format, but any contents including XML subtitle data may be in any format.

Furthermore, it is assumed above that contents with its format converted are in the MPEG-2 TS format, but a format which does not define the system for multiplexing XML subtitle data may be converted into any format.

The functions of the recording apparatus 1 and the functions of the reproducing apparatus 2 can be realized in one information processing apparatus.

### <<11. Example of storing TTML header in TS packet>>

### <11-1. Exemplary packetization>

It is assumed above that a TTML header is added to XML subtitle data to be PES-packetized and multiplexed on a TS, but a TS packet with a TTML header included in its payload may be generated and may be multiplexed on a TS together with TS packets of XML subtitle data and the like.

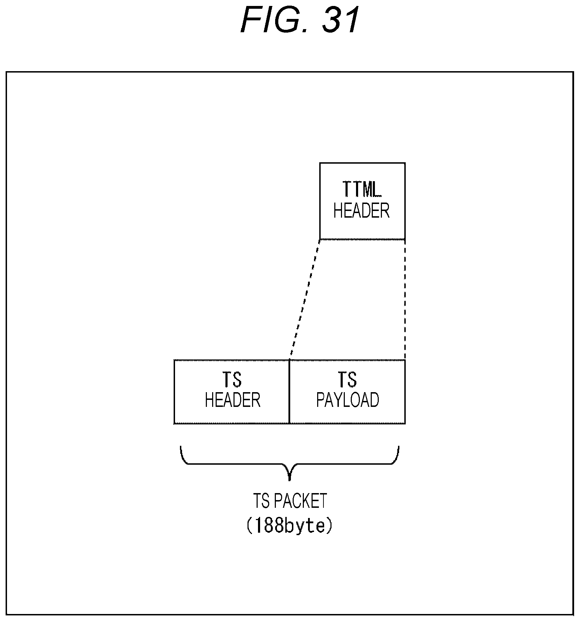

Fig. 31 is a diagram illustrating an exemplary TS packet including a TTML header in its payload.

For example, the bit length of the TTML header including the respective items of information of Fig. 13 is 393 bits, and the entire bit length can be stored in the payload of one TS packet. The payload of the TS packet is 184 bytes.

A TS header with 4 bytes is added to the payload storing the TTML header thereby to generate one TS packet. The respective items of information in the TTML header can be divided and stored in a plurality of TS packets.

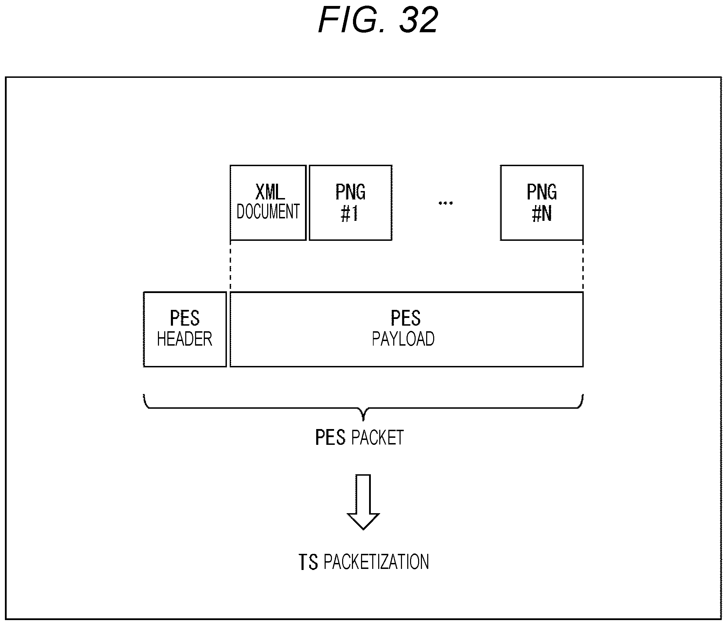

Fig. 32 is a diagram illustrating exemplary packetization of XML subtitle data.

For the XML subtitle data of image subtitle, a TTML header is not included and only the XML document data and the PNG files to be referred to are stored in the PES payload to be PES-packetized unlike in the first system and the second system.

The PES packet illustrated in Fig. 32 has the same configuration as the PES packet described in Fig. 15. A TTML header is not included in the PES payload in the PES packet.

The PES packet storing the XML document and the PNG files in the PES payload is TS-packetized as indicated by the arrow thereby to generate TS packets of the XML subtitle data.

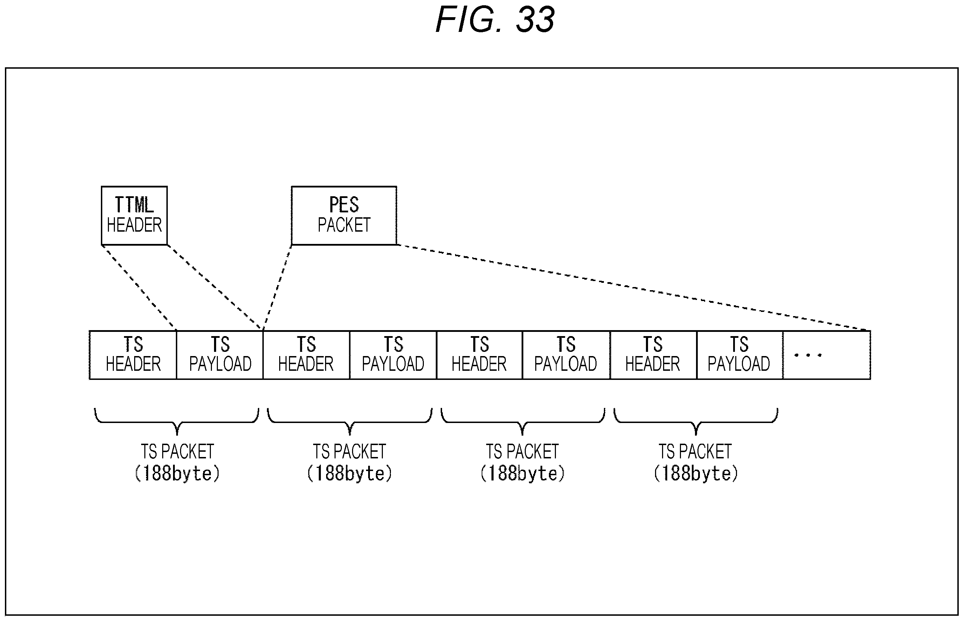

Fig. 33 is a diagram illustrating an exemplary arrangement of TS packets.

As illustrated in Fig. 33, a TS packet including a TTML header is arranged at the head of the arranged TS packets of the XML subtitle data thereby to generate a subtitle stream. The thus-generated subtitle stream is multiplexed in the MPEG-2 TS format together with the video, audio stream, or the like.

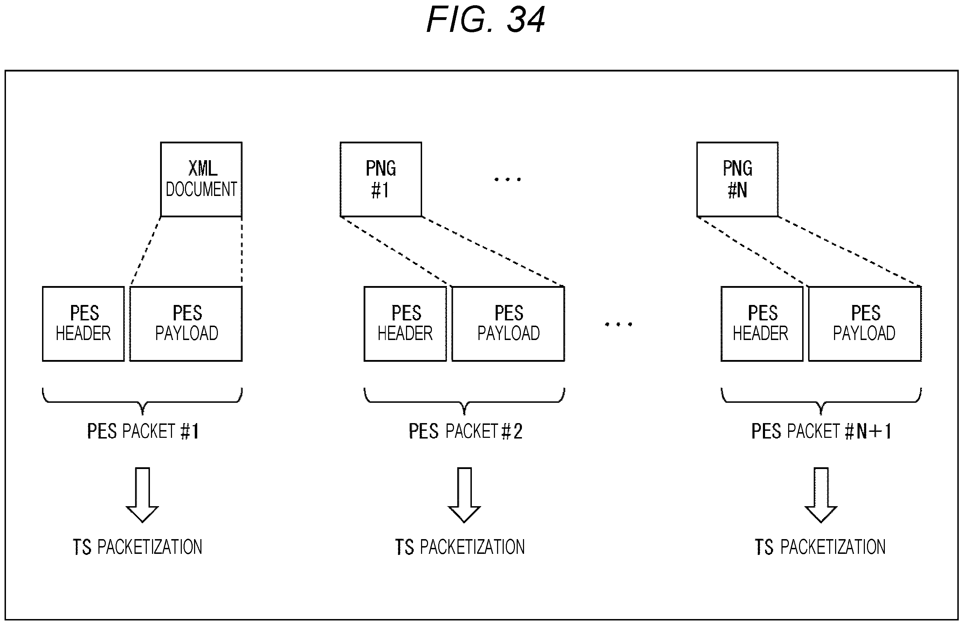

Fig. 34 is a diagram illustrating other exemplary packetization of XML subtitle data.

In the example of Fig. 34, the XML document data is stored in the PES payload in the first PES packet #1. A PES header is added to the PES payload including the XML document thereby to configure the PES packet #1.

Furthermore, the data blocks of the PNG files #1 to #N are arranged in the PES payloads in the PES packet #1 and subsequent PES packets, respectively.

Each PES packet illustrated in Fig. 34 has the same configuration as the PES packet described in Fig. 18. Only the XML document is included and the TTML header is not included in the PES payload in the PES packet #1.

Note that also in a case where the XML subtitle data is not image subtitle but text subtitle, a TTML header is similarly stored in a TS packet. The XML subtitle data of text subtitle is packetized by dividing the PES packet which does not include the TTML header and stores only the XML document in the payload into TS packets.

### <11-2. Exemplary association with type of subtitle >

MMT contents acquired by the recording apparatus 1 may include the XML subtitle data in a plurality of languages such as XML subtitle data in English and XML subtitle data in Japanese as subtitle data of one program, for example.

In this case, a TTML header is prepared per language. For example, the TTML header for English is referred to when the XML subtitle data in English is reproduced, and the TTML header for Japanese is referred to when the XML subtitle data in Japanese is reproduced.

In a case where a TTML header is stored in a TS packet as described above, a TS packet storing a TTML header needs to be associated with a language.

### [First example of association]

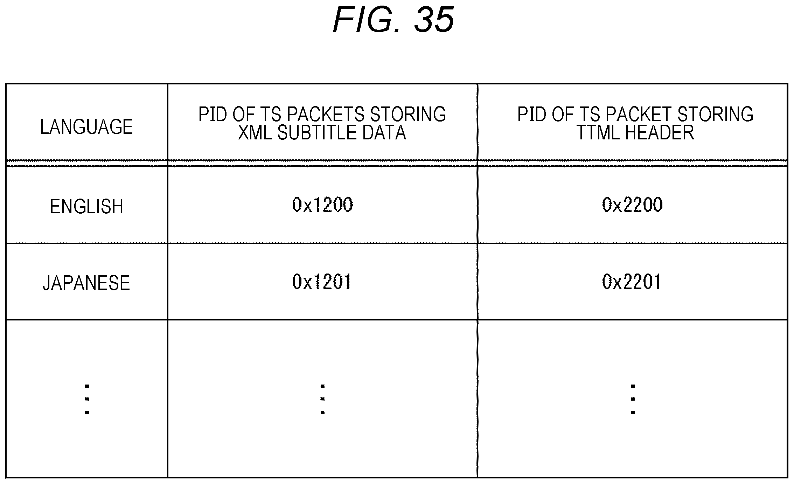

Fig. 35 is a diagram illustrating a first example of association between a TS packet storing a TTML header and a language.

The example of Fig. 35 uses PIDs of the TS packets. For example, a value in which a preset fixed value such as 0×1000 is added to the value of PID of a TS packet of XML subtitle data in a predetermined language is assumed as PID of the TS packet of the TTML header referred to when the XML subtitle data is reproduced.

In the example of Fig. 35, PID of the TS packet of the XML subtitle data in English is 0×1200, and PID of the TS packet of the TTML header referred to when the XML subtitle data in English is reproduced is 0×2200. Furthermore, PID of the TS packet of the XML subtitle data in Japanese is 0×1201, and PID of the TS packet of the TTML header referred to when the XML subtitle data in Japanese is reproduced is 0×2201.

For example, in a case where the subtitle in Japanese is reproduced, the reproducing apparatus 2 collects the TS packets with PID of 0×2200 thereby to acquire the XML subtitle data in Japanese, and acquires the TTML header for Japanese from the TS packet with PID of 0×2201.

### [Second example of association]

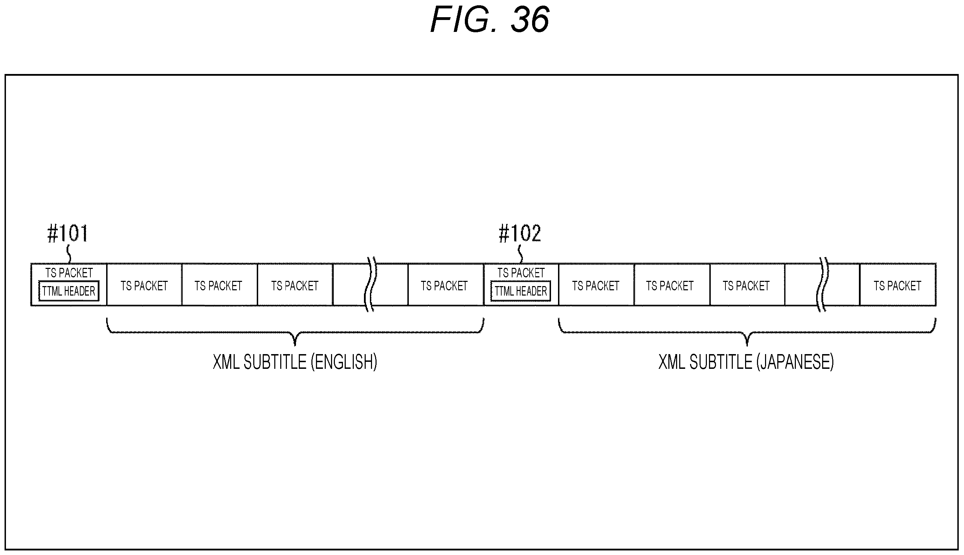

Fig. 36 is a diagram illustrating a second example of association between a TS packet storing a TTML header and a language.

The example of Fig. 36 uses the arrangement positions of TS packets. For example, the TS packet of the TTML header referred to when XML subtitle data is reproduced is arranged at the head of the arranged TS packets of the XML subtitle data in a predetermined language.

In the example of Fig. 36, the TS packet #101 arranged at the head of the arranged TS packets of the XML subtitle data in English is a TS packet storing the TTML header referred to when the XML subtitle data in English is reproduced. Furthermore, the TS packet #102 arranged at the head of the arranged TS packets of the XML subtitle data in Japanese is a TS packet storing the TTML header referred to when the XML subtitle data in Japanese is reproduced.

For example, in a case where the subtitle in Japanese is reproduced, the reproducing apparatus 2 collects the TS packets with predetermined PID thereby to acquire the XML subtitle data in Japanese, and acquires the TTML header for Japanese from the TS packet one packet ahead of the head TS packet storing the XML subtitle data in Japanese.

A TS packet storing a TTML header and a language can be associated in various methods in this way.

### <11-3. Configurations and operations of recording apparatus/reproducing apparatus>

The recording apparatus 1 for storing a TTML header in a TS packet, multiplexing it on a TS, and recording the TS in the recording medium 3, and the reproducing apparatus 2 for reproducing the TS recorded in the recording medium 3 will be described. The same description as the above description will be omitted as needed.

### [Configuration and operations of recording apparatus 1]

The recording apparatus 1 has a similar configuration to the configuration of Fig. 21. The respective components of Fig. 22 are realized in the control unit 12.

The signal processing unit 16 (Fig. 21) is configured of the subtitle reading unit 21, the video reading unit 22, the audio reading unit 23, and the multiplexing unit 24 as described above.

The subtitle reading unit 21 reads the XML subtitle data from the contents supplied from the control unit 12, and outputs it to the multiplexing unit 24.

The video reading unit 22 reads the video data from the contents supplied from the control unit 12, and outputs it to the multiplexing unit 24.

The audio reading unit 23 reads the audio data from the contents supplied from the control unit 12, and outputs it to the multiplexing unit 24.

The multiplexing unit 24 generates a TS packet storing the TTML header generated by the control unit 12. Furthermore, the multiplexing unit 24 PES-packetizes the XML subtitle data supplied from the subtitle reading unit 21 in the system described in Fig. 32 or Fig. 34, and divides the PES packet into TS packets.

The multiplexing unit 24 PES-packetizes the video stream supplied from the video reading unit 22 and the audio stream supplied from the audio reading unit 23, and divides the PES packets into TS packets, respectively.

The multiplexing unit 24 multiplexes the respective TS packets of the TTML header, the XML subtitle, the video, and the audio thereby to generate a TS. The TTML header and the language of the XML subtitle are associated as described in Fig. 35 or Fig. 36.

The contents in the MPEG-2 TS format generated by the multiplexing unit 24 are recorded in the recording medium A by the recording control unit 33 (Fig. 22).

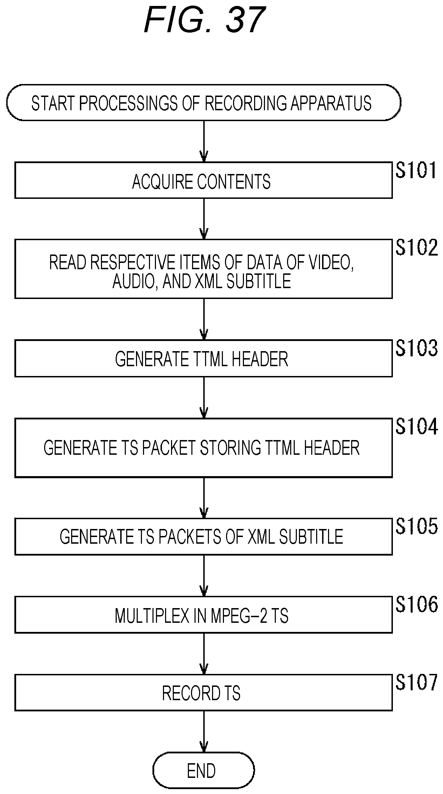

The recording processings of the recording apparatus 1 having the above configuration will be described with reference to the flowchart of Fig. 37.

The processings indicated in Fig. 37 are basically similar to the processings described in the flowchart of Fig. 26 except that a TS packet storing a TTML header is generated.

In other words, in step S101, the content acquisition unit 31 in the control unit 12 acquires contents to be recorded received in the input unit 11.

In step S102, the subtitle reading unit 21, the video reading unit 22, and the audio reading unit 23 in the signal processing unit 16 read the XML subtitle data, the video data, and the audio data from the contents to be recorded, respectively.

At this time, in a case where the contents to be recorded are MMT contents, the information used to generate a TTML header is read from the information included in the MFU header of MFU or the MPU header of MPU. Furthermore, in a case where the contents to be recorded are MP4 contents, the information used to generate a TTML header is read from the information included in the MP4 header.

In step S103, the TTML header generation unit 32 generates a TTML header by use of the information read in the signal processing unit 16 as needed.

In step S104, the multiplexing unit 24 generates a TS packet storing the TTML header generated by the TTML header generation unit 32 in the payload.

In step S105, the multiplexing unit 24 PES-packetizes the XML subtitle data supplied from the subtitle reading unit 21, and divides the PES packet thereby to generate TS packets.

In step S106, the multiplexing unit 24 PES-packetizes the video stream supplied from the video reading unit 22 and the audio stream supplied from the audio reading unit 23, respectively. The multiplexing unit 24 divides the PES packets of the video stream and the audio stream thereby to generate TS packets, respectively, and multiplexes the respective TS packets of the TTML header, the XML subtitle data, the video data, and the audio data in the MPEG-2 TS format.

In step S107, the recording control unit 33 records the TS generated by the multiplexing unit 24 in the recording medium A, and terminates the processing.

### [Configuration and operations of reproducing apparatus 2]

The reproducing apparatus 2 has a similar configuration to the configuration of Fig. 23. The respective components of Fig. 25 are realized in the control unit 52.

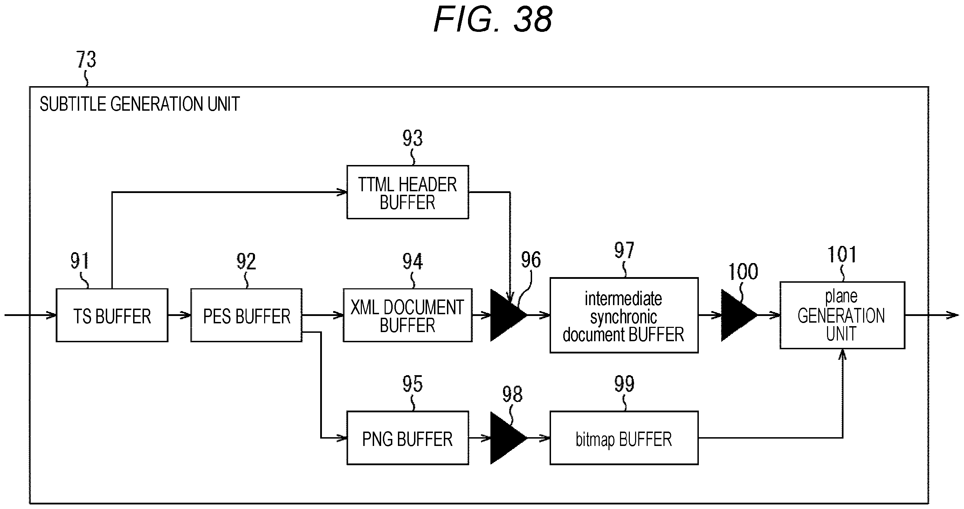

Fig. 38 is a block diagram illustrating an exemplary configuration of the subtitle generation unit 73.

The configuration of the subtitle generation unit 73 illustrated in Fig. 38 is different from the configuration of Fig. 24 in that a TTML header is output from the TS buffer 91 to the TTML header buffer 93 when a TS packet storing the TTML header is recorded in the TS buffer 91.

The reproducing control unit 112 (Fig. 25) in the control unit 52 specifies the TS packet storing the TTML header associated with a language among the TS packets saved in the TS buffer 91 on the basis of PID or the position of the TS packet when reproducing the XML subtitle data in the predetermined language. The reproducing control unit 112 transfers the TTML header stored in the specified TS packet to the TTML header buffer 93, and causes it to be saved in the TTML header buffer 93.

The TTML header saved in the TTML header buffer 93 is referred to by the subtitle decoder 96 and is used to generate an intermediate synchronic document as described above.

The processings basically similar to the processings described in the flowchart of Fig. 27 are performed in the thus-configured reproducing apparatus 2.

In other words, in step S11 of Fig. 27, the content acquisition unit 111 in the control unit 52 controls the drive 53, and reads the contents to be reproduced from the recording medium A.

In step S12, the reading buffer 71 in the reproducing unit 56 saves the TS.

In step S13, the separating unit 72 separates the respective TS packets of the TTML header, the XML subtitle data, the video data, and the audio data on the basis of PID of each TS packet configuring the TS.

In step S14, the video generation unit 74 decodes the video data configured of the TS packets supplied from the separating unit 72.

In step S15, the audio generation unit 75 decodes the audio data configured of the TS packets supplied from the separating unit 72. The audio generation unit 75 outputs the decoded data to the speaker 82, and causes the speaker 82 to output the audio of the contents.

In step S16, the subtitle generation unit 73 performs the subtitle screen generation processing.

In step S17, the display data generation unit 76 combines the subtitle plane supplied from the subtitle generation unit 73 and the video plane supplied from the video generation unit 74 thereby to generate display data. The display data generation unit 76 causes the display unit 81 to display the video and the subtitle of the contents on the basis of the display data, and terminates the processing.

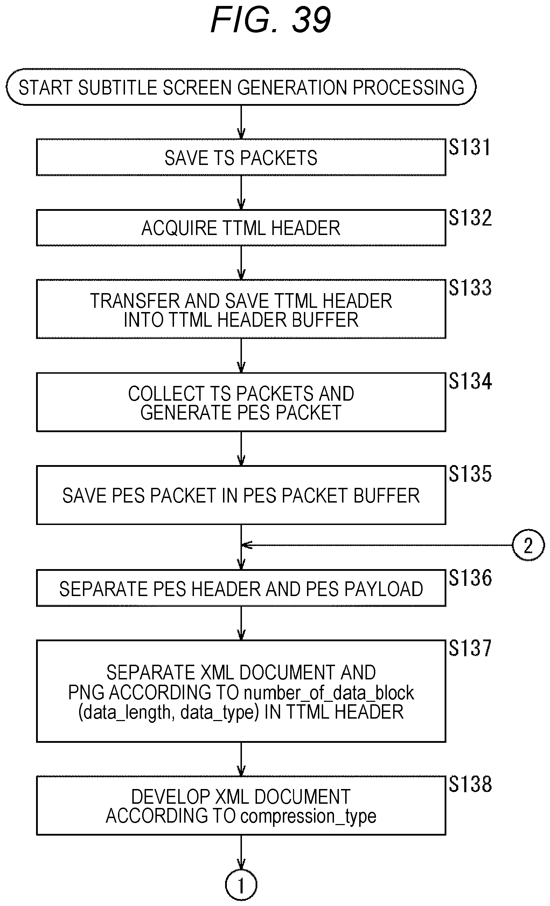

The subtitle screen generation processing performed in step S16 will be described with reference to the flowchart of Fig. 39.

The processings indicated in Fig. 39 are similar to the processings described in Fig. 28 except that the TTML header is not acquired from a PES packet of the XML subtitle data but from a TS packet.

In step S131, the reproducing control unit 112 causes the TS packet of the TTML header and the TS packets of the XML subtitle data separated by the separating unit 72 to be saved in the TS buffer 91.

In step S132, the reproducing control unit 112 reads and acquires the TTML header from the TS packet of the TTML header saved in the TS buffer 91.

In step S133, the reproducing control unit 112 transfers the acquired TTML header to the TTML header buffer 93, and causes it to be saved in the TTML header buffer 93.

In step S134, the reproducing control unit 112 collects a plurality of TS packets of the XML subtitle data saved in the TS buffer 91 thereby to generate a PES packet.

In step S135, the reproducing control unit 112 outputs the PES packet to the PES buffer 92, and causes it to be saved in the PES buffer 92.

In step S136, the reproducing control unit 112 separates the PES header and the PES payload configuring the PES packet.

In step S137, the reproducing control unit 112 separates the XML document and the PNG files stored in the PES payload according to number_of_data_block in the TTML header.

In step S138, the reproducing control unit 112 determines whether or not the separated XML document is compressed according to compression_type in the TTML header. In a case where the XML document is compressed, the reproducing control unit 112 develops the XML document depending on the type indicated by compression_type.

Thereafter, the similar processings to the processings described in the flowchart of Fig. 29 are performed, and the XML subtitle data is decoded.

### <11-4. Third example of association with type of subtitle>

The description will be made assuming that the recording medium 3 in which contents are to be recorded is a Blu-ray (registered trademark) disc (which will be denoted as BD as needed).

As described later in detail, an AV stream including the respective streams of video, audio, and subtitle, which is recorded in a BD, is reproduced by use of at least PlayList and Clip Information recoded in the BD separately from the AV stream. PlayList and Clip Information include the information for reproducing the AV stream.

The information such as PlayList and Clip Information including the information for reproducing the AV stream, which is recorded in the BD separately from the AV stream, will be denoted as Data Base information below as needed.

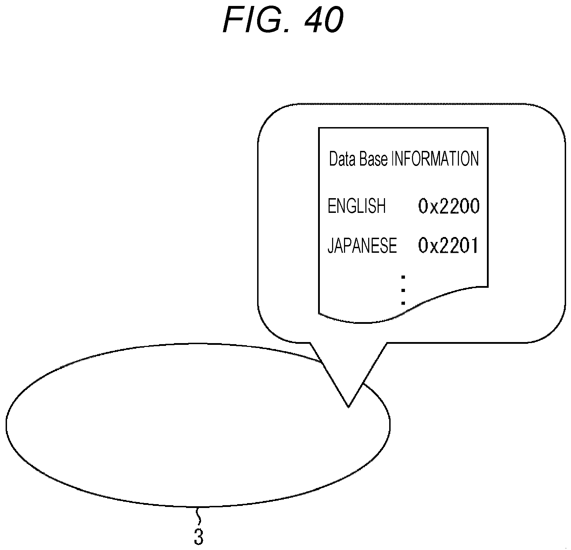

Fig. 40 is a diagram illustrating exemplary Data Base information.

The recording medium 3 of Fig. 40 is a BD, for example. An AV stream including the respective items of XML subtitle data in English and Japanese is recorded in the recording medium 3.

In this case, as illustrated in Fig. 40, the information for designating PIDs of the TS packets storing the TTML headers used to reproduce the respective items of XML subtitle data in English and Japanese is described in the Data Base information recorded in the recording medium 3. In the example of Fig. 40, PID of the TS packet of the TTML header referred to when reproducing the XML subtitle data in English is 0×2200, and PID of the TS packet of the TTML header referred to when reproducing the XML subtitle data in Japanese is 0×2201.

### <11-5. Configurations and operations of recording apparatus/reproducing apparatus>

### [Configuration and operations of recording apparatus 1]

The recording apparatus 1 has a similar configuration to the configuration of Fig. 21 in a case where it associates a TTML header and a language by use of Data Base information.

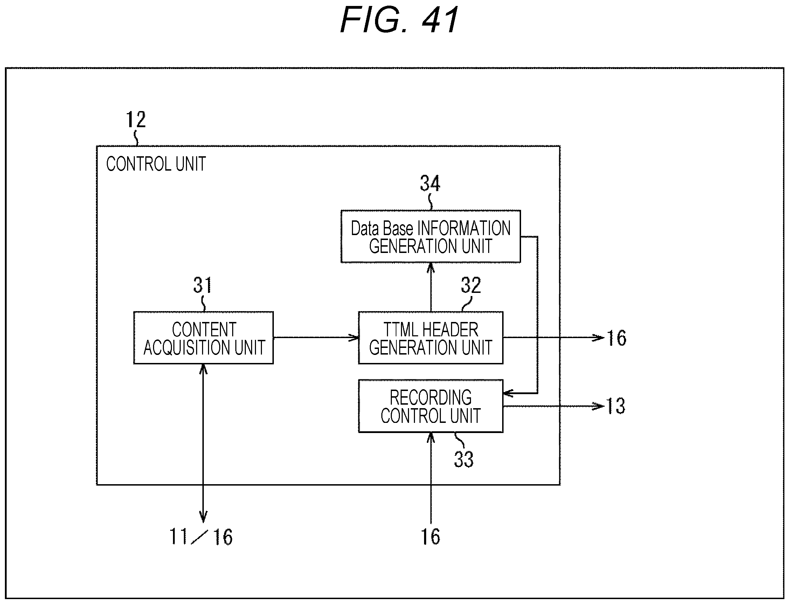

Fig. 41 is a block diagram illustrating an exemplary functional configuration of the recording apparatus 1.

Predetermined programs are executed by the control unit 12 of Fig. 21 so that the components illustrated in Fig. 41 are realized. The configuration of the control unit 12 illustrated in Fig. 41 is the same as the configuration of Fig. 22 except that a Data Base information generation unit 34 is added.

In other words, a TTML header generated by the TTML header generation unit 32 is output to the signal processing unit 16, and is stored in a TS packet. A TS generated by multiplexing the TS packet storing the TTML header together with the TS packets of the XML subtitle data, the TS packets of the video stream, and the TS packets of the audio stream is output from the recording control unit 33 to the drive 13, and is recorded in the BD.

The Data Base information generation unit 34 generates Data Base information describing the information indicating a correspondence between PID of the TS packet storing the TTML header generated by the TTML header generation unit 32 and PID of the TS packets of the XML subtitle data. The Data Base information generation unit 34 outputs the generated Data Base information to the recording control unit 33, and causes it to be recorded in the BD.

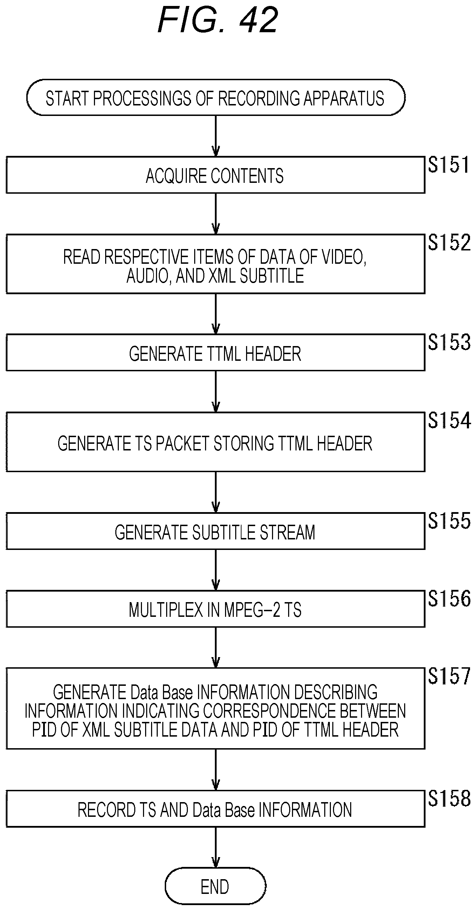

The recording processings of the recording apparatus 1 having the above configuration will be described with reference to the flowchart of Fig. 42.

The processings indicated in Fig. 42 are basically similar to the processings described in the flowchart of Fig. 37 except that the processing of generating Data Base information is added.

In other words, in step S151, the content acquisition unit 31 (Fig. 41) in the control unit 12 acquires contents to be recorded received in the input unit 11.

In step S152, the subtitle reading unit 21, the video reading unit 22, and the audio reading unit 23 in the signal processing unit 16 read the XML subtitle data, the video data, and the audio data from the contents to be recorded, respectively.

In step S153, the TTML header generation unit 32 generates a TTML header by use of the information read in the signal processing unit 16 as needed.

In step S154, the multiplexing unit 24 generates a TS packet storing the TTML header generated by the TTML header generation unit 32.

In step S155, the multiplexing unit 24 PES-packetizes the XML subtitle data supplied from the subtitle reading unit 21 thereby to generate an XML subtitle stream configured of the TS packets into which the PES packet is divided.

In step S156, the multiplexing unit 24 PES-packetizes the video stream supplied from the video reading unit 22 and the audio stream supplied from the audio reading unit 23, respectively. The multiplexing unit 24 divides the PES packets of the video stream and the audio stream thereby to generate TS packets, respectively, and multiplexes the respective TS packets of the TTML header, the XML subtitle data, the video data, and the audio data in the MPEG-2 TS format.

In step S157, the Data Base information generation unit 34 generates Data Base information describing the information indicating a correspondence between PID of the TS packet storing the TTML header generated by the TTML header generation unit 32 and PID of the TS packets of the XML subtitle data. The Data Base information generated here includes various items of information for reproducing the AV stream in addition to the information indicating the correspondence between PIDs.

In step S158, the recording control unit 33 records the TS generated by the multiplexing unit 24 and the Data Base information generated by the Data Base information generation unit 34 in the BD, and terminates the processing.

### [Configuration and operations of reproducing apparatus 2]

On the other hand, the reproducing apparatus 2 has a similar configuration to the configuration of Fig. 23. The configuration of the subtitle generation unit 73 is the same as the configuration of Fig. 38.

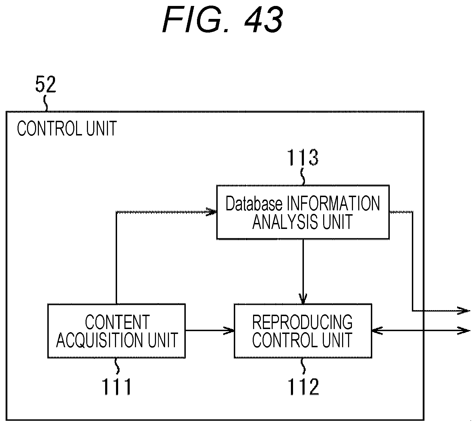

Fig. 43 is a block diagram illustrating an exemplary functional configuration of the reproducing apparatus 2.

Predetermined programs are executed by the control unit 52 of Fig. 23 so that the components illustrated in Fig. 43 are realized. The configuration of the control unit 52 illustrated in Fig. 43 is the same as the configuration of Fig. 25 except that a Data Base information analysis unit 113 is added.

The content acquisition unit 111, for example, controls the drive 53 thereby to acquire the contents in the MPEG-2 TS format to be reproduced from the BD, and outputs the contents to the reproducing control unit 112. Furthermore, the content acquisition unit 111 acquires the Data Base information from the BD, and outputs it to the Data Base information analysis unit 113.

The reproducing control unit 112 outputs the contents acquired by the content acquisition unit 111 to the reproducing unit 56, and causes them to be reproduced by the reproducing unit 56. The reproducing control unit 112 refers to the information of the TTML header included in the XML subtitle data and controls the processings by the subtitle generation unit 73.

The Data Base information analysis unit 113 analyzes the Data Base information, and outputs the information for reproducing the AV stream to the reproducing control unit 112. The AV stream is reproduced by the reproducing control unit 112 according to the information supplied from the Data Base information analysis unit 113.

Furthermore, the Data Base information analysis unit 113 analyzes the Data Base information thereby to specify a correspondence between PID of the TS packet storing the TTML header and PID of the TS packets of the XML subtitle data. The Data Base information analysis unit 113 outputs PID of the TS packet storing the TTML header and PID of the TS packets of the XML subtitle data to the reproducing control unit 112, and causes the reproducing control unit 112 to reproduce the XML subtitle.

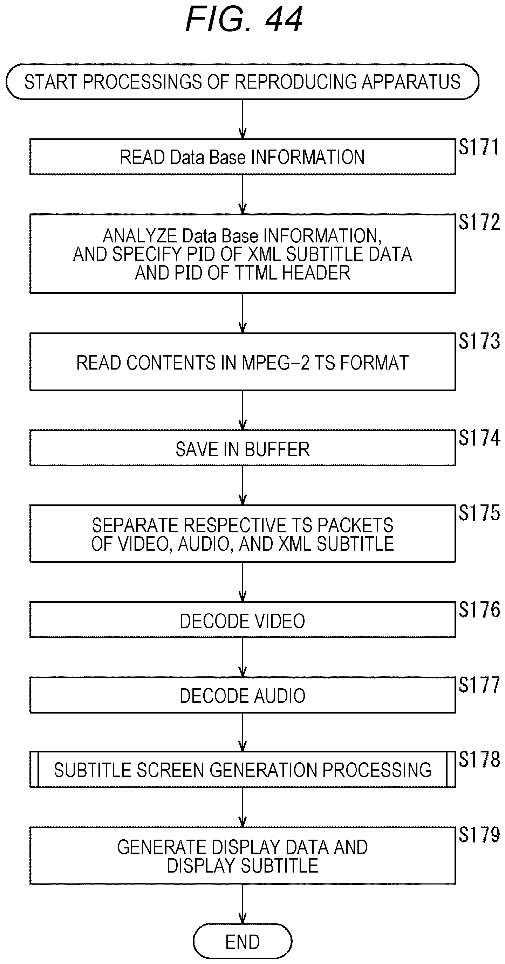

The processings of the reproducing apparatus 2 for reproducing contents will be described with reference to the flowchart of Fig. 44.

In step S171, the content acquisition unit 111 reads and acquires the Data Base information from the BD, and outputs it to the Data Base information analysis unit 113.

In step S172, the Data Base information analysis unit 113 analyzes the Data Base information, and specifies a correspondence between PID of the TS packet storing the TTML header and PID of the TS packets of the XML subtitle data.

The subsequent processings are similar to the processings from step S11 of Fig. 27. In step S173, the content acquisition unit 111 reads the contents to be reproduced from the BD.

In step S174, the reading buffer 71 in the reproducing unit 56 saves the TS.

In step S175, the separating unit 72 separates the respective TS packets of the TTML header, the XML subtitle data, the video data, and the audio data on the basis of PID of each TS packet configuring the TS. The TS packet of the TTML header and the TS packets of the XML subtitle data are separated by use of PIDs specified by analyzing the Data Base information as needed.

In step S176, the video generation unit 74 decodes the video data configured of the TS packets supplied from the separating unit 72, and outputs a video plane to the display data generation unit 76.

In step S177, the audio generation unit 75 decodes the audio data configured of the TS packets supplied from the separating unit 72.

In step S178, the subtitle generation unit 73 performs the subtitle screen generation processing. The subtitle screen generation processing performed here is similar to the processing described in Fig. 39.

In step S179, the display data generation unit 76 combines the subtitle plane supplied from the subtitle generation unit 73 and the video plane supplied from the video generation unit 74 thereby to generate display data. The display data generation unit 76 causes the video and the subtitle of the contents to be displayed on the display unit 81 on the basis of the display data.

The correspondence between the TS packet of the TTML header and the TS packets of the XML subtitle data can be defined by the Data Base information as described above.

### <11-6. Exemplary packetization>

A TTML header is assumed to be stored in a TS packet, but may be stored in a PES packet.

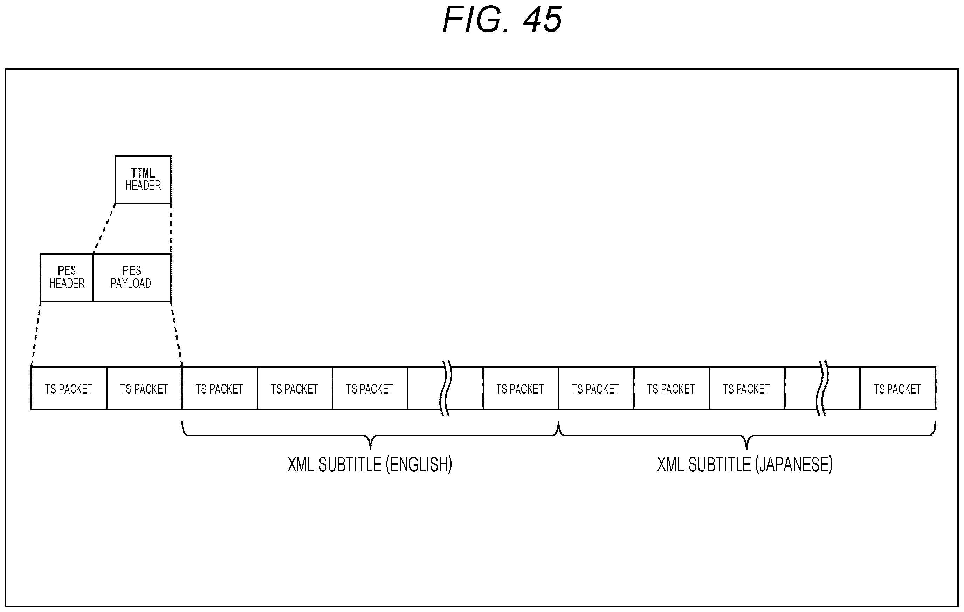

Fig. 45 is a diagram illustrating exemplary packetization of a TTML header.

In the example of Fig. 45, one PES packet storing a TTML header in the payload is generated and the PES packet is divided thereby to generate TS packets. The TS packets generated by dividing the PES packet are arranged ahead of the TS packets of the XML subtitle data in English and the TS packets of the XML subtitle data in Japanese thereby to configure an XML subtitle stream.

In a case where the TTML header is stored in the PES packet in this way, a language and the TTML header are associated on the basis of at least either PTS or DTS set in the PES packet. The PES packet has two timestamps such as decoding time stamp (DTS) and presentation time stamp (PTS).

In a case where a plurality of PES packets storing a TTML header are present, the reproducing apparatus 2 acquires a PES packet with the timestamps matching with the timestamps of the PES packet of the XML subtitle data to be reproduced among the plurality of PES packets, for example. The reproducing apparatus 2 reproduces the XML subtitle data by use of the TTML header stored in the acquired PES packet.

### <<12. Example of describing TTML header in Data Base information>>

In a case where the recording medium 3 is a BD, a TTML header may be described in Data Base information.

In other words, the above example assumes that a TTML header is stored in a TS packet and the information indicating association between the TTML header and a language is described in Data Base information, but a TTML header itself is described in Data Base information in this example.

### <12-1. BD format>

A format of a BD will be described here.

### [Management structure of data]

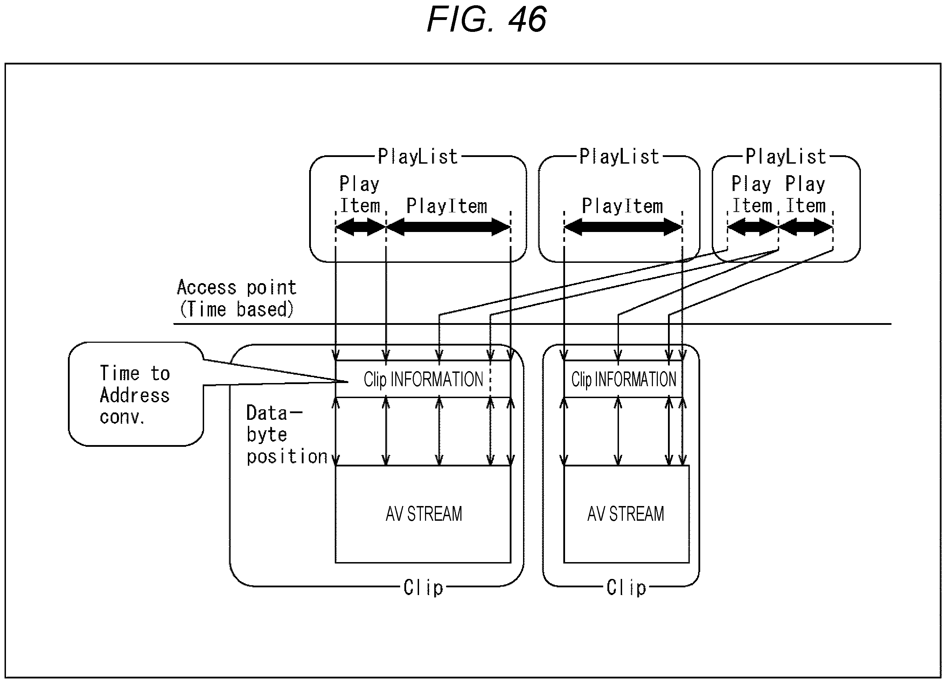

Fig. 46 is a diagram illustrating an exemplary management structure of an AV stream in a BD-RE format.

An AV stream is managed by use of two layers PlayList and Clip. An AV stream may be recorded in a local storage in the reproducing apparatus 2, not only in a BD.

A pair of AV stream and Clip Information associated therewith is managed as one object. A pair of AV stream and Clip Information is denoted as Clip.

The AV stream is developed on the time axis, and an access point of each Clip is mainly designated in PlayList by the timestamps. Clip Information is used for finding an address to start decoding in the AV stream, for example.

PlayList is a collection of reproduction periods of the AV stream. One reproduction period in the AV stream is denoted as PlayItem. PlayItem is indicated as a pair of IN point and OUT point of the reproduction period on the time axis. As illustrated in Fig. 46, PlayList is configured of one or more PlayItems.

The first PlayList from the left in Fig. 46 is configured of two PlayItems, and the first half and the second half of the AV stream included in the left Clip are referred to by the two PlayItems, respectively.

The second PlayList from the left is configured of one PlayItem, and the entire AV stream included in the right Clip is referred to by the PlayItem.

The third PlayList from the left is configured of two PlayItems, and part of the AV stream include in the left Clip and part of the AV stream included in the right Clip are referred to by the two PlayItems, respectively.

For example, in a case where the left PlayItem included in the First PlayList from the left, which is to be reproduced, is designated by the program, the first half of the AV stream included in the left Clip referred to by the PlayItem is reproduced. In this way, PlayList is used as reproduction management information for managing reproduction of the AV stream.

A reproduction path created by an arrangement of one or more PlayItems in PlayList is denoted as Main Path. Furthermore, a reproduction path created by an arrangement of one or more SubPlayItems in PlayList in parallel with Main Path is denoted as Sub Path.

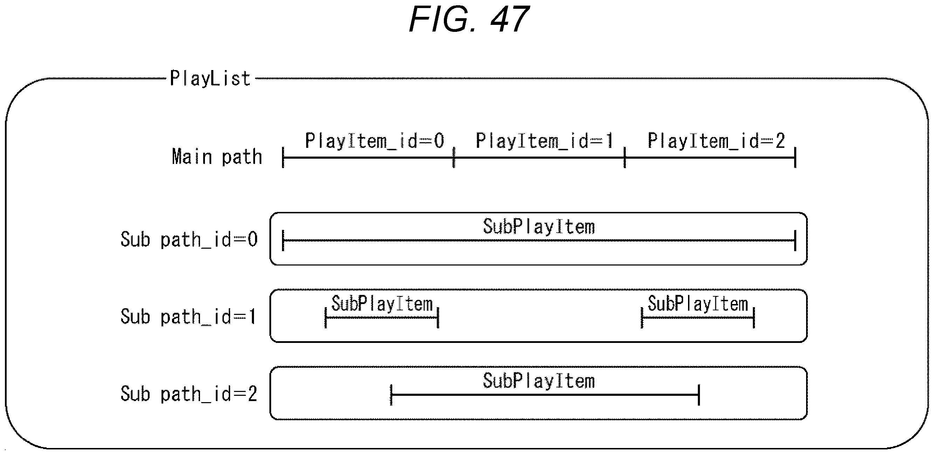

Fig. 47 is a diagram illustrating the structures of Main Path and Sub Paths.

PlayList has one Main Path and one or more Sub Paths. PlayList of Fig. 47 has one Main Path configured of three arranged PlayItems, and three Sub Paths.

PlayItems configuring the Main Path are sequentially set with IDs from the head, respectively. The Sub Paths are also set with the IDs of Subpath_id=0, Subpath_id=1, and Subpath_id=2 from the head, respectively.

In the example of Fig. 47, the Sub Path with Subpath_id=0 includes one SubPlayItem, and the Sub Path with Subpath_id=1 includes two SubPlayItems. Furthermore, the Sub Path with Subpath_id=2 includes one SubPlayItem.

The AV stream referred to by one PlayItem includes at least a video stream (main image data). The AV stream may include an audio stream reproduced at the same timing (in synchronization) with the video stream included in the AV stream.

The AV stream may include a presentation graphic (PG) stream reproduced in synchronization with the video stream included in the AV stream. The XML subtitle stream described above is recorded as a PG stream in the BD.

The AV stream can include an interactive graphic (IG) stream reproduced in synchronization with the video stream included in the AV stream file. The IG stream is used to display graphics of buttons and the like operated by the user.

The AV stream referred to by one PlayItem is multiplexed with the video stream, the audio stream reproduced in synchronization therewith, the PG stream (the XML subtitle stream), and the IG stream.

Furthermore, one SubPlayItem refers to the video stream, the audio stream, the PG stream, and the like, which are different from the AV stream referred to by PlayItems.

The AV stream is reproduced by use of PlayList and Clip Information as Data Base information in this way.

### [Directory structure]

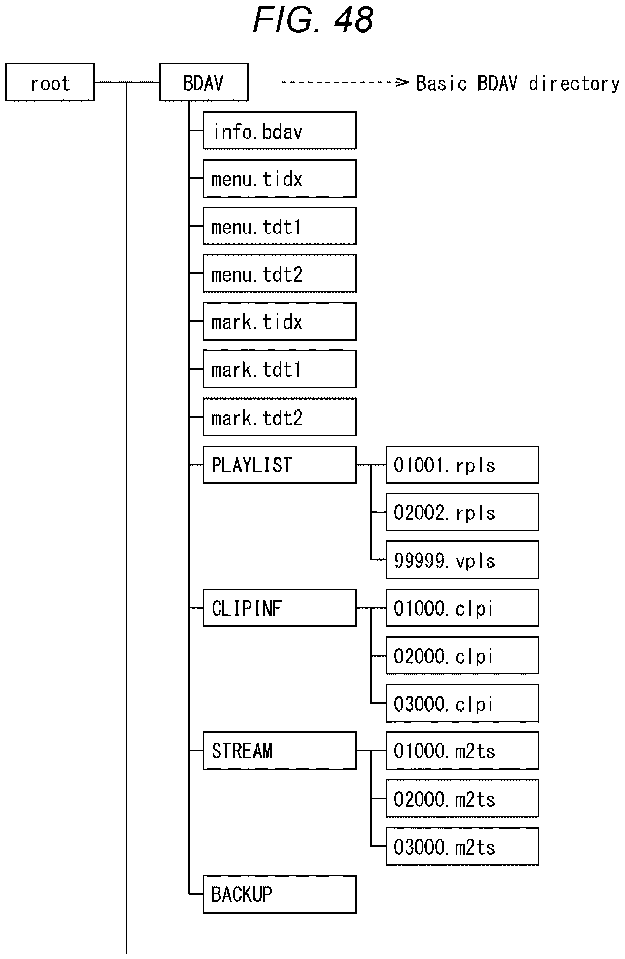

Fig. 48 is a diagram illustrating an exemplary management structure of files recorded in the BD.

The respective files recorded in the BD are managed in a directory structure in a hierarchy manner. One root directory is created in the BD.

A BDAV directory is arranged under the root directory.

A PLAYLIST directory, a CLIPINF directory, a STREAM directory, and the like are provided under the BDAV directory.

The PLAYLIST directory stores PlayList files describing PlayList therein. Each PlayList file is set with the name in combination of 5-digit number and extension ".rpls".

The CLIPINF directory stores Clip Information files therein. Each Clip Information file is set with the name in combination of 5-digit number and extension ".clpi". The three Clip Information files of Fig. 47 are set with the file names "01000.clpi", "02000.clpi", and "03000.clpi", respectively.

The STREAM directory stores stream files therein. Each stream file is set with the name in combination of 5-digit number and extension "m2ts". The three stream files of Fig. 47 are set with the file names "01000.m2ts", "02000.m2ts", and "03000.m2ts", respectively.

A Clip Information file and a stream file, which are set with the file names of the same 5-digit number, configure one Clip. The Clip Information file with "01000.clpi" is used when the stream file with "01000.m2ts" is reproduced, and the Clip Information file with "02000.clpi" is used when the stream file with "02000.m2ts" is reproduced.

The TTML header used to reproduce the XML subtitle data included in the AV stream is described in a Clip Information file, for example.

### [Syntax of file]

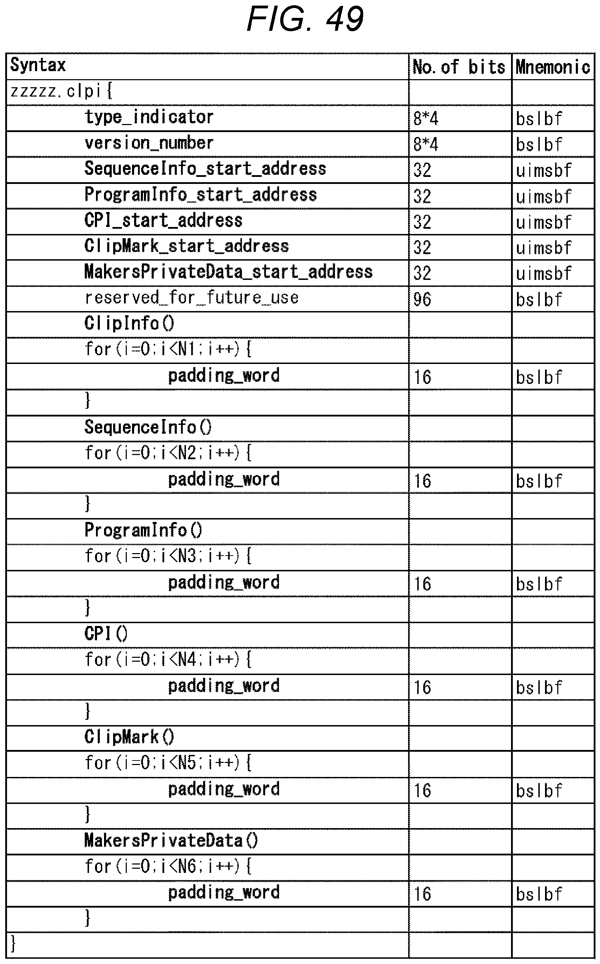

Fig. 49 is a diagram illustrating a syntax of a Clip Information file.

A Clip Information file is stored in the CLIPINF directory of Fig. 48, and is set with the extension ".clpi".

The information indicating the type of the AV stream configuring Clip, the information indicating the recording rate of the AV stream, and the like are stored in ClipInfo().

The information indicating the position on the time axis of the source packet configuring the AV stream, the information indicating the display time, and the like are included in SequenceInfo().

PID of the AV stream configuring Clip, the information for encoding each stream multiplexed on the AV stream, and the like are included in ProgramInfo().

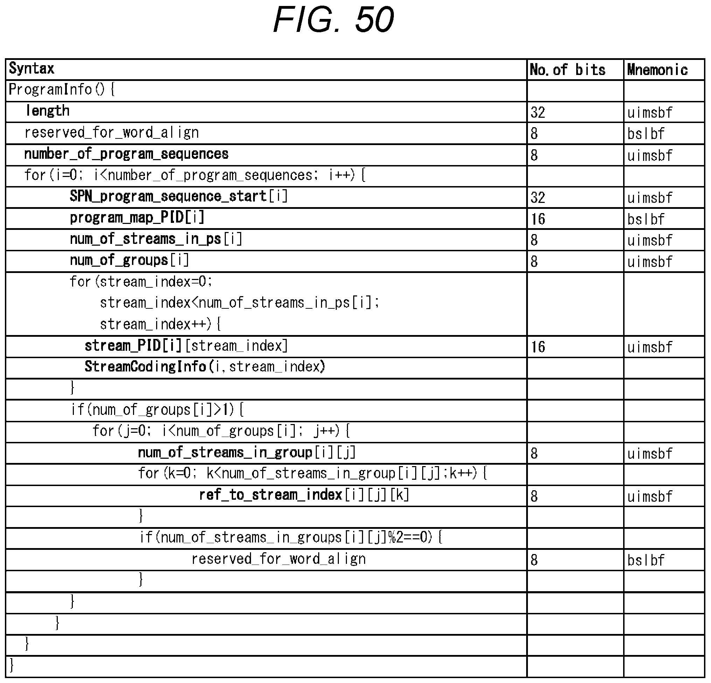

Fig. 50 is a diagram illustrating a syntax of ProgramInfo() of Fig. 49.

number_of_program_sequences indicates the number of program sequences described in ProgramInfo(). A program sequence is configured of an arrangement of source packets configuring the program.

As many items of information subsequent to number_of_program_sequences as indicated by number_of_program_sequences are repeated. SPN_program_sequence_start indicates a number of the head source packet of a program sequence (source packet number). num_of_streams_in_ps indicates the number of elementary streams configuring a programs sequence.

stream_PID and StreamCodingInfo are described per elementary stream configuring one program sequence.

stream_PID indicates PID of an elementary stream.

StreamCodingInfo includes the information for encoding an elementary stream.

For example, stream_PID and StreamCodingInfo are subsequently described for the video stream, the audio stream, and the XML subtitle stream which are multiplexed on the AV stream, respectively.

For example, StreamCodingInfo of the video stream is described subsequent to stream_PID of the video stream, and StreamCodingInfo of the audio stream is described subsequent to stream_PID of the audio stream. Furthermore, StreamCodingInfo of the XML subtitle stream is described subsequent to stream_PID of the XML subtitle stream.

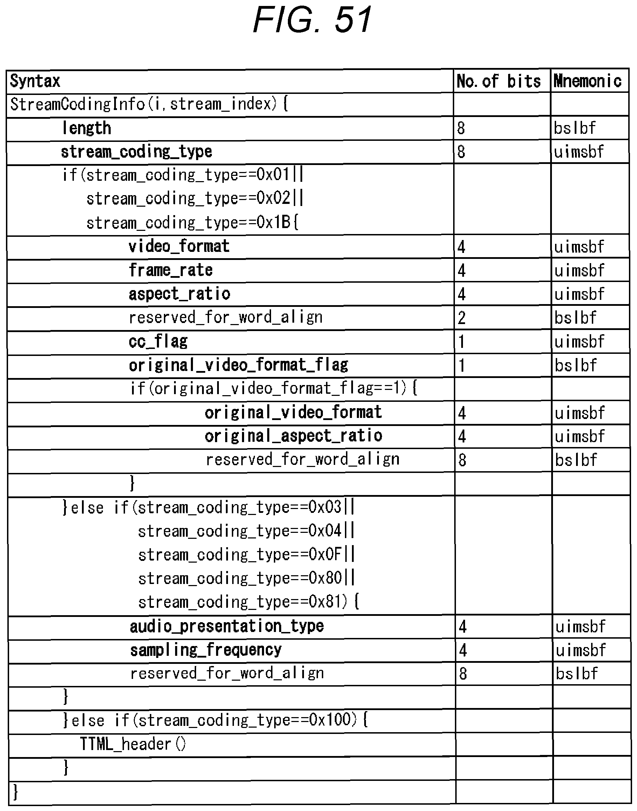

Fig. 51 is a diagram illustrating a syntax of StreamCodingInfo of Fig. 50.

stream_coding_type indicates an elementary stream encoding system.

For example, stream_coding_type with a value of 0×01 indicates that elementary stream is a MPEG-1 video stream. StreamCodingInfo set with a value of stream_coding_type of 0×01 includes the information for encoding the MPEG-1 video stream.

The information such as video_format, frame_rate, and aspect_ratio is described as information regarding the MPEG-1 video stream subsequent to stream_coding_type.

video_format indicates a scanning system such as 1080i or 1080p. frame_rate indicates a frame rate. aspect_ratio indicates an aspect ratio.

The description for the video stream is included in StreamCodingInfo subsequent to stream_PID of the video stream.

Furthermore, for example, stream_coding_type with a value of 0×03 indicates that elementary stream is a MPEG-1 audio stream. StreamCodingInfo set with a value of stream_coding_type of 0×03 includes the information for encoding the MPEG-1 audio stream.

The information such as audio_presentation_type and sampling_frequency is described as information regarding the MPEG-1 audio stream subsequent to stream_coding_type.

audio_presentation_type indicates an output channel such as stereo or multi-channel. sampling_frequency indicates a sampling frequency.

The description for the audio stream is included in StreamCodingInfo subsequent to stream_PID of the audio stream.

As illustrated in the lower part of Fig. 51, for example, stream_coding_type with a value of 0×100 indicates that elementary stream is an XML subtitle stream. StreamCodingInfo set with a value of stream_coding_type of 0×100 includes the information for encoding the XML subtitle stream.

TTML_header() (TTML header) is described in StreamCodingInfo set with a value of stream_coding_type of 0×100. The contents of TTML_header() are the same as described in Fig. 13 or Fig. 17.

In this way, the TTML header can be described in StreamCodingInfo subsequent to stream_PID of the XML subtitle stream. Note that the syntax of Clip Information describing the TTML header in StreamCodingInfo is a new syntax.

When the XML subtitle data is reproduced, the Clip Information file as Data Base information is analyzed, and the TTML header is extracted from the Clip Information file.

Note that TTML headers corresponding to a plurality of languages, respectively, may be described in StreamCodingInfo.

### <12-2. Configurations and operations of recording apparatus/reproducing apparatus>

### [Configuration and operations of recording apparatus 1]

The recording apparatus 1 has a similar configuration to the configuration of Fig. 21. Predetermined programs are executed so that the respective units of Fig. 41 are realized in the control unit 12.

The TTML header generation unit 32 in the control unit 12 outputs a TTML header generated on the basis of the information supplied from the content acquisition unit 31 to the Data Base information generation unit 34.

The Data Base information generation unit 34 generates PlayList, and generates Clip Information by describing the TTML header supplied from the TTML header generation unit 32 in StreamCodingInfo of ProgramInfo(), for example. The Data Base information generation unit 34 outputs the generated PlayList file and Clip Information file to the recording control unit 33, and causes them to be recorded in the BD.

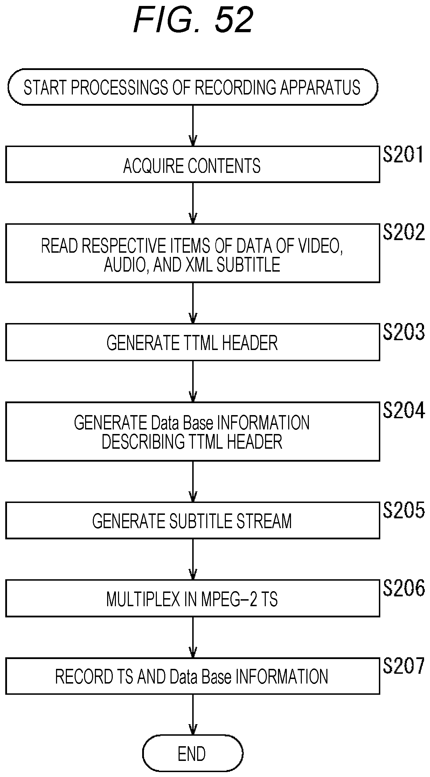

The recording processings of the recording apparatus 1 will be described with reference to the flowchart of Fig. 52.

In step S201, the content acquisition unit 31 in the control unit 12 acquires contents to be recorded received in the input unit 11.

In step S202, the subtitle reading unit 21, the video reading unit 22, and the audio reading unit 23 in the signal processing unit 16 read the XML subtitle data, the video data, and the audio data from the contents to be recorded, respectively.

In step S203, the TTML header generation unit 32 generates a TTML header by use of the information read in the signal processing unit 16 as needed.

In step S204, the Data Base information generation unit 34 generates PlayList, and generates Clip Information by describing the TTML header generated by the TTML header generation unit 32 in StreamCodingInfo of ProgramInfo(), for example.

In step S205, the multiplexing unit 24 PES-packetizes the XML subtitle data supplied from the subtitle reading unit 21, and divides the PES packet into TS packets thereby to generate an XML subtitle stream.

In step S206, the multiplexing unit 24 PES-packetizes the video stream supplied from the video reading unit 22 and the audio stream supplied from the audio reading unit 23, respectively. The multiplexing unit 24 divides the PES packets of the video stream and the audio stream thereby to generate the TS packets, respectively, and multiplexes the respective TS packets of the XML subtitle data, the video data, and the audio data in the MPEG-2 TS format.

In step S208, the recording control unit 33 records the TS generated by the multiplexing unit 24 and the Data Base information generated by the Data Base information generation unit 34 in the BD, and terminates the processing.

### [Configuration and operations of reproducing apparatus 2]

On the other hand, the reproducing apparatus 2 has a similar configuration to the configuration of Fig. 23. The respective components of Fig. 43 are realized in the control unit 52.

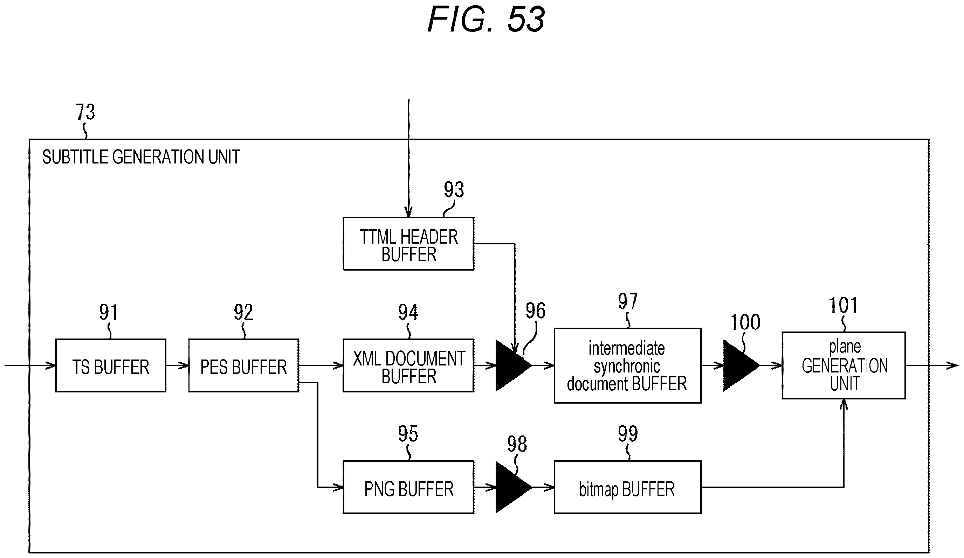

Fig. 53 is a block diagram illustrating an exemplary configuration of the subtitle generation unit 73.

The configuration of the subtitle generation unit 73 illustrated in Fig. 53 is different from the configuration of Fig. 38 and the like in that a TTML header is written in the TTML header buffer 93 by the control unit 52. In other words, the TS packets of the XML subtitle data supplied from the separating unit 72 are saved and the TTML header provided by use of the Data Base information is not saved in the TS buffer 91.

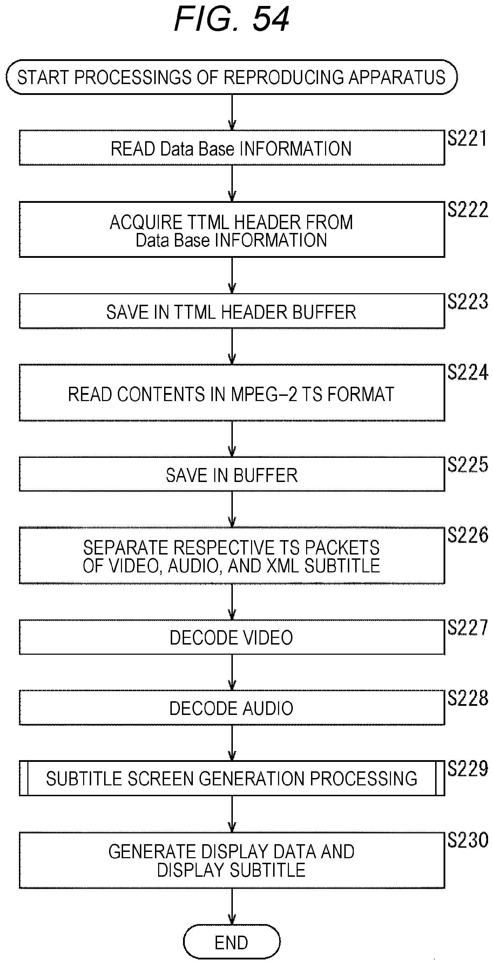

The processings of the reproducing apparatus 2 for reproducing contents will be described with reference to the flowchart of Fig. 54.

In step S221, the content acquisition unit 111 reads the Data Base information from the BD. The content acquisition unit 111 outputs a PlayList file and a Clip Information file acquired as Data Base information to the Data Base information analysis unit 113.

In step S222, the Data Base information analysis unit 113 analyzes Clip Information, and acquires the TTML header described in StreamCodingInfo of ProgramInfo().

In step S223, the Data Base information analysis unit 113 writes and saves the TTML header in the TTML header buffer 93. The subsequent processings are similar to the processings from step S11 of Fig. 27. In step S224, the content acquisition unit 111 reads an AV stream of the contents to be reproduced from the BD.

In step S225, the reading buffer 71 in the reproducing unit 56 saves the TS.

In step S226, the separating unit 72 separates the respective TS packets of the XML subtitle data, the video data, and the audio data on the basis of PID of each TS packet configuring the TS.

In step S227, the video generation unit 74 decodes the video data configured of the TS packets supplied from the separating unit 72, and outputs a video plane to the display data generation unit 76.

In step S228, the audio generation unit 75 decodes the audio data configured of the TS packets supplied from the separating unit 72.

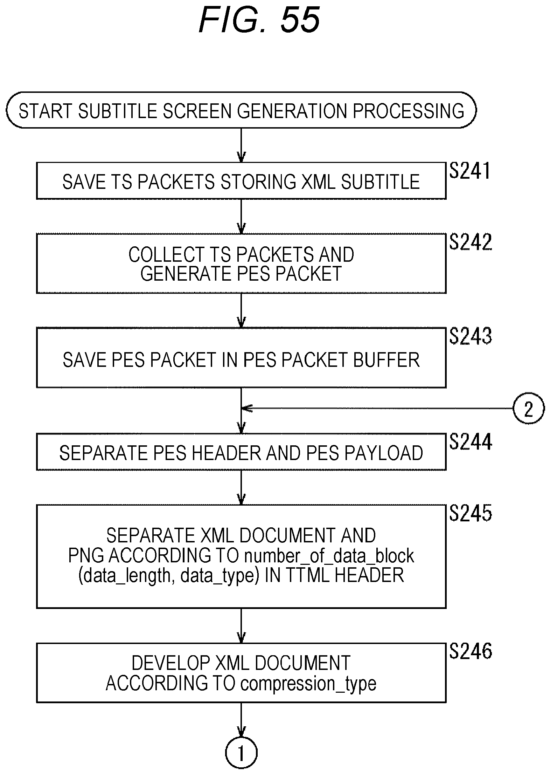

In step S229, the subtitle generation unit 73 performs the subtitle screen generation processing. The subtitle screen generation processing will be described below with reference to Fig. 55.

In step S230, the display data generation unit 76 combines the subtitle plane supplied from the subtitle generation unit 73 and the video plane supplied from the video generation unit 74 thereby to generate display data. The display data generation unit 76 causes the video and the subtitle of the contents to be displayed on the display unit 81 on the basis of the display data. The above processings are repeatedly performed while the contents are being reproduced.

The subtitle screen generation processing performed in step S229 will be described here with reference to the flowchart of Fig. 55.

The processings indicated in Fig. 55 are similar to the processings described in Fig. 28 except that the processing of saving a TTML header in the TS buffer 91 is not performed.

In other words, in step S241, the reproducing control unit 112 causes the TS packets of the XML subtitle data separated by the separating unit 72 to be saved in the TS buffer 91.

In step S242, the reproducing control unit 112 collects a plurality of TS packets of the XML subtitle data saved in the TS buffer 91 thereby to generate a PES packet.

In step S243, the reproducing control unit 112 outputs the PES packet to the PES buffer 92, and causes it to be saved in the PES buffer 92.

In step S244, the reproducing control unit 112 separates the PES header and the PES payload configuring the PES packet.

In step S245, the reproducing control unit 112 separates the XML document and the PNG files stored in the PES payload according to number_of_data_block in the TTML header written in the TTML header buffer 93 by the Data Base information analysis unit 113. As described above, in step S223 of Fig. 54, the TTML header extracted from the Data Base information is written in the TTML header buffer 93.

In step S246, the reproducing control unit 112 determines whether or not the separated XML document is compressed according to compression_type in the TTML header. In a case where the XML document is compressed, the reproducing control unit 112 develops the XML document depending on the type indicated by compression_type.

Thereafter, the similar processings to the processings described in the flowchart of Fig. 29 are performed, and the XML subtitle data is decoded.

In this way, the TTML header can be described in the Data Base information in the BD. For example, in a case where the XML subtitle data is image subtitle and many PNG files are present, the TTML header may not be housed in one TS packet. The TTML header is included in the Data Base information, and thus the information for reproducing each PNG file can be described in the TTML header even in a case where many PNG files are present.

Additionally, note that the TTML header is described in StreamCodingInfo of ProgramInfo() in Clip Information in the above but may be described in other region in Clip Information. Furthermore, the TTML header may be described in a predetermined region in PlayList as Data Base information.

Furthermore, the description has been made above assuming that the recording medium 3 is a BD, but the recording medium 3 may be for SeeQVault (registered trademark) for recording Data Base information separately from an AV stream similarly to BD. SeeQVault is a standard provided by Next Generation Secure Memory Initiative (NSM) as a standardizing body.

Contents recorded by an electronic device for SeeQVault in a recording medium for SeeQVault can be reproduced in another electronic device for SeeQVault to which the recording medium is connected. In this case, the recording apparatus 1 and the reproducing apparatus 2 are electronic devices for SeeQVault, respectively.

### <<13. Second variant>>

### <Exemplary configuration of computer>

A series of processings described above may be performed in hardware or may be performed in software.
In a case where the processings are performed in software, the programs configuring the software are installed in a computer incorporated in dedicated hardware, a general-purpose personal computer, or the like from a program recording medium.

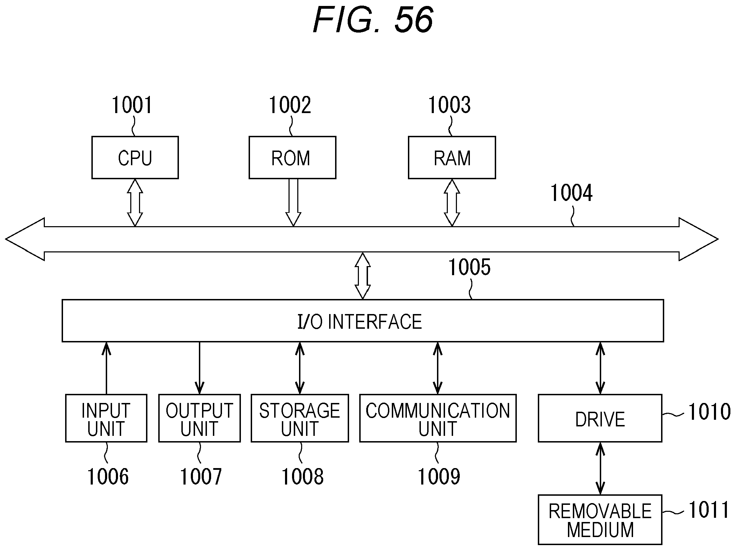

Fig. 56 is a block diagram illustrating an exemplary hardware configuration of a computer for performing the processings by the programs.

A CPU 1001, a ROM 1002, and a RAM 1003 are mutually connected via a bus 1004.

The bus 1004 is further connected with an I/O interface 1005. The I/O interface 1005 is connected with an input unit 1006 configured of a keyboard, a mouse, or the like, and an output unit 1007 configured of a display, a speaker, or the like. Furthermore, the I/O interface 1005 is connected with a storage unit 1008 configured of a hard disc, a nonvolatile memory, or the like, a communication unit 1009 configured of a network interface or the like, and a drive 1010 for driving a removable medium 1011.

In the thus-configured computer, the CPU 1001 loads and executes the programs stored in the storage unit 1008 into the RAM 1003 via the I/O interface 1005 and the bus 1004 thereby to perform the processings, for example.

The programs executed by the CPU 1001 are recorded in the removable medium 1011, for example, or provided via a wired or wireless transmission medium such as local area network, Internet or digital broadcasting to be installed in the storage unit 1008.

Note that the programs executed by the computer may be programs by which the processings are performed in time series in the order described in the present specification, or may be programs by which the processings are performed in parallel or at necessary timings such as on calling.

Note that in the present specification, a system means a collection of components (such as apparatuses or modules (parts)), and all the components may be or may not be in the same casing. Accordingly, both of a plurality of apparatuses housed in separated casings and connected via a network, and one apparatus in which a plurality of modules are housed in one casing are a system.

Embodiments of the present technology are not limited to the above embodiments, and may be variously modified.

For example, the present technology can take a Cloud computing configuration in which one function is distributed and cooperatively processed in a plurality of apparatuses via a network.

Furthermore, each step described in the above flowcharts may be performed in one apparatus or may be distributed and performed in a plurality of apparatuses.

Moreover, in a case where a plurality of processings are included in one step, the plurality of processings included in the step may be performed in one apparatus or may be distributed and performed in a plurality of apparatuses.

### REFERENCE SIGNS LIST

- 1: Recording apparatus
- 2: Reproducing apparatus
- 24: Multiplexing unit
- 31: Content acquisition unit
- 32: TTML header generation unit
- 33: Recording control unit
- 72: Separating unit
- 73: Subtitle generation unit
- 91: TS buffer
- 92: PES buffer
- 93: TTML header buffer
- 94: XML document buffer
- 95: PNG buffer
- 96: Subtitle decoder
- 97: Intermediate synchronic document buffer
- 98: PNG decoder
- 99: Bitmap buffer
- 100: Intermediate synchronic document decoder
- 101: Plane generation unit
- 111: Content acquisition unit
- 112: Reproducing control unit

## Claims

1. An information processing apparatus comprising:
an acquisition unit (31) configured to acquire contents in a first format including at least video data, subtitle data described in XML, and information for reproducing the subtitle data in synchronization with the video data, the first format being the MPEG Media Transport, MMT, format or MP4 format, the subtitle data including an XML document for displaying subtitles by use of image data, and the image data referred to in the XML document;
a generation unit (32) configured to generate auxiliary information for reproducing the subtitle data in synchronization with the video data when reproducing the contents in a second format, the second format being the MPEG-2 TS format, the auxiliary information including separation information used to separate the auxiliary information, the XML document, and the respective items of image data, the separation information including information indicating length of the auxiliary information, and information indicating number of the items of image data referred to in the XML document; and
a multiplexing unit (24) configured to add the auxiliary data to the subtitle data to generate subtitle data including the auxiliary information, and to packetize and multiplex the video data, and the subtitle data including the auxiliary information to generate contents in the second format,
wherein the multiplexing unit (24) is configured to generate, as packets of the subtitle data, a first packet and second packets subsequent to the first packet, a payload of the first packet including the auxiliary information and the XML document, and a payload of each second packet including a respective one of the items of image data referred to in the XML document.

2. The information processing apparatus according to claim 1,
wherein the generation unit (32) generates the auxiliary information including at least any of information regarding a time expression format in the XML document, information regarding a frame rate assumed by the XML document, information regarding start time and end time of the subtitles using the XML document, information regarding a frame assumed by the XML document, information indicating whether or not to ignore time described in the XML document when reproducing the subtitle data, and information indicating type of compression subjected to the XML document.

3. An information processing method comprising steps of:
acquiring contents in a first format including at least video data, subtitle data described in XML, and information for reproducing the subtitle data in synchronization with the video data, the first format being the MPEG Media Transport, MMT, format or MP4 format, the subtitle data including an XML document for displaying subtitles by use of image data, and the image data referred to in the XML document;
generating auxiliary information for reproducing the subtitle data in synchronization with the video data when reproducing the contents in a second format, the second format being the MPEG-2 TS format, the auxiliary information including separation information used to separate the auxiliary information, the XML document, and the respective items of image data, the separation information including information indicating length of the auxiliary information, and information indicating number of the items of image data referred to in the XML document;
adding the auxiliary data to the subtitle data to generate subtitle data including the auxiliary information; and
packetizing and multiplexing the video data, and the subtitle data including the auxiliary information to generate contents in the second format,
wherein, as packets of the subtitle data, a first packet and second packets subsequent to the first packet are generated, a payload of the first packet including the auxiliary information and the XML document, and a payload of each second packet including a respective one of the items of image data referred to in the XML document.

4. A program for causing a computer to perform processings including steps of:
acquiring contents in a first format including at least video data, subtitle data described in XML, and information for reproducing the subtitle data in synchronization with the video data, the first format being the MPEG Media Transport, MMT, format or MP4 format, the subtitle data including an XML document for displaying subtitles by use of image data, and the image data referred to in the XML document;
generating auxiliary information for reproducing the subtitle data in synchronization with the video data when reproducing the contents in a second format, the second format being the MPEG-2 TS format, the auxiliary information including separation information used to separate the auxiliary information, the XML document, and the respective items of image data, the separation information including information indicating length of the auxiliary information, and information indicating number of the items of image data referred to in the XML document;
adding the auxiliary data to the subtitle data to generate subtitle data including the auxiliary information; and
packetizing and multiplexing the video data, and the subtitle data including the auxiliary information to generate contents in the second format,
wherein, as packets of the subtitle data, a first packet and second packets subsequent to the first packet are generated, a payload of the first packet including the auxiliary information and the XML document, and a payload of each second packet including a respective one of the items of image data referred to in the XML document.

5. An information processing apparatus comprising:
an acquisition unit configured to acquire contents in a second format, the contents including at least video data and subtitle data described in XML, the second format being the MPEG-2 TS format, the subtitle data including an XML document for displaying subtitles by use of image data, the image data referred to in the XML document, and auxiliary information for reproducing the subtitle data in synchronization with the video data when reproducing the contents in a second format, the auxiliary information including separation information used to separate the auxiliary information, the XML document, and the respective items of image data, the separation information including information indicating length of the auxiliary information, and information indicating number of the items of image data referred to in the XML document;
a separating unit configured to separate the video data and the subtitle data;
a video reproducing unit configured to reproduce the video data;
a subtitle reproducing unit configured to separate, from the subtitle data, the auxiliary information for reproducing the subtitle data in synchronization with the video data when reproducing the contents in the second format, and to reproduce the subtitle data with reference to the auxiliary information; and
a display control unit configured to display video and subtitles of the contents in the second format,
wherein the subtitle reproducing unit is configured, on the basis of the separation information, to separate the auxiliary information and the XML document from a first packet including the auxiliary information and the XML document in its payload, and to separate the image data from second packets subsequent to the first packet, each second packet including a respective one of the items of image data referred to in the XML document in its payload.

6. An information processing method comprising steps of:
acquiring contents in a second format, the contents including at least video data and subtitle data described in XML, the second format being the MPEG-2 TS format, the subtitle data including an XML document for displaying subtitles by use of image data, the image data referred to in the XML document, and auxiliary information for reproducing the subtitle data in synchronization with the video data when reproducing the contents in a second format, the auxiliary information including separation information used to separate the auxiliary information, the XML document, and the respective items of image data, the separation information including information indicating length of the auxiliary information, and information indicating number of the items of image data referred to in the XML document;
separating the video data and the subtitle data;
reproducing the video data;
separating, from the subtitle data, the auxiliary information for reproducing the subtitle data in synchronization with the video data when reproducing the contents in the second format;
reproducing the subtitle data with reference to the auxiliary information; and
displaying video and subtitles of the contents in the second format,
wherein, on the basis of the separation information, the auxiliary information and the XML document is separated from a first packet including the auxiliary information and the XML document in its payload, and the image data is separated from second packets subsequent to the first packet, each second packet including a respective one of the items of image data referred to in the XML document in its payload.

7. A program for causing a computer to perform processings including steps of:
acquiring contents in a second format, the contents including at least video data and subtitle data described in XML, the second format being the MPEG-2 TS format, the subtitle data including an XML document for displaying subtitles by use of image data, the image data referred to in the XML document, and auxiliary information for reproducing the subtitle data in synchronization with the video data when reproducing the contents in a second format, the auxiliary information including separation information used to separate the auxiliary information, the XML document, and the respective items of image data, the separation information including information indicating length of the auxiliary information, and information indicating number of the items of image data referred to in the XML document;
separating the video data and the subtitle data;
reproducing the video data;
separating, from the subtitle data, the auxiliary information for reproducing the subtitle data in synchronization with the video data when reproducing the contents in the second format;
reproducing the subtitle data with reference to the auxiliary information; and
displaying video and subtitles of the contents in the second format,
wherein, on the basis of the separation information, the auxiliary information and the XML document is separated from a first packet including the auxiliary information and the XML document in its payload, and the image data is separated from second packets subsequent to the first packet, each second packet including a respective one of the items of image data referred to in the XML document in its payload.

## Patentansprüche

1. Informationsverarbeitungsvorrichtung, umfassend:
eine Erfassungseinheit (31), die dazu eingerichtet ist, Inhalte in einem ersten Format zu erfassen, das mindestens Videodaten, in XML beschriebene Untertiteldaten und Informationen zum Wiedergeben der Untertiteldaten in Synchronisation mit den Videodaten enthält, wobei das erste Format das MPEG Media Transport-, MMT-, Format oder das MP4-Format ist, die Untertiteldaten ein XML-Dokument zum Anzeigen von Untertiteln unter Verwendung von Bilddaten enthalten und die Bilddaten in dem XML-Dokument referenziert werden;
eine Erzeugungseinheit (32), die dazu eingerichtet ist, Zusatzinformationen zum Wiedergeben der Untertiteldaten in Synchronisation mit den Videodaten zu erzeugen, wenn die Inhalte in einem zweiten Format wiedergegeben werden, wobei das zweite Format das MPEG-2 TS-Format ist, wobei die Zusatzinformationen Trenninformationen enthalten, die dazu verwendet werden, die Zusatzinformationen, das XML-Dokument und die jeweiligen Elemente der Bilddaten zu trennen, wobei die Trenninformationen Informationen, die die Länge der Zusatzinformationen angeben, und Informationen enthalten, die die Anzahl der Elemente der Bilddaten angeben, die in dem XML-Dokument referenziert werden; und
eine Multiplexeinheit (24), die dazu eingerichtet ist, die Zusatzdaten den Untertiteldaten hinzuzufügen, um die Zusatzinformationen enthaltende Untertiteldaten zu erzeugen, und die Videodaten und die die Zusatzinformationen enthaltenden Untertiteldaten paketiert und multiplext, um Inhalte im zweiten Format zu erzeugen,
wobei die Multiplexeinheit (24) dazu eingerichtet ist, als Pakete der Untertiteldaten ein erstes Paket und auf das erste Paket folgende zweite Pakete zu erzeugen, wobei eine Nutzlast des ersten Pakets die Zusatzinformationen und das XML-Dokument enthält und eine Nutzlast jedes zweiten Pakets ein jeweiliges der Bilddatenelemente enthält, die in dem XML-Dokument referenziert werden.

2. Informationsverarbeitungsvorrichtung gemäß Anspruch 1,
wobei die Erzeugungseinheit (32) die Zusatzinformationen erzeugt, die mindestens eine der folgenden Informationen enthalten: Informationen bezüglich eines Zeitausdruckformats in dem XML-Dokument, Informationen bezüglich einer durch das XML-Dokument angenommenen Framerate, Informationen bezüglich der Startzeit und der Endzeit der Untertitel unter Verwendung des XML-Dokuments, Informationen bezüglich eines durch das XML-Dokument angenommenen Frames, Informationen, die angeben, ob die in dem XML-Dokument beschriebene Zeit beim Wiedergeben der Untertiteldaten ignoriert werden soll oder nicht, und Informationen, die die Art der Kompression des XML-Dokuments angeben.

3. Informationsverarbeitungsverfahren, umfassend die Schritte:
Erfassen von Inhalten in einem ersten Format, das mindestens Videodaten, in XML beschriebene Untertiteldaten und Informationen zum Wiedergeben der Untertiteldaten in Synchronisation mit den Videodaten enthält, wobei das erste Format das MPEG Media Transport-, MMT-, Format oder das MP4-Format ist, die Untertiteldaten ein XML-Dokument zum Anzeigen von Untertiteln unter Verwendung von Bilddaten enthalten und die Bilddaten in dem XML-Dokument referenziert werden;
Erzeugen von Zusatzinformationen zum Wiedergeben der Untertiteldaten in Synchronisation mit den Videodaten, wenn die Inhalte in einem zweiten Format wiedergegeben werden, wobei das zweite Format das MPEG-2 TS-Format ist, wobei die Zusatzinformationen Trenninformationen enthalten, die dazu verwendet werden, die Zusatzinformationen, das XML-Dokument und die jeweiligen Elemente der Bilddaten zu trennen, wobei die Trenninformationen Informationen, die die Länge der Zusatzinformationen angeben, und Informationen enthalten, die die Anzahl der Elemente der Bilddaten angeben, die in dem XML-Dokument referenziert werden;
Hinzufügen der Zusatzdaten zu den Untertiteldaten, um Untertiteldaten zu erzeugen, die die Zusatzinformationen enthalten; und
Paketieren und Multiplexen der Videodaten und der Untertiteldaten einschließlich der Zusatzinformationen, um Inhalte im zweiten Format zu erzeugen,
wobei als Pakete der Untertiteldaten ein erstes Paket und auf das erste Paket folgende zweite Pakete erzeugt werden, wobei eine Nutzlast des ersten Pakets die Zusatzinformationen und das XML-Dokument enthält und eine Nutzlast jedes zweiten Pakets ein jeweiliges der Bilddatenelemente enthält, die in dem XML-Dokument referenziert werden.

4. Programm zum Veranlassen eines Computers, Verarbeitungen durchzuführen, die die folgenden Schritte umfassen:
Erfassen von Inhalten in einem ersten Format, das mindestens Videodaten, in XML beschriebene Untertiteldaten und Informationen zum Wiedergeben der Untertiteldaten in Synchronisation mit den Videodaten enthält, wobei das erste Format das MPEG Media Transport-, MMT-, Format oder das MP4-Format ist, die Untertiteldaten ein XML-Dokument zum Anzeigen von Untertiteln unter Verwendung von Bilddaten enthalten und die Bilddaten in dem XML-Dokument referenziert werden;
Erzeugen von Zusatzinformationen zum Wiedergeben der Untertiteldaten in Synchronisation mit den Videodaten, wenn die Inhalte in einem zweiten Format wiedergegeben werden, wobei das zweite Format das MPEG-2 TS-Format ist, wobei die Zusatzinformationen Trenninformationen enthalten, die dazu verwendet werden, die Zusatzinformationen, das XML-Dokument und die jeweiligen Elemente der Bilddaten zu trennen, wobei die Trenninformationen Informationen, die die Länge der Zusatzinformationen angeben, und Informationen enthalten, die die Anzahl der Elemente der Bilddaten angeben, die in dem XML-Dokument referenziert werden;
Hinzufügen der Zusatzdaten zu den Untertiteldaten, um Untertiteldaten zu erzeugen, die die Zusatzinformationen enthalten; und
Paketieren und Multiplexen der Videodaten und der Untertiteldaten einschließlich der Zusatzinformationen, um Inhalte im zweiten Format zu erzeugen,
wobei als Pakete der Untertiteldaten ein erstes Paket und auf das erste Paket folgende zweite Pakete erzeugt werden, wobei eine Nutzlast des ersten Pakets die Zusatzinformationen und das XML-Dokument enthält und eine Nutzlast jedes zweiten Pakets ein jeweiliges der Bilddatenelemente enthält, die in dem XML-Dokument referenziert werden.

5. Informationsverarbeitungsvorrichtung, umfassend:
eine Erfassungseinheit, die dazu eingerichtet ist, Inhalte in einem zweiten Format zu erfassen, wobei die Inhalte mindestens Videodaten und in XML beschriebene Untertiteldaten enthalten, wobei das zweite Format das MPEG-2 TS-Format ist, wobei die Untertiteldaten ein XML-Dokument zum Anzeigen von Untertiteln unter Verwendung von Bilddaten enthalten, wobei die Bilddaten in dem XML-Dokument referenziert werden, und Zusatzinformationen zum Wiedergeben der Untertiteldaten in Synchronisation mit den Videodaten enthalten, wenn die Inhalte in einem zweiten Format wiedergegeben werden, wobei die Zusatzinformationen Trenninformationen enthalten, die dazu verwendet werden, die Zusatzinformationen, das XML-Dokument und die jeweiligen Elemente der Bilddaten zu trennen, wobei die Trenninformationen Informationen enthalten, die die Länge der Zusatzinformationen angeben, und Informationen, die die Anzahl der Elemente der Bilddaten angeben, die in dem XML-Dokument referenziert werden;
eine Trenneinheit, die dazu eingerichtet ist, die Videodaten und die Untertiteldaten zu trennen;
eine Videowiedergabeeinheit, die zum Wiedergeben der Videodaten eingerichtet ist;
eine Untertitelwiedergabeeinheit, die dazu eingerichtet ist, beim Wiedergeben der Inhalte im zweiten Format die Zusatzinformationen zum Wiedergeben der Untertiteldaten von den Untertiteldaten in Synchronisation mit den Videodaten zu trennen und die Untertiteldaten mit Bezug auf die Zusatzinformationen wiederzugeben; und
eine Anzeigesteuereinheit, die dazu eingerichtet ist, Video und Untertitel der Inhalte im zweiten Format anzuzeigen,
wobei die Untertitelwiedergabeeinheit dazu eingerichtet ist, basierend auf den Trenninformationen die Zusatzinformationen und das XML-Dokument aus einem ersten Paket zu trennen, das die Zusatzinformationen und das XML-Dokument in seiner Nutzlast enthält, und die Bilddaten von zweiten, auf das erste Paket folgenden Paketen zu trennen, wobei jedes zweite Paket in seiner Nutzlast ein jeweiliges der Elemente der in dem XML-Dokument referenzierten Bilddaten enthält.

6. Informationsverarbeitungsverfahren, umfassend die Schritte:
Erfassen von Inhalten in einem zweiten Format, wobei die Inhalte mindestens Videodaten und in XML beschriebene Untertiteldaten enthalten, wobei das zweite Format das MPEG-2 TS-Format ist, wobei die Untertiteldaten ein XML-Dokument zum Anzeigen von Untertiteln unter Verwendung von Bilddaten enthalten, wobei die Bilddaten in dem XML-Dokument referenziert werden, und Zusatzinformationen zum Wiedergeben der Untertiteldaten in Synchronisation mit den Videodaten enthalten, wenn die Inhalte in einem zweiten Format wiedergegeben werden, wobei die Zusatzinformationen Trenninformationen enthalten, die verwendet werden, um die Zusatzinformationen, das XML-Dokument und die jeweiligen Elemente der Bilddaten zu trennen, wobei die Trenninformationen Informationen enthalten, die die Länge der Zusatzinformationen angeben, und Informationen, die die Anzahl der Elemente der Bilddaten angeben, die in dem XML-Dokument referenziert werden;
Trennen der Videodaten und der Untertiteldaten;
Wiedergeben der Videodaten;
Trennen der Zusatzinformationen von den Untertiteldaten zum Wiedergeben der Untertiteldaten in Synchronisation mit den Videodaten beim Wiedergeben der Inhalte im zweiten Format;
Wiedergeben der Untertiteldaten unter Bezugnahme auf die Zusatzinformationen; und
Anzeigen von Video und Untertiteln der Inhalte im zweiten Format,
wobei basierend auf den Trenninformationen die Zusatzinformationen und das XML-Dokument aus einem ersten Paket getrennt werden, das die Zusatzinformationen und das XML-Dokument in seiner Nutzlast enthält, und die Bilddaten aus zweiten, auf das erste Paket folgenden Paketen getrennt werden, wobei jedes zweite Paket in seiner Nutzlast ein jeweiliges der Elemente der in dem XML-Dokument referenzierten Bilddaten enthält.

7. Programm zum Veranlassen eines Computers, Verarbeitungen durchzuführen, die die folgenden Schritte umfassen:
Erfassen von Inhalten in einem zweiten Format, wobei die Inhalte mindestens Videodaten und in XML beschriebene Untertiteldaten enthalten, wobei das zweite Format das MPEG-2 TS-Format ist, wobei die Untertiteldaten ein XML-Dokument zum Anzeigen von Untertiteln unter Verwendung von Bilddaten enthalten, wobei die Bilddaten in dem XML-Dokument referenziert werden, und Zusatzinformationen zum Wiedergeben der Untertiteldaten in Synchronisation mit den Videodaten enthalten, wenn die Inhalte in einem zweiten Format wiedergegeben werden, wobei die Zusatzinformationen Trenninformationen enthalten, die verwendet werden, um die Zusatzinformationen, das XML-Dokument und die jeweiligen Elemente der Bilddaten zu trennen, wobei die Trenninformationen Informationen enthalten, die die Länge der Zusatzinformationen angeben, und Informationen, die die Anzahl der Elemente der Bilddaten angeben, die in dem XML-Dokument referenziert werden;
Trennen der Videodaten und der Untertiteldaten;
Wiedergeben der Videodaten;
Trennen der Zusatzinformationen von den Untertiteldaten zum Wiedergeben der Untertiteldaten in Synchronisation mit den Videodaten beim Wiedergeben der Inhalte im zweiten Format;
Wiedergeben der Untertiteldaten unter Bezugnahme auf die Zusatzinformationen; und
Anzeigen von Video und Untertiteln der Inhalte im zweiten Format,
wobei basierend auf den Trenninformationen die Zusatzinformationen und das XML-Dokument aus einem ersten Paket getrennt werden, das die Zusatzinformationen und das XML-Dokument in seiner Nutzlast enthält, und die Bilddaten aus zweiten, auf das erste Paket folgenden Paketen getrennt werden, wobei jedes zweite Paket in seiner Nutzlast ein jeweiliges der Elemente der in dem XML-Dokument referenzierten Bilddaten enthält.

## Revendications

1. Appareil de traitement d'informations comprenant :
une unité d'acquisition (31) configurée pour acquérir des contenus dans un premier format comportant au moins des données vidéo, des données de sous-titres décrites en XML, et des informations pour reproduire les données de sous-titres en synchronisme avec les données vidéo, le premier format étant le format MPEG Media Transport, MMT, ou le format MP4, les données de sous-titres comportant un document XML pour afficher des sous-titres en utilisant des données d'image, et les données d'image auxquelles il est fait référence dans le document XML ;
une unité de génération (32) configurée pour générer des informations auxiliaires pour reproduire les données de sous-titres en synchronisme avec les données vidéo lors de la reproduction des contenus dans un second format, le second format étant le format MPEG-2 TS, les informations auxiliaires comportant des informations de séparation utilisées pour séparer les informations auxiliaires, le document XML, et les éléments respectifs de données d'image, les informations de séparation comportant des informations indiquant la longueur des informations auxiliaires, et des informations indiquant le nombre d'éléments de données d'image auxquels il est fait référence dans le document XML ; et
une unité de multiplexage (24) configurée pour ajouter les données auxiliaires aux données de sous-titres pour générer des données de sous-titres comportant les informations auxiliaires, et pour mettre en paquets et multiplexer les données vidéo, et les données de sous-titres comportant les informations auxiliaires pour générer des contenus dans le second format, dans lequel l'unité de multiplexage (24) est configurée pour générer, en tant que paquets des données de sous-titres, un premier paquet et des seconds paquets consécutifs au premier paquet, une charge utile du premier paquet comportant les informations auxiliaires et le document XML, et une charge utile de chaque second paquet comportant l'un respectif des éléments de données d'image auxquels il est fait référence dans le document XML.

2. Appareil de traitement d'informations selon la revendication 1,
dans lequel l'unité de génération (32) génère les informations auxiliaires comportant au moins l'une quelconque d'informations relatives à un format d'expression temporelle dans le document XML, d'informations relatives à une fréquence de trames supposée par le document XML, d'informations relatives au temps de début et au temps de fin des sous-titres utilisant le document XML, d'informations relatives à un cadre supposé par le document XML, d'informations indiquant s'il faut ou non ignorer le temps décrit dans le document XML lors de la reproduction des données de sous-titres, et d'informations indiquant le type de compression auquel est soumis le document XML.

3. Procédé de traitement d'informations comprenant les étapes suivantes :
l'acquisition de contenus dans un premier format comportant au moins des données vidéo, des données de sous-titres décrites en XML, et des informations pour reproduire les données de sous-titres en synchronisme avec les données vidéo, le premier format étant le format MPEG Media Transport, MMT, ou le format MP4, les données de sous-titres comportant un document XML pour afficher des sous-titres en utilisant des données d'image, et les données d'image auxquelles il est fait référence dans le document XML ;
la génération d'informations auxiliaires pour reproduire les données de sous-titres en synchronisme avec les données vidéo lors de la reproduction des contenus dans un second format, le second format étant le format MPEG-2 TS, les informations auxiliaires comportant des informations de séparation utilisées pour séparer les informations auxiliaires, le document XML, et les éléments respectifs de données d'image, les informations de séparation comportant des informations indiquant la longueur des informations auxiliaires, et des informations indiquant le nombre d'éléments de données d'image auxquels il est fait référence dans le document XML ;
l'ajout des données auxiliaires aux données de sous-titres pour générer des données de sous-titres comportant les informations auxiliaires ; et
la mise en paquets et le multiplexage des données vidéo, et les données de sous-titres comportant les informations auxiliaires pour générer des contenus dans le second format,
dans lequel, en tant que paquets de données de sous-titres, un premier paquet et des seconds paquets consécutifs au premier paquet sont générés, une charge utile du premier paquet comportant les informations auxiliaires et le document XML, et une charge utile de chaque second paquet comportant l'un respectif des éléments de données d'image auxquels il est fait référence dans le document XML.

4. Programme destiné à amener un ordinateur à exécuter des traitements comprenant les étapes suivantes :
l'acquisition de contenus dans un premier format comportant au moins des données vidéo, des données de sous-titres décrites en XML, et des informations pour reproduire les données de sous-titres en synchronisme avec les données vidéo, le premier format étant le format MPEG Media Transport, MMT, ou le format MP4, les données de sous-titres comportant un document XML pour afficher des sous-titres en utilisant des données d'image, et les données d'image auxquelles il est fait référence dans le document XML ;
la génération d'informations auxiliaires pour reproduire les données de sous-titres en synchronisme avec les données vidéo lors de la reproduction des contenus dans un second format, le second format étant le format MPEG-2 TS, les informations auxiliaires comportant des informations de séparation utilisées pour séparer les informations auxiliaires, le document XML, et les éléments respectifs de données d'image, les informations de séparation comportant des informations indiquant la longueur des informations auxiliaires, et des informations indiquant le nombre d'éléments de données d'image auxquels il est fait référence dans le document XML ;
l'ajout des données auxiliaires aux données de sous-titres pour générer des données de sous-titres comportant les informations auxiliaires ; et
la mise en paquets et le multiplexage des données vidéo, et les données de sous-titres comportant les informations auxiliaires pour générer des contenus dans le second format,
dans lequel, en tant que paquets de données de sous-titres, un premier paquet et des seconds paquets consécutifs au premier paquet sont générés, une charge utile du premier paquet comportant les informations auxiliaires et le document XML, et une charge utile de chaque second paquet comportant l'un respectif des éléments de données d'image auxquels il est fait référence dans le document XML.

5. Appareil de traitement d'informations comprenant :
une unité d'acquisition configurée pour acquérir des contenus dans un second format, les contenus comprenant au moins des données vidéo et des données de sous-titres décrites en XML, le second format étant le format MPEG-2 TS, les données de sous-titres comportant un document XML pour afficher des sous-titres en utilisant des données d'image, les données d'image auxquelles il est fait référence dans le document XML, et des informations auxiliaires pour reproduire les données de sous-titres en synchronisme avec les données vidéo lors de la reproduction des contenus dans un second format, les informations auxiliaires comportant des informations de séparation utilisées pour séparer les informations auxiliaires, le document XML, et les éléments respectifs de données d'image, les informations de séparation comportant des informations indiquant la longueur des informations auxiliaires, et des informations indiquant le nombre d'éléments de données d'image auxquels il est fait référence dans le document XML ;
une unité de séparation configurée pour séparer les données vidéo et les données de sous-titres ;
une unité de reproduction vidéo configurée pour reproduire les données vidéo ;
une unité de reproduction de sous-titres configurée pour séparer des données de sous-titres les informations auxiliaires pour reproduire les données de sous-titres en synchronisme avec les données vidéo lors de la reproduction des contenus dans le second format, et pour reproduire les données de sous-titres en référence aux informations auxiliaires ; et
une unité de commande d'affichage configurée pour afficher la vidéo et les sous-titres des contenus dans le second format,
dans lequel l'unité de reproduction de sous-titres est configurée, sur la base des informations de séparation, pour séparer les informations auxiliaires et le document XML d'un premier paquet comportant dans sa charge utile les informations auxiliaires et le document XML, et pour séparer les données d'image de seconds paquets consécutifs au premier paquet, chaque second paquet comportant dans sa charge utile l'un respectif des éléments de données d'image auxquels il est fait référence dans le document XML.

6. Procédé de traitement d'informations comprenant les étapes suivantes :
l'acquisition de contenus dans un second format, les contenus comportant au moins des données vidéo et des données de sous-titres décrites en XML, le second format étant le format MPEG-2 TS, les données de sous-titres comportant un document XML pour afficher des sous-titres en utilisant des données d'image, les données d'image auxquelles il est fait référence dans le document XML, et des informations auxiliaires pour reproduire les données de sous-titres en synchronisme avec les données vidéo lors de la reproduction des contenus dans un second format, les informations auxiliaires comportant des informations de séparation utilisées pour séparer les informations auxiliaires, le document XML, et les éléments respectifs de données d'image, les informations de séparation comportant des informations indiquant la longueur des informations auxiliaires, et des informations indiquant le nombre des éléments de données d'image auxquels il est fait référence dans le document XML ;
la séparation des données vidéo et des données de sous-titres ;
la reproduction des données vidéo ;
la séparation, à partir des données de sous-titres, des informations auxiliaires pour reproduire les données de sous-titres en synchronisme avec les données vidéo lors de la reproduction des contenus dans le second format ;
la reproduction des données de sous-titres en référence aux informations auxiliaires ; et
l'affichage de la vidéo et des sous-titres des contenus dans le second format,
dans lequel, sur la base des informations de séparation, les informations auxiliaires et le document XML sont séparés d'un premier paquet comportant dans sa charge utile les informations auxiliaires et le document XML, et les données d'image sont séparées de seconds paquets consécutifs au premier paquet, chaque second paquet comportant dans sa charge utile l'un respectif des éléments de données d'image auxquels il est fait référence dans le document XML.

7. Programme destiné à amener un ordinateur à exécuter des traitements comprenant les étapes suivantes :
l'acquisition de contenus dans un second format, les contenus comportant au moins des données vidéo et des données de sous-titres décrites en XML, le second format étant le format MPEG-2 TS, les données de sous-titres comportant un document XML pour afficher des sous-titres en utilisant des données d'image, les données d'image auxquelles il est fait référence dans le document XML, et des informations auxiliaires pour reproduire les données de sous-titres en synchronisme avec les données vidéo lors de la reproduction des contenus dans un second format, les informations auxiliaires comportant des informations de séparation utilisées pour séparer les informations auxiliaires, le document XML et les éléments respectifs de données d'image, les informations de séparation comportant des informations indiquant la longueur des informations auxiliaires, et des informations indiquant le nombre des éléments de données d'image auxquels il est fait référence dans le document XML ;
la séparation des données vidéo et des données de sous-titres ;
la reproduction des données vidéo ;
la séparation, à partir des données de sous-titres, des informations auxiliaires pour reproduire les données de sous-titres en synchronisme avec les données vidéo lors de la reproduction des contenus dans le second format ;
la reproduction des données de sous-titres en référence aux informations auxiliaires ; et
l'affichage de la vidéo et de sous-titres des contenus dans le second format,
dans lequel, sur la base des informations de séparation, les informations auxiliaires et le document XML sont séparés d'un premier paquet comportant dans sa charge utile les informations auxiliaires et le document XML, et les données d'image sont séparées de seconds paquets consécutifs au premier paquet, chaque second paquet comportant dans sa charge utile l'un respectif des éléments de données d'image auxquels il est fait référence dans le document XML.
